# EUROPEAN PATENT APPLICATION

(11) **EP 4 571 627 A1**
(43) Date of publication of application: **18.06.2025**
(21) Application number: 24219243.3
(22) Date of filing: 11.12.2024
(51) Int. Cl.: G06Q 40/08, G06Q 10/10

(54) **SYSTEM AND METHOD FOR PROCESSING CLAIMS FOR USERS OF A CLAIM READINESS WORKFLOW ECOSYSTEM**

(30) Priority: 12.12.2023 US 202363608939 P
(71) Applicant: Kamine Technology Group, LLC, Bedminster, NJ 7921 (US)
(72) Inventor: Capato, Thomas, Collingswood, NJ 8108 (US)
(74) Representative: Caldon, Giuliano

(57) **Abstract**

A computer-implemented method and system for processing claims in a claim decision readiness ecosystem for first users is disclosed. The computer-implemented method comprises obtaining data in view of first forms associated with the claims from communication devices associated with first users; validating the first forms to determine accuracy and completeness of the first forms associated with the claims, by identifying the first forms being matched with first users using intelligent barcoding and scanning system; generating second forms with fields indicating missing information upon identifying fields comprising information being missed in first forms, using a ML model; determining whether the first users are capable of performing tasks in occupation based on training, work experience, educational background, functional abilities, and limitation information by analyzing data within policy definitions and criteria; matching the functional abilities and limitation information, with occupations selected from databases, based on UOL and advanced occupational selection technique.

## Description

### CROSS REFERENCE TO RELATED APPLICATION(S)

This application claims the priority to incorporates by reference the entire disclosure of U.S. provisional patent application No. 63/608,939, filed on December 12, 2023, titled "AUTOMATED INSURANCE CLAIM READINESS WORKFLOW ECOSYSTEM"

### TECHNICAL FIELD

Embodiments of the present disclosure relate to data collection and administrative handling, and more particularly relate to a computer-implemented system and method for processing insurance claims to efficiently collect, organize, and evaluate requisite information related to the claims to assess benefits eligibility.

### BACKGROUND

Insurance claim processing is a critical aspect of an insurance industry, ensuring that individuals who are eligible for benefits receive an insurance claim payment in a timely and accurate manner. Claims adjudication involves complex assessments of a myriad of requisite contractual information to validate eligibility for benefits. The timely collection of this requisite information along with the necessary and important process of ensuring the completeness of all information submitted and/or obtained during the claim evaluation process is critical to both the timeliness and accuracy of the benefit determination.

Traditional insurance claim processing systems and methods are manual, time-consuming, and prone to errors. The evaluation of claimants' eligibility criteria is challenging, leading to delays and potential inaccuracies in benefit determinations. Moreover, ensuring that the eligibility assessment aligns with policy definitions adds complexity to a claim processing workflow.

Furthermore, existing solutions of a claim adjudication process traditionally operated as separate and isolated entities, offering limited integration and automation throughout the claim adjudication process. Thus, a claim adjudication platform fails to provide a comprehensive and streamlined workflow that encompasses all essential functionalities, thereby hindering the efficiency and effectiveness of the entire claim adjudication process.

There are various technical problems with the insurance claim processing in the current, traditional state. Conventional insurance claim processing often relies on manual data entry, document handling, and evaluation procedures. These labor-intensive tasks lead to delays and errors in the claims adjudication process. Information collected from multiple sources has discrepancies or inconsistencies. Manually reconciling the discrepancies or inconsistencies is a complex and error-prone task, impacting the accuracy of claims assessments. Insurance policies include complex definitions and criteria for determining benefits eligibility. Interpreting and applying the definitions and criteria accurately pose challenges.

Effective communication between one or more stakeholders, including the claimants, agents, employers, and insurers, is crucial for timely claims processing. Inefficient communication channels lead to delays and misunderstandings. Managing sensitive claimant information requires robust data privacy and security measures. Failure to protect this data results in legal and ethical issues. Properly allocating resources for claim assessment and management is essential.

Specific to disability claims adjudication, many existing systems do not fully leverage available data sources, such as the Department of Labor's Occupational Libraries or location-based information, to optimize claims processing. Scalability is an issue, especially in situations where the volume of claims fluctuates. Existing systems struggle to handle sudden increases in claim submissions.

In recent years, there is a growing need for innovative solutions that streamline and enhance the accuracy of insurance claims assessment processes. Advances in technology, data analytics, and data integration paved the way for more efficient and precise insurance claims processing systems and methods.

Therefore, there is a need for a computer-implemented system and method to address the aforementioned issues by providing a solution to process claims by efficiently collecting, organizing, and evaluating requisite information related to the claims to assess benefits eligibility.

### SUMMARY

This summary is provided to introduce a selection of concepts, in a simple manner, which is further described in the detailed description of the disclosure. This summary is neither intended to identify key or essential inventive concepts of the subject matter nor to determine the scope of the disclosure.

In accordance with an embodiment of the present disclosure, a computer-implemented method for automated claim decision readiness for one or more claims for one or more first users is disclosed. The computer-implemented method comprises obtaining, by one or more hardware processors, one or more data in view of one or more first forms associated with the one or more claims from one or more communication devices associated with one or more first users. The one or more data associated with the one or more claims comprise at least one of: one or more personal information, one or more medical records, educational background, work experience, functional capabilities, physical capabilities form (PCF), training, wage data, last working day, tax records, Social Security Administration (SSA) award, benefit designation forms, and medical authorizations, of the one or more first users.

The computer-implemented method further comprises performing, by the one or more hardware processors, one or more operations comprising at least one of: standardizing the one or more data, resolving inconsistencies on the one or more data, and organizing the one or more data for analyzing the one or more data in one or more structured and consistent formats.

**The** computer-implemented method further comprises validating, by the one or more hardware processors, the one or more data in view of the one or more first forms to determine accuracy and completeness of the one or more first forms associated with the one or more claims, by identifying the one or more first forms being matched with the one or more first users using an intelligent barcoding and scanning system. The computer-implemented method further comprises generating, by the one or more hardware processors, one or more second forms with one or more fields indicating one or more missing information upon identifying the one or more fields comprising the one or more information being missed in the one or more first forms received from the one or more communication devices of the one or more first users, using a machine learning model. The computer-implemented method further comprises providing, by the one or more hardware processors, one or more interpretations for the identified one or more fields comprising the one or more missing information, to the one or more communication devices associated with the one or more users.

**The** computer-implemented method further comprises generating, by the one or more hardware processors, one or more user profiles by obtaining one or more information associated with at least one of: functional abilities and limitation information, of the one or more first users through the one or more first forms from attending physician statement (APS) and the one or more medical records of the one or more first users, for identifying at least one of: the functional abilities and the limitation information, of the one or more first users. The computer-implemented method further comprises determining, by the one or more hardware processors, whether the one or more first users are capable of performing one or more tasks in one or more occupation based on at least one of: the training, the work experience, the educational background, the functional abilities, and the limitation information, of the one or more first users by analyzing the one or more data within policy definitions and criteria using an analytics engine.

The computer-implemented method further comprises matching, by the one or more hardware processors, at least one of: the functional abilities and the limitation information, of the one or more first users, with one or more occupations selected from one or more databases, based on at least one of: unified occupational library (UOL) and an advanced occupational selection technique, to provide one or more insights into at least one of: requirements, responsibilities, and demands associated with the one or more occupations within one or more labor markets, for the one or more first users. The computer-implemented method further comprises generating, by the one or more hardware processors, one or more recommended actions comprising at least one of: return-to-work plans, vocational training recommendations, and preparation for Social Security Disability Insurance (SSDI) claims, upon matching of at least one of: the functional abilities and the limitation information, of the one or more first users, with the one or more occupations. The computer-implemented method further comprises providing, by the one or more hardware processors, one or more real-time alerts and notifications associated with progresses of the one or more claims, to the one or more users through the one or more communication devices.

In an embodiment, the computer-implemented method further comprises (a) executing, by the one or more hardware processors, one or more data retention policies indicating lifespan of types of the one or more data, wherein the one or more data retention policies are configured to be compliance with one or more legal and regulatory requirements for retaining the one or more data for required time duration and for deleting when the one or more data are no longer required; and (b) categorizing and archiving, by the one or more hardware processors, one or more documents associated with the one or more claims, for at least one of: auditing, compliance reporting, and reference processes.

In another embodiment, the computer-implemented method further comprises (a) automatically tracking, by the one or more hardware processors, the one or more first forms with the one or more missing information, until one or more responses received from the one or more first users; (b) generating, by the one or more hardware processors, one or more inventories upon reviewing the one or more first forms and documents received form the one or more first users; and (c) comparing, by the one or more hardware processors, the one or more inventories with the one or more user profiles as defined in automated business rules (ABR) tool.

In yet another embodiment, tracking the one or more first forms with the one or more missing information, comprises: (a) determining, by the one or more hardware processors, whether the one or more missing information is previously requested when the one or more information is missed from the one or more user profiles; and (b) determining, by the one or more hardware processors, whether a tracking request is due for the one or more missing information to initiate the tracking request when the one or more missing information is previously requested.

In yet another embodiment, matching of at least one of: the functional abilities and the limitation information, of the one or more first users, with the one or more occupations to provide the one or more insights associated with the one or more occupations for the one or more first users, is based on one or more factors comprising at least one of: physical abilities, cognitive skills, vocational interests, and nature of the disability, of the one or more first users.

In yet another embodiment, the computer-implemented method further comprises selecting, by the one or more hardware processors, the one or more occupations based on one or more locations of the one or more first users. In an embodiment, selecting the one or more occupations based on one or more locations of the one or more first users comprises: (a) determining, by the one or more hardware processors, one or more geographic vicinities of the one or more first users; (b) selecting, by the or more hardware processors, the one or more occupations based on the determined one or more geographic vicinities of the one or more first users, with information associated with one or more local labor markets; and (c) determining, by the one or more hardware processors, whether the selected one or more occupations are optimized for the one or more locations of the one or more first users.

In yet another embodiment, validating the one or more first forms to determine the accuracy and completeness of the one or more first forms associated with the one or more claims, comprises: (a) identifying, by the one or more hardware processors, the one or more first forms based on one or more information in the intelligent barcoding and scanning system; (b) upon identifying the one or more first forms, determining, by the one or more hardware processors, one or more placements of the one or more fields on the one or more first forms for matching the one or more first forms to the one or more first users; and (c) identifying, by the one or more hardware processors, the one or more fields on the one or more first forms being marked as important by one or more second users, for determining whether the one or more data are legible and comprising one or more values in each field, to adjudicate the one or more claims.

In an aspect, a computer-implemented system for automated claim decision readiness for one or more claims for one or more first users is disclosed. The computer-implemented system comprises one or more hardware processors and a memory unit. The memory unit is coupled to the one or more hardware processors. The memory unit comprises a plurality of subsystems in form of programmable instructions executable by the one or more hardware processors. The plurality of subsystems comprises a data obtaining subsystem configured to obtain one or more data in view of one or more first forms associated with the one or more claims from one or more communication devices associated with one or more first users. The one or more data associated with the one or more claims comprise at least one of: one or more personal information, one or more medical records, educational background, work experience, functional capabilities, physical capabilities form (PCF), training, wage data, last working day, tax records, Social Security Administration (SSA) award, benefit designation forms, and medical authorizations, of the one or more first users.

The plurality of subsystems further comprises a data integration subsystem configured to: (a) validate the one or more first forms to determine accuracy and completeness of the one or more first forms associated with the one or more claims, by identifying the one or more first forms being matched with the one or more first users using an intelligent barcoding and scanning system; (b) generate one or more second forms with one or more fields indicating one or more missing information upon identifying the one or more fields comprising the one or more information being missed in the one or more first forms received from the one or more communication devices of the one or more first users, using a machine learning model; and (c) provide one or more interpretations for the identified one or more fields comprising the one or more missing information, to the one or more communication devices associated with the one or more users.

The plurality of subsystems further comprises a user profile generation subsystem configured to generate one or more user profiles by obtaining one or more information associated with at least one of: functional abilities and limitation information, of the one or more first users through the one or more first forms from attending physician statement (APS) and the one or more medical records of the one or more first users, for identifying at least one of: the functional abilities and the limitation information, of the one or more first users.

The plurality of subsystems further comprises a claim assessment subsystem configured to determine whether the one or more first users are capable of performing one or more tasks in one or more occupation based on at least one of: the training, the work experience, the educational background, the functional abilities, and the limitation information, of the one or more first users by analyzing the one or more data within policy definitions and criteria using an analytics engine.

The plurality of subsystems further comprises an occupational matching subsystem configured to match at least one of: the functional abilities and the limitation information, of the one or more first users, with one or more occupations selected from one or more databases, based on at least one of: unified occupational library (UOL) and an advanced occupational selection technique, to provide one or more insights into at least one of: requirements, responsibilities, and demands associated with the one or more occupations within one or more labor markets, for the one or more first users.

The plurality of subsystems further comprises a claim recommendation subsystem configured to generate one or more recommended actions comprising at least one of: return-to-work plans, vocational training recommendations, and preparation for Social Security Disability Insurance (SSDI) claims, upon matching of at least one of: the functional abilities and the limitation information, of the one or more first users, with the one or more occupations. The plurality of subsystems further comprises an alert providing subsystem configured to provide one or more real-time alerts and notifications associated with progresses of the one or more claims, to the one or more users through the one or more communication devices.

In another aspect, a non-transitory computer-readable storage medium having instructions stored therein that, when executed by a hardware processor, causes the processor to perform method steps as described above.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

### BRIEF DESCRIPTION OF DRAWINGS

The disclosure will be described and explained with additional specificity and detail with the accompanying figures in which:
**FIG. 1** illustrates an exemplary block diagram representation of a network architecture of a computer-implemented system for automated claim decision readiness for one or more claims for one or more first users, in accordance with an embodiment of the present disclosure;
**FIG. 2A** illustrates an exemplary block diagram representation of the computer-implemented system, such as those shown in **FIG. 1****,** capable of processing the claim assessment, in accordance with an embodiment of the present disclosure;
**FIG. 2B** illustrates an exemplary flow diagram representation of the plurality of subsystems of the computer-implemented system for processing the claim assessment, in accordance with an embodiment of the present disclosure;
**FIG. 3** illustrates an exemplary network diagram of the computer-implemented system for processing the claim assessment, in accordance with an embodiment of the present disclosure;
**FIG. 4** illustrates an exemplary claim readiness cycle of the computer-implemented system for processing the claim assessment, in accordance with an embodiment of the present disclosure;
**FIG. 5** illustrates an exemplary outbound barcode process of the computer-implemented system for processing the claim assessment, in accordance with an embodiment of the present disclosure;
**FIG. 6** illustrates an exemplary inbound barcode process of the computer-implemented system for processing the claim assessment, in accordance with an embodiment of the present disclosure;
**FIG. 7** illustrates an exemplary claim processing workflow of the computer-implemented system for processing the claim assessment, in accordance with an embodiment of the present disclosure;
**FIGs. 8A-8B** illustrate an exemplary carrier claim workflow intake of the computer-implemented system for processing the claim assessment, in accordance with an embodiment of the present disclosure;
**FIGs. 9A-9C** illustrate an exemplary carrier claim workflow claimant portal of the computer-implemented system for processing the claim assessment, in accordance with an embodiment of the present disclosure;
**FIG. 10** illustrates an exemplary carrier examiner product flowchart of the computer-implemented system for processing the claim assessment, in accordance with an embodiment of the present disclosure;
**FIGs. 11A-11C** illustrate an exemplary claim workflow of an employer portal of the computer-implemented system for processing the claim assessment, in accordance with an embodiment of the present disclosure;
**FIG. 12A-12G** illustrate an exemplary carrier claim workflow of a broker portal of the computer-implemented system for processing the claim assessment, in accordance with an embodiment of the present disclosure;
**FIG. 13A-13J** illustrate exemplary screenshots of the computer-implemented system for processing the claim assessment, in accordance with an embodiment of the present disclosure;
**FIG. 14** illustrates an exemplary paper to digital tool flowchart of the computer-implemented system for processing the claim assessment, in accordance with an embodiment of the present disclosure;
**FIG. 15** illustrates an exemplary flowchart of an automated insurance claim readiness workflow ecosystem, in accordance with an embodiment of the present disclosure;
**FIG. 16** illustrates an exemplary flowchart of the one or more claims (opt-out) processed by the computer-implemented system, in accordance with an embodiment of the present disclosure;
**FIG. 17** illustrates an exemplary flowchart of the one or more claims (opt-in) processed by the computer-implemented system, in accordance with an embodiment of the present disclosure;
**FIG. 18** illustrates an exemplary flowchart of the one or more claims (LW and LTD workflow) processed by the computer-implemented system, in accordance with an embodiment of the present disclosure;
**FIG. 19** illustrates an exemplary flowchart of the one or more claims (LTD workflow) processed by the computer-implemented system, in accordance with an embodiment of the present disclosure;
**FIG. 20** illustrates an exemplary flowchart of a PTD recertification process, in accordance with an embodiment of the present disclosure;
**FIG. 21** illustrates an exemplary flowchart of a non-PTD recertification process, in accordance with an embodiment of the present disclosure; and
**FIG. 22** is a flow chart depicting a computer-implemented method for automated claim decision readiness for the one or more claims for the one or more first users, in accordance with an embodiment of the present disclosure.

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

### DETAILED DESCRIPTION OF THE DISCLOSURE

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure. It will be understood by those skilled in the art that the foregoing general description and the following detailed description are exemplary and explanatory of the disclosure and are not intended to be restrictive thereof.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

The terms "comprise", "comprising", or any other variations thereof, are intended to cover a non-exclusive inclusion, such that one or more devices or sub-systems or elements or structures or components preceded by "comprises... a" does not, without more constraints, preclude the existence of other devices, sub-systems, additional sub-modules. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

**A** computer system (standalone, client, or server computer system) configured by an application may constitute a "module" (or "subsystem") that is configured and operated to perform certain operations. In one embodiment, the "module" or "subsystem" may be implemented mechanically or electronically, so a module include dedicated circuitry or logic that is permanently configured (within a special-purpose processor) to perform certain operations. In another embodiment, a "module" or "subsystem" may also comprise programmable logic or circuitry (as encompassed within a general-purpose processor or other programmable processor) that is temporarily configured by software to perform certain operations.

**Accordingly,** the term "module" or "subsystem" should be understood to encompass a tangible entity, be that an entity that is physically constructed permanently configured (hardwired), or temporarily configured (programmed) to operate in a certain manner and/or to perform certain operations described herein.

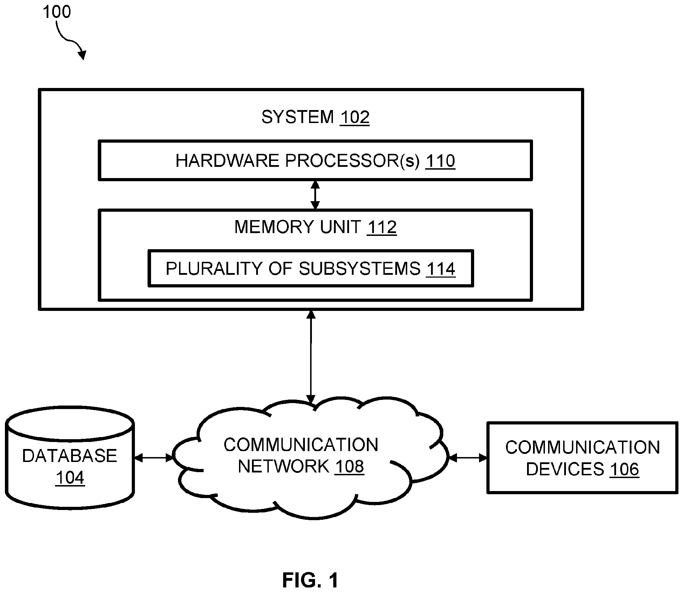

Referring now to the drawings, and more particularly to **FIG. 1** through **FIG. 22****,** where similar reference characters denote corresponding features consistently throughout the figures, there are shown preferred embodiments and these embodiments are described in the context of the following exemplary system and/or method.

In an exemplary embodiment, the term "claimant" refers to an individual who initiates a claim process, typically in the context of insurance, seeking benefits or compensation due to a covered event, such as disability or life insurance claims. The claimant is the party asserting the right to receive benefits based on the terms and conditions outlined in the insurance policy. In the case of disability claims, the claimant is often the person facing a disability, while in life insurance, the claimant may be the beneficiary who files a claim upon the insured person's demise. The use of the term "claimant" underscores the active role of the individual or entity in pursuing their entitlements under the insurance coverage.

**FIG. 1** illustrates an exemplary block diagram representation of a network architecture 100 of a computer-implemented system 102 for automated claim decision readiness for one or more claims for one or more users, in accordance with an embodiment of the present disclosure.

According to an exemplary embodiment of the present disclosure, **FIG. 1****,** the network architecture 100 may include the computer-implemented system 102, one or more databases 104, and one or more communication devices 106. The computer-implemented system 102 may be communicatively coupled to the one or more databases 104, and the one or more communication devices 106 via a communication network 108. The communication network 108 serves as the infrastructure for connecting the computer-implemented system 102, the one or more databases 104, and the one or more communication devices 106. The communication network 108 may encompass various communication technologies, including wired and wireless connections, to ensure seamless data exchange and interaction among these components.

The one or more databases 104 may include, but is not limited to, storing, and managing data related to insurance claims, claimant profiles, policy definitions, occupational data, location-based information, and communication records. The one or more databases 104 may be any kind of database such as, but not limited to, relational databases, Non-relational databases, graph databases, document databases, dedicated databases, dynamic databases, monetized databases, scalable databases, cloud databases, distributed databases, any other databases, and a combination thereof. The one or more databases 104 are configured to support the functionality of the computer-implemented system 102 and enables efficient data retrieval and storage for various aspects associated with claimants, their abilities and limitations, policy definitions, occupational libraries, and other relevant data sources. The one or more databases 104 ensures secure and efficient data retrieval and storage to support the various functions of the computer-implemented system 102.

In an exemplary embodiment, the one or more communication devices 106 serve as conduits for users and external systems to interact with the computer-implemented system 102, allowing for a wide range of access points and ensuring versatility in user engagement. The one or more communication devices 106 may be used to obtain input and/or receive output to/from the computer-implemented system 102, and/or to the one or more databases 104, respectively. The one or more communication devices 106 are configured to establish communication between one or more stakeholders (i.e., one or more first users) involved in the insurance claim process. In an embodiment, terms "the one or more stakeholders" and "the one or more first users" are interchangeably used in the description.

The one or more stakeholders may include claimants, agents, employers, insurers, other relevant parties, and the like. Effective communication is vital for obtaining necessary information, providing updates on claim status, and ensuring a smooth claims adjudication process. The one or more communication devices 106 may be at least one of, an electrical, an electronic, an electromechanical, and a computing device. The one or more communication devices 106 may include, but is not limited to, a mobile device, a smartphone, a personal digital assistant (PDA), a tablet computer, a phablet computer, a wearable computing device, a virtual reality / augmented reality (VR/AR) device, a laptop, a desktop, and the like.

Further, the computer-implemented system 102 may be implemented by way of a single device or a combination of multiple devices that may be operatively connected or networked together. The computer-implemented system 102 may be implemented in hardware or a suitable combination of hardware and software. The computer-implemented system 102 includes one or more hardware processors 110, and a memory unit 112. The memory unit 112 may include a plurality of subsystems 114. The computer-implemented system 102 may be a hardware device including the one or more hardware processors 110 executing machine-readable program instructions for dynamically recommending a course of action sequences to recommend a sequence of actions for various tasks or processes related to insurance claim assessments and processing. The machine-readable program instructions are designed to enhance the efficiency and accuracy of disability claim evaluations, optimize resource allocation, and improve the overall claims adjudication process. Execution of the machine-readable program instructions by the one or more hardware processors 110 may enable the computer-implemented system 102 to dynamically recommend a course of action sequences to recommend a sequence of actions. The "hardware" may comprise a combination of discrete components, an integrated circuit, an application-specific integrated circuit, a field-programmable gate array, a digital signal processor, or other suitable hardware. The "software" may comprise one or more objects, agents, threads, lines of code, subroutines, separate software applications, two or more lines of code, or other suitable software structures operating in one or more software applications or on one or more processors.

The one or more hardware processors 110 may include, for example, microprocessors, microcomputers, microcontrollers, digital signal processors, central processing units, state machines, logic circuits, and/or any devices that manipulate data or signals based on operational instructions. Among other capabilities, the one or more hardware processors 110 may fetch and execute computer-readable instructions in the memory unit 112 operationally coupled with the computer-implemented system 102 for performing tasks such as data processing, input/output processing, and/or any other functions. Any reference to a task in the present disclosure may refer to an operation being or that may be performed on data.

Though few components and subsystems are disclosed in **FIG. 1****,** there may be additional components and subsystems which is not shown, such as, but not limited to, ports, routers, repeaters, firewall devices, network devices, databases, network attached storage devices, servers, assets, machinery, instruments, facility equipment, emergency management devices, image capturing devices, any other devices, and combination thereof. The person skilled in the art should not be limiting the components/subsystems shown in **FIG. 1****.** Although **FIG. 1** illustrates the computer-implemented system 102, and the one or more communication devices 106 connected to the one or more databases 104, one skilled in the art can envision that the computer-implemented system 102, and the one or more communication devices 106 may be connected to several user devices located at various locations and the several databases 104 via the communication network 108.

Those of ordinary skilled in the art will appreciate that the hardware depicted in **FIG. 1** may vary for particular implementations. For example, other peripheral devices such as an optical disk drive and the like, local area network (LAN), wide area network (WAN), wireless (e.g., wireless-fidelity (Wi-Fi)) adapter, graphics adapter, disk controller, input/output (I/O) adapter also may be used in addition or place of the hardware depicted. The depicted example is provided for explanation only and is not meant to imply architectural limitations concerning the present disclosure.

Those skilled in the art will recognize that, for simplicity and clarity, the full structure and operation of all data processing systems suitable for use with the present disclosure are not being depicted or described herein. Instead, only so much of the computer-implemented system 102 as is unique to the present disclosure or necessary for an understanding of the present disclosure is depicted and described. The remainder of the construction and operation of the computer-implemented system 102 may conform to any of the various current implementations and practices that were known in the art.

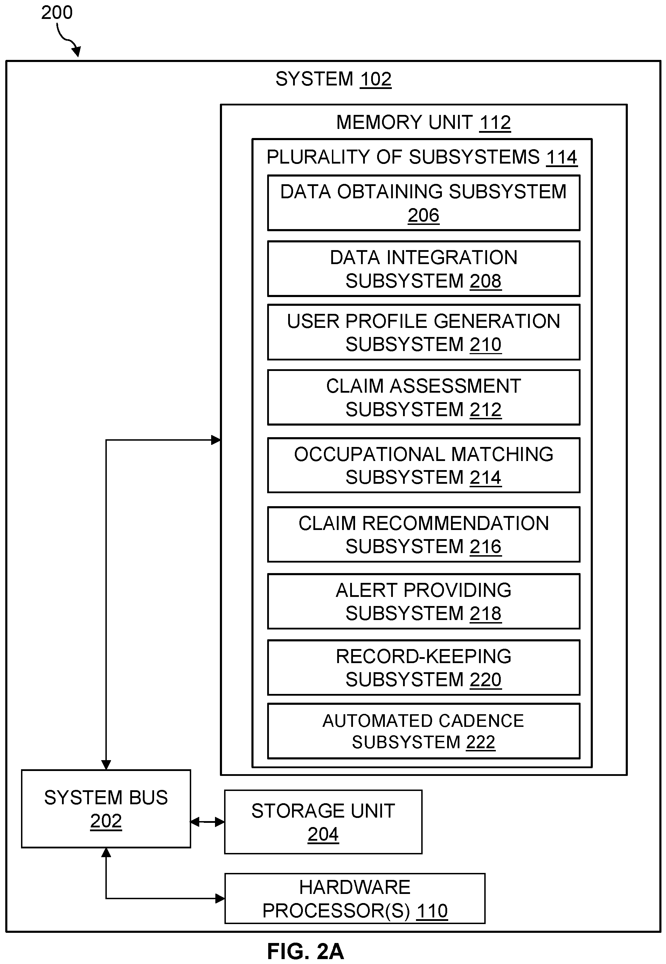

**FIG. 2A** illustrates an exemplary block diagram 200 representation of the computer-implemented system 102, such as those shown in **FIG. 1****,** capable of processing the claim assessment, in accordance with an embodiment of the present disclosure.

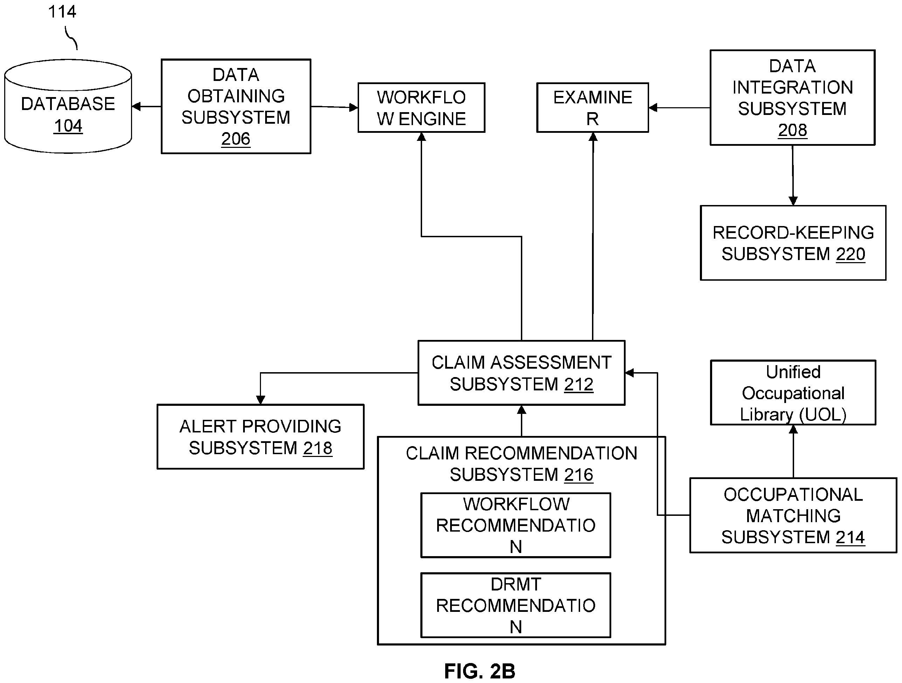

**FIG. 2B** illustrates an exemplary flow diagram representation of the plurality of subsystems 114 of the computer-implemented system 102 for processing the claim assessment, in accordance with an embodiment of the present disclosure.

In an exemplary embodiment, the computer-implemented system 102 (hereinafter referred to as the system 102) comprises the one or more hardware processors 110, the memory unit 112, and a storage unit 204. The one or more hardware processors 110, the memory unit 112, and the storage unit 204 are communicatively coupled through a system bus 202 or any similar mechanism. The memory unit 112 is operatively coupled to the one or more hardware processors 110. The memory unit 112 comprises the plurality of subsystems 114 in the form of programmable instructions executable by the one or more hardware processors 110.

In an exemplary embodiment, the plurality of subsystems 114 comprises a data obtaining subsystem 206, a data integration subsystem 208, a user profile generation subsystem 210, a claim assessment subsystem 212, an occupational matching subsystem 214, a claim recommendation subsystem 216, an alert providing subsystem 218, a record-keeping subsystem 220, and an automated cadence subsystem 222. The system 102 is configured to streamline claim assessments, enhance transparency, and improve the overall claims adjudication process while ensuring data privacy and scalability.

The computer-implemented system 102 is configured to support one or more avenues for claim intake. In an embodiment, the one or more claims may be submitted by mail, electronic mail (e-mail), fax, portal, and any technology that is flexible enough to handle any option the first user chooses. The computer-implemented system 102 is unique in in starting with a "Report a Claim" feature that is located on a public website of one or more second users (e.g., insurance carrier). The "Report a Claim" design is reflexive, meaning that different questions and data entry points are dependent on how a notifier answered previous questions. In an embodiment, E-mail address and cell phone numbers are requested during the claim intake process so that the computer-implemented system 102 may send real-time status updates throughout the lifecycle of the claim at various process milestones. The Claim Intake functionality has several data validation points for addresses, dates, Social Security Number (SSN), etc.

Another example of the Intelligence built into the computer-implemented system 102 for the "Report a Claim" feature is that specific questions are asked of the notifier that may drive an appropriate outcome. The outcome in this scenario may be a correct list of documents/requirements, as defined by the insurance carrier's business rules, that are required in order to initiate a review of the submitted claim. The computer-implemented system 102 is configured to leverage the insurance carrier's business rules to drive appropriate claim specific requirements as opposed to a general list of required documents that are not specific to the notifier's specific claim. The notifier completed the "Report a Claim" process to submit the one or more claims. The computer-implemented system 102 is further configured to complete an authentication process to verify eligibility, confirm beneficiaries, etc.

Once the notifier has been confirmed as the eligible employer/claimant/beneficiary, an e-mail may be sent outlining how a portal account can be created for on-going document uploads, claim status checks, and various communication methods throughout the lifecycle of the claim. Once the portal account is created, the claimant may see the list of required documents for submitting the one or more claims so that the claim examiner may begin an adjudication process. For structured forms, the "documents" may be presented as a web-based/on-line form, with e-signature capabilities, to improve the quality of submission and reduce turnaround time in the claims process. The other documents may be uploaded via the portal. While the on-line digital portal experience is the preferred claim submission method, the computer-implemented system 102 is configured to create the one or more claims from claim submission via mail, e-mail, and fax.

In an exemplary embodiment, the plurality of subsystems 114 includes the data obtaining subsystem 206 that is communicatively connected to the one or more hardware processors 110. The data obtaining subsystem 206 is configured to obtain one or more data in view of one or more forms (i.e., one or more first forms) associated with the claim assessment from the one or more communication devices 106 associated with the one or more stakeholders. The data comprises, but not limited to, at least one of: personal information, medical records, educational background, work experience, functional capabilities, Physical Capabilities Form (PCF), training, wage data, date last worked, tax records, Social Security Administration (SSA) award, benefit designation forms, medical authorizations, and the like. The one or more stakeholders enter this data associated with the disability assessment into the system 102 through a user-friendly interface associated with the one or more communication devices 106. The data obtaining subsystem 206 ensures that the system 102 receives accurate and up-to-date data from the one or more stakeholders. The one or more stakeholders may include, but not limited to, claimants, agents, employers, insurers, other relevant parties, and the like.

In an exemplary embodiment, the personal information includes the one or more stakeholder's personal details comprising, but not limited to, at least one of: name, contact information, date of birth, and social security number, which are essential for identification and contact purposes. The medical records include, but not limited to, at least one of: diagnosis reports, treatment histories, physician assessments, and the like. The medical records provide crucial insights into health status and relevant information for assessing claims of the one or more stakeholders. The information about the educational history of the one or more stakeholders, such as degrees, certifications, and training programs, is obtained. This data associated with the educational history assists in assessing the qualifications and potential for vocational rehabilitation of the one or more stakeholders. The data obtaining subsystem 206 obtains details about the work history of the one or more stakeholders, including, but not limited to, previous job positions, roles, durations of employment, and the like. This information associated with the work history is valuable for understanding the professional background of the one or more stakeholders. The data obtaining subsystem 206 collects data related to the functional capabilities of the one or more stakeholders may include, but not limited to, physical abilities, cognitive skills, and any limitations. These functional capabilities information is essential for assessing the ability to perform various tasks or return to work of the one or more stakeholders. In another embodiment, the processes collectively contribute to an efficient claims handling process for a broad range of insurance products.

In an exemplary embodiment, the plurality of subsystems 114 includes the data integration subsystem 208 that is communicatively connected to the one or more hardware processors 110. The data integration subsystem 208 is configured to integrate the data obtained in the data obtaining subsystem 206 from the one or more stakeholders in a claim assessment process. The data integration subsystem 208 is configured to perform one or more operations including at least one of: standardizing of data elements, resolving any inconsistencies, and organizing the information for efficient analysis in a structured and consistent format. The requisite data for allowing a claim to become at least one of: "decision ready" and "in good order", which is defined by the one or more second users (e.g., an insurance carrier). The one or more second users may define a subset of information required based on a combination of policy language and own business rules of the one or more second users. The data integration subsystem 208 is configured to set up to assist in standardizing the data and organizing the data to be at least one of: structured, easily viewed, interpreted, and leveraged, than unstructured data. This means, the data integration subsystem 208 is configured to convert the data into a consistent format to allow for ease of use in the computer-implemented system 102.

The data integration subsystem 208 is configured to conduct data validation checks to confirm the accuracy and completeness of the obtained data. The data integration subsystem 208 identifies and rectifies any data entry errors or discrepancies, further enhancing the reliability of the data. The data integration subsystem 208 is configured to organize the obtained data into relevant sections, such as personal details, medical records, educational background, work experience, and functional capabilities, making the obtained data readily accessible for analysis. The data integration subsystem 208 is configured to enrich the data with additional contextual information, such as mapping medical codes to diagnoses or identifying vocational training programs related to the educational background of the one or more stakeholders. By incorporating additional contextual information, the data integration subsystem 208 aims to provide a more nuanced and insightful perspective for a diverse range of insurance product claims.

In an embodiment, the data integration subsystem 208 is configured to utilize intelligent barcoding and scanning system that identifies all information necessary to associate the one or more forms and documents with a unique claimant. The intelligent barcoding and scanning system may include one or more information to identify the one or more forms, and upon recognition of the one or more form, the intelligent barcoding and scanning system may identify the placement of one or more fields on the one or more forms that are both necessary to match the form to the proper claimant. The intelligent barcoding and scanning system is configured to identify the one or more fields on the one or more forms that have been designated as `mandatory' or 'required' by the one or more second users (e.g., the insurance carrier). This intelligent barcoding and scanning system enables the data integration subsystem 208 to ensure all necessary information to adjudicate the claim is included, is legible, and contains values in each individual field that are expected.

The one or more required forms are stored in Digital Claim Form Library and accessible through an Intelligent Online Portal that may be accessed by the one or more first users including at least one of: claimants, employers, attending physicians, brokers/agents, beneficiaries, and the like. A form reading technology is able to locate one or more unique identifiers on inbound forms and documents to match the form/document without the intelligent barcoding and scanning system to the proper insurance carrier. The intelligent barcoding and scanning system may scan the one or more forms for the one or more fields and/or text with the one or more unique identifiers (e.g., name, social security number, date of birth, insurance carrier, policy number, etc.) until the intelligent barcoding and scanning system is able to match the form with a claimant. If the intelligent barcoding and scanning system is unable to match the form with an existing claimant, the intelligent barcoding and scanning system may queue the form to be reviewed to have a new claim automatically set up in the computer-implemented system 102 to then be forwarded to the insurance carrier. If the intelligent barcoding and scanning system is unable to identify sufficient information to match the form/document with a unique claimant, the intelligent barcoding and scanning system may queue the form/document for review by a validator to manually match with the proper claimant.

As part of the data integration subsystem 208, the intelligent barcoding and scanning system may scan every piece of inbound mail received (whether received through traditional mail services (hardcopy), fax machine (converted to an electronic pdf), e-mail attachment (electronic pdf), or via system's Intelligent Claims Portal) and upon reading the intelligent barcode, the intelligent barcoding and scanning system may identify the type of form or document received, and recognize all required fields, as identified by the insurance carrier, that need to be completed in order for the form to be considered in good order. The data integration subsystem 208 is configured to generate one or more second forms with one or more fields indicating one or more missing information upon identifying the one or more fields including the one or more information being missed in the one or more first forms received from the one or more communication devices 106 of the one or more first users, using a machine learning model. In other words, If any required field is missing information, the data integration subsystem 208 may automatically generate a new form (e.g., the one or more second forms) and highlight the one or more field(s) with the missing information to be sent back to the sender for completion.

During a customer implementation process, the data integration subsystem 208 with the machine learning model is configured to map one or more requisite data points that are required by the one or more second users (e.g., the insurance carrier) to allow a claim to become at least one of: "decision ready" or "in good order" with at least one of: specific claim forms and one or more documents and further with one or more specific fields within these forms or documents. If any of these fields on these forms or documents are missing data, the data integration subsystem 208 with the machine learning model is configured to request the missing data through a new form that highlights the missing data field. Further, the data integration subsystem 208 with the machine learning model is further configured to automatically send the request to the claimant for this missing information. In an embodiment, the data that are illegible for the data integration subsystem 208 needs to be reviewed for interpretation by a Claims Administrative Staff (CAS) team member. The CAS resource may validate the data, enter the data into the system and then share the document for processing in the system. Once the data are shared, the data integration subsystem 208 may compare what the data integration subsystem 208 previously interpreted as illegible with what the CAS resource has now entered as the valid data and may learn from this manual interpretation and may apply this learning to its review of future data sets for the specific field on the specific form.

Further, the data integration subsystem 208 may provide the one or more interpretations for the identified one or more fields including the one or more missing information, to the one or more communication devices 106 associated with the one or more users, using the machine learning model. As explained above, the machine learning model learns from previous manual interpretations by the CAS resources and applies the manual interpretations to future automated interpretations.

The data integration subsystem 208 may utilize Automate Business Rules (ABR's) to send the newly created form back to the sender via the same means the one or more forms were received (traditional mail, fax, e-mail or portal). If any field on any form that is received is not fully completed or fully legible, the machine learning model may work to intelligently identify a reasonable interpretation for the incomplete or illegible fields. The technology-driven field values may be sent to a validation resource to confirm the accuracy of the technology-driven value. The data integration subsystem 208 may continue to improve the accuracy of how it completes incomplete and illegible fields as the validators either accept or edit the technology-driven values. For forms that are multiple pages in length, the data integration subsystem 208 may identify any missing pages of the one or more forms and automatically generate a follow-up request to the sender for the missing portions of the one or more forms. If an Insurance Carrier's business rules allow, the data integration subsystem 208 may communicate an automated claim closure determination, without any engagement from any resources from the carrier, for any claims, where missing requisite information was not received within the carrier's stipulated timeframes.

If the Insurance Carrier's business rules allow, the data integration subsystem 208 may communicate an automated initial claim approval or an on-going claim extension approval if all requisite documentation is received, with all requisite data fields properly completed and the values of all data fields satisfying the contractual requirements for claim approval (as stipulated in the Insurance Carrier's business rules, which are stored within the system database). The data integration subsystem 208 may further communicate any claim status change or update to the claimant, the employer, the beneficiary, and/or the broker/agent, via real-time texting or e-mailing.

In an exemplary embodiment, the plurality of subsystems 114 includes the user profile generation subsystem 210 that is communicatively connected to the one or more hardware processors 110. The user profile generation subsystem 210 is configured to generate one or more user profiles by obtaining one or more information associated with at least one of: functional abilities and limitation information, of the one or more first users through the one or more first forms from attending physician statement (APS) and the one or more medical records of the one or more first users, for identifying at least one of: the functional abilities and the limitation information, of the one or more first users.

The Digital Claim Form Library may include the required one or more forms, as identified by each insurance carrier, necessary to adjudicate the one or more claims. These one or more forms may vary by insurance product (e.g., Life Insurance, Life Waiver, Group Disability Insurance, Individual Disability Insurance, etc.). These one or more forms may include an Attending Physician Statement (APS), an Experience, Training & Education (ETE) form, a Claimant's Statement, as well as other disclosure and regulatory required forms (HIPAA Disclosures, Privacy Statements, Authorization forms, Offset (Social Security, Workers Compensation, Retirement) Application forms, W-9's, Death Certificates, etc.). Each of these forms, wherever possible, may include 'radio dial' field completion to enable the system 102 to capture numerical or relativity scaled information that is used to create a Digital Claimant Profile.

The one or more user profiles are further established by capturing the claimant information from both the claimant statement (date of birth, height, weight, address) and the experience, training & education (ETE) form. This includes skill identification through prior work experience and associating the claimant's prior work experience with Occupational Codes from the Department of Labor. The one or more user profiles may also capture any training certifications and associated skills necessary to achieve each individual certification. And, lastly, the one or more user profiles may capture the level of education achieved by the claimant to document intelligence levels to complete the one or more user profiles for use with an occupational matching tool. The Intelligent Online Portals is configured to allow for the creation and storage of on-line web-based forms to allow for easy access and more efficient completion and processes of claimant, employer, attending physician, beneficiary, and broker/agent forms. The one or more forms housed within the Digital Claim Form Library also include the ability to accept electronic signatures (e-signature) from the claimant, employer, beneficiary, attending physician, and/or the broker/agent.

In an exemplary embodiment, the plurality of subsystems 114 includes the claim assessment subsystem 212 that is communicatively connected to the one or more hardware processors 110. The claim assessment subsystem 212 is configured to conduct a comprehensive and data-driven evaluation of the eligibility for benefits to the one or more stakeholders. The claim assessment subsystem 212 is meticulously configured to employ advanced algorithms and analytics to analyze the data associated with the claim assessment within the framework of policy definitions and criteria established by insurance providers. For instance, the primary policy definitions considered during a claim assessment process encompass at least one of: own occupation, any occupation, training, education, experience, gainful wages, and geographical work areas. The claim assessment subsystem 212 evaluates whether the one or more stakeholders is able to perform the duties and tasks associated with their own occupation at the time of the disability. The claim assessment process involves a detailed analysis of the functional capabilities and limitations of the one or more stakeholders, as well as the specific demands of their own occupation. The aim is to provide a nuanced and comprehensive assessment aligned with the diverse policy definitions relevant to the claim assessment process across various insurance products.

Beyond own occupation, the claim assessment subsystem 212 assesses whether the one or more stakeholders is able to engage in any occupation for which the one or more stakeholders is reasonably qualified based on their training, education, experience, and functional abilities. This evaluation considers a wide range of potential occupations and their compatibility with the one or more stakeholders. The claim assessment subsystem 212 examines the educational background and work experience of the one or more stakeholders to determine qualifications for alternative occupations. The claim assessment subsystem 212 matches the skills and expertise of the one or more stakeholders with suitable job opportunities that align with their training and experience. The claim assessment subsystem 212 assesses the potential to earn wages that are commensurate with the one or more stakeholders' disability-related limitations. The claim assessment subsystem 212 considers the functional capabilities and the compensation typically associated with the potential occupations of the one or more stakeholders. The geographic considerations are incorporated into the analysis to evaluate the ability to access suitable job opportunities for the one or more stakeholders in their local labor market. This includes assessing whether the disability limitations of the one or more stakeholders align with job prospects in their geographical area. The claim assessment subsystem 212 is configured to conduct these evaluations with a high degree of precision, leveraging advanced algorithms and data analytics.

In an exemplary embodiment, the plurality of subsystems 114 includes the occupational matching subsystem 214 that is communicatively connected to the one or more hardware processors 110. The occupational matching subsystem 214 is configured with a Unified Occupational Library (UOL) and an advanced occupational selection technology to match the abilities and limitations of the one or more stakeholders with suitable occupations from an extensive database. Each profile associated with the one or more stakeholders within the UOL is richly detailed, offering insights into the requirements, responsibilities, and demands associated with various occupations within a labor market. Leveraging the advanced occupational selection technology, the occupational matching subsystem 214 employs intelligent algorithms and data-driven methodologies to perform precise matching.

The occupational matching subsystem 214 scrutinizes the functional capabilities and limitations of the one or more stakeholders against the requirements of numerous occupations within the UOL. The occupational matching subsystem 214 is tailored to account for the specific abilities and limitations of an individual stakeholder of the one or more stakeholders. The occupational matching subsystem 214 considers factors including, but not limited to, physical abilities, cognitive skills, vocational interests, nature of the disability, and the like. The occupational matching subsystem 214 aligns the matching process with policy-specific parameters established by the insurance providers. This ensures that the recommended occupations are in accordance with the policy definitions, whether they pertain to own occupation, any occupation, training, education, experience, gainful wages, or geographical work areas. To enhance the practicality and relevance of the matching results, the occupational matching subsystem 214 incorporates location-based filtering. The occupational matching subsystem 214 considers the geographic vicinity of the one or more stakeholders and filters potential occupations based on the local labor market, thus ensuring that the suggested occupations are realistic and suitable for the current location of the one or more stakeholders.

In order to assist the insurance carriers with the speed, accuracy, and defensibility of their benefit determinations for disability-related claims (Group Disability, Individual Disability, Group Life Waiver and Individual Life Waiver), the occupational matching subsystem 214 has automated most components of the benefit determination process. The occupational matching subsystem 214 (e.g., an automated occupational matching engine) leverages the Automated claims intake process as well as the intelligent barcoding and scanning process. Once a claim is 'in good order' and is 'decision-ready', the computer-implemented system 102 would have developed and captured a Digital Claimant Profile (e.g., the one or more user profiles). The Digital Claimant Profile has multiple dimensions of information. The first dimension may include any restrictions and limitations related to the physical capabilities of the claimant across up to 31 attributes, including sitting, standing, lifting, bending, twisting, reach, dexterity, fine finger manipulation, sight, hearing, and the like. Any identified physical restrictions or limitations would have been recorded from information obtained from the Attending Physicians Statement (APS), (labeled the Physical Capability Form (PCF) within a technology platform of the system) as well as through the scanning and recording of information from medical records, hospital notes, test results, and other related medical information collected from the claimant's treatment providers.

The Digital Claimant Profile's second dimension is related to the claimant's Experience, Training and Education (ETE). Data is collected from the Claimants Statement (i.e., a part of the initial new claim packet that is required to initiate a claim) related to prior work experience with specific job titles and employers, along with length of experience. In an exemplary scenario, the occupational matching subsystem 214 may include a Unified Occupational Library (UOL) that combines all recognized jobs in the United States labor market from both the Description of Occupational Titles (DOT) and O*Net (the most recent repository used by the US Department of Labor to store this information on-line). The US Department of Labor maintains the O*Net library with up-to-date information quarterly through surveys of employers across the country. In an embodiment, information in these two databases or converted, in format only, by the system 102 into a digital occupation profile that outlines the physical demands of each job across all the same dimensions contained in the digital claimant profile, the level of education and certifications required to perform each occupation, as well the volume of jobs, by location, across The United States.

Each occupation within these two databases has a unique occupational code. When occupational matching subsystem 214 captures the claimant's prior work experience, the occupational matching subsystem 214 may translate each previously held job into an occupational code and add all the skillsets and physical requirements required to perform each occupation and may add those capabilities the Digital Claimant Profile. The occupational matching subsystem 214 may weigh all prior work experience for length of experience and recency of experience. In an exemplary scenario, the occupational matching subsystem 214 (i.e., an occupational matching technology) further includes crosswalks to Canadian Occupations to allow for the identification of appropriate and recognized occupations for claimants who work in Canada. The second dimension of the Digital Claimant Profile also captures any specialized training and certifications achieved by the claimant and adds the capabilities necessary to achieve these certifications and complete the specific training to the Digital Claimant Profile. Finally, for this dimension, the Digital Claimant Profile also captures all prior education received by the claimant (this is captured from the Claimant's Statement) to build out the intelligence level of the claimant. The Digital Claimant Profile's third dimension is the physical location of the claimant. In an embodiment, the physical location is captured from the physical address provided in the claimant's statement.

In an embodiment, once a claim is determined to be 'in good order' and decision ready, the occupational matching subsystem 214 (i.e., the automated occupational matching engine) may compare the data captured across all three dimensions of the Digital Claimant Profile against all occupations stored in the Unified Occupational Library (UOL) to identify 'matches', or occupations that the claimant is capable of performing across all three of the same dimensions (physical capabilities, training & education, and geographic location). Additionally, some disability-related claim policies may require the claimant to be able to earn a commensurate wage to their pre-disability earning, as defined in the insurance policy, in order to be deemed able to perform another occupation (commonly referred to as 'any occupation' in disability-related insurance policies) in lieu of continuing to receive benefits from the disability-related policy.

The Unified Occupational Library further includes current wage information (as captured from the Department of Labor's databases) by geographic region across The United States. A report may be sent to the claim examiner for the insurance carrier via task added to the work inventory queue in the system 102 that contains a link to the report. This report is called an Opportunity Report and may provide a summary of the Occupational Matching results, starting with the matching results for the claimant's Own Occupation and then the matching results for Any Occupations. In the Any Occupation section of the report, matched occupations may be listed in order of 'relevancy'. In an embodiment, contained with the Occupational Matching tool is an algorithm that scores each occupation in terms of how strong of a match each occupation is to the Digital Claimant Profile. The highest scored occupations may be listed in the report. The insurance carrier has discretion around the matching score required to allow an occupation to be present on the Opportunity Report and/or to limit the total number of occupations contained in the Any Occupation section of the Opportunity Report.

In an exemplary embodiment, the plurality of subsystems 114 includes the claim recommendation subsystem 216 that is communicatively connected to the one or more hardware processors 110. The claim recommendation subsystem 216 is configured to generate a sequence of recommended actions. The sequence of recommended actions includes return-to-work plans, vocational training recommendations, or preparation for Social Security Disability Insurance (SSDI) claims. The claim recommendation subsystem 216 develops comprehensive return-to-work plans designed to facilitate the reintegration of the one or more stakeholders into a workforce. These plans consider the functional capabilities, limitations, and demands of the one or more stakeholder's own occupation, aiming to outline a clear path for their return to gainful employment. For the one or more stakeholders whose disabilities may necessitate a shift in their career trajectory, the claim recommendation subsystem 216 offers vocational training recommendations. These recommendations identify training programs, educational courses, or skill development opportunities that align with the interests, abilities and the requirements of suitable alternative occupations for the one or more stakeholders.

In cases where the disability of the one or more stakeholders is likely to result in a longer-term disability status, the claim recommendation subsystem 216 provides guidance on preparing for Social Security Disability Insurance (SSDI) claims. This includes assistance with gathering the necessary documentation, navigating the application process, and understanding the eligibility criteria for Social Security Disability Insurance (SSDI) benefits. The recommendations generated by the claim recommendation subsystem 216 are customized to align with the one or more stakeholder's specific disability-related challenges, vocational interests, and the policy definitions established by the insurance providers. The claim recommendation subsystem 216 factors in policy-specific parameters including, but not limited to, own occupation, any occupation, training, education, experience, gainful wages, geographical work areas, and the like, to ensure that the recommended actions adhere to policy requirements.

The claim recommendation subsystem 216 incorporates mechanisms for monitoring the claimant's progress in executing the recommended actions. The claim recommendation subsystem 216 offers real-time updates and notifications to keep the one or more stakeholders informed of milestones, deadlines, and any additional steps they need to take. Efficient communication channels between the one or more stakeholders and relevant stakeholders, including insurers, are integrated into the recommendations. This efficient communication ensures that inquiries and additional information requests are promptly addressed, fostering transparency and trust in a claims-handling process.

In an exemplary embodiment, the plurality of subsystems 114 includes the alert providing subsystem 218 that is communicatively connected to the one or more hardware processors 110. The alert providing subsystem 218 is configured to provide real-time alerts and notifications to all relevant stakeholders of the one or more stakeholders. The alerts are triggered by specific events or milestones within the insurance claim process, ensuring that the one or more stakeholders is promptly informed about critical developments. The one or more stakeholders receive regular alerts on the progress of a claim. This includes the alerts about the status of submitted documents, assessment milestones, and any actions required from the stakeholders themselves. The alert providing subsystem 218 issues the alerts and the notifications to the one or more stakeholders regarding any necessary actions the one or more stakeholders need to take to facilitate the claims adjudication process. For instance, the alert providing subsystem 218 may remind the one or more stakeholders to provide additional documentation.

In an embodiment, transparent communication channels ensure that the one or more stakeholders is able to access accurate and up-to-date information about their claims. This transparency fosters trust and confidence in the claims adjudication process. The alert providing subsystem 218 allows for customized communication preferences. The one or more stakeholders are able to receive alerts via, but not limited to, at least one of: email, SMS, mobile app notifications, or other preferred communication channels, enhancing accessibility and convenience. The alert providing subsystem 218 maintains a record of all the alerts and the notifications sent to the one or more stakeholders. This record serves as a valuable reference for auditing, compliance, and record-keeping purposes. The alert providing subsystem 218 is configured to implement data encryption and security measures to protect sensitive information shared through the alerts, ensuring compliance with data privacy regulations.

In an exemplary embodiment, the plurality of subsystems 114 includes the record-keeping subsystem 220 that is communicatively connected to the one or more hardware processors 110. The record-keeping subsystem 220 is configured to implement data retention policies that dictate the lifespan of various types of data within the system 102. These policies are designed to align with legal and regulatory requirements, ensuring that the data is retained for the required duration and securely deleted when no longer needed. The record-keeping subsystem 220 enables the organized and secure storage of documents and records related to disability claims. The record-keeping subsystem 220 categorizes and archives documents, making the documents readily accessible for auditing, compliance reporting, and reference purposes.

In an exemplary embodiment, the plurality of subsystems 114 includes the automated cadence subsystem 222 that is communicatively connected to the one or more hardware processors 110. The automated cadence subsystem 222 is configured to track an automated follow-up tool for missing and delinquent forms and responses. When the one or more forms are received and matched with a claimant, the automated cadence subsystem 222 may review all currently received forms and documents, create one or more inventories of what has been received to date, and compare that inventory against a profile, as defined and captured in the Automated Business Rules (ABR) tool, by each individual insurance carrier, of a complete, or 'in good order', claim. If any information is missing from the "in good order" profile, the automated cadence subsystem 222 may assess if the missing information has been previously requested. If the one or more forms have not yet been requested, the automated cadence subsystem 222 may initiate an initial request for the missing information. If the one or more forms had been previously requested, the automated cadence subsystem 222 may determine if a follow-up request is due for the missing information, and initiate a follow-up request as needed.

All requests for information, whether for newly identified missing information or follow-up requests for previously requested information, may be made by the means that has been chosen by the insurance carrier or the source of the requested information as their preferred method of communication (i.e., mail, e-mail, text, fax, portal). The number of follow-up requests for each required form is set by each insurance carrier. Likewise, the frequency of follow-up requests for each required form is set by each insurance carrier. The number and frequency of the follow-up requests is called the 'Cadence' as is captured in the Automated Business Rules (ABR) tool.

**As** information is received, updates are automatically added to the computer-implemented system 102 for the one or more first users to see, in real-time, what information has been received as well as what information remains outstanding. Likewise, as follow-up requests for information are sent, updates are automatically added to the computer-implemented system 102 for the one or more first users to see, in real-time. Furthermore, each insurance carrier can leverage Robotic Process Automation (RPA) tools to automatically generate claim determination correspondence for the claimants who do not provide all required information in a timely manner, as defined by the carrier and the policy language in each of their insurance products. These communications, called "Failure to Provide Proof of Loss", may be delivered to the claimant either by mail, e-mail, fax, text or via portal.

In an embodiment, the status of the one or more claims may automatically be updated accordingly in the computer-implemented system 102 for users to see, in real-time. Insurance carriers may have an option to generate an automated task (versus an automated correspondence) that may be sent to the claim examiner assigned to the one or more claims for them to approve the Failure to Provide Proof of Loss correspondence. If approved, the Failure to Provide Proof correspondence may be sent. If not approved, the claim examiner has the ability to set a new cadence for additional follow-up requests for missing information, or they can waive the need for missing information, update the system 102 accordingly, and allow the one or more claims to be adjudicated without the missing information that was waived.

In an embodiment, once a claim is determined to be "in good order", the claim examiner may complete the claims adjudication process by leveraging the `Automated/Template-Driven Correspondence Library". The insurance carrier's letters are stored in a letter library and may be mailed in a completely automated fashion or may be presented to the claim examiner in a template format to allow them to make any modifications that are needed. The automated cadence subsystem 222 may send the letter via the preferred communication method whether it be via mail, e-mail, or presented in the portal. For disability-related approved claims, the next steps and appropriate action may be automatically scheduled for a future date (based on the insurance carrier's automated business rules) to begin the recertification process at that time.

Further, the system 102 offers personalized experiences and tailored data presentation to meet the unique preferences and needs of the one or more stakeholders. The system 102 is configured to enhance the usability, accessibility, and overall user satisfaction. The system 102 allows the one or more stakeholders, including, but not limited to, claimants, agents, employers, insurers, and the like, to create and manage user profiles within the system 102. The user profiles capture individual preferences, communication settings, and accessibility requirements.

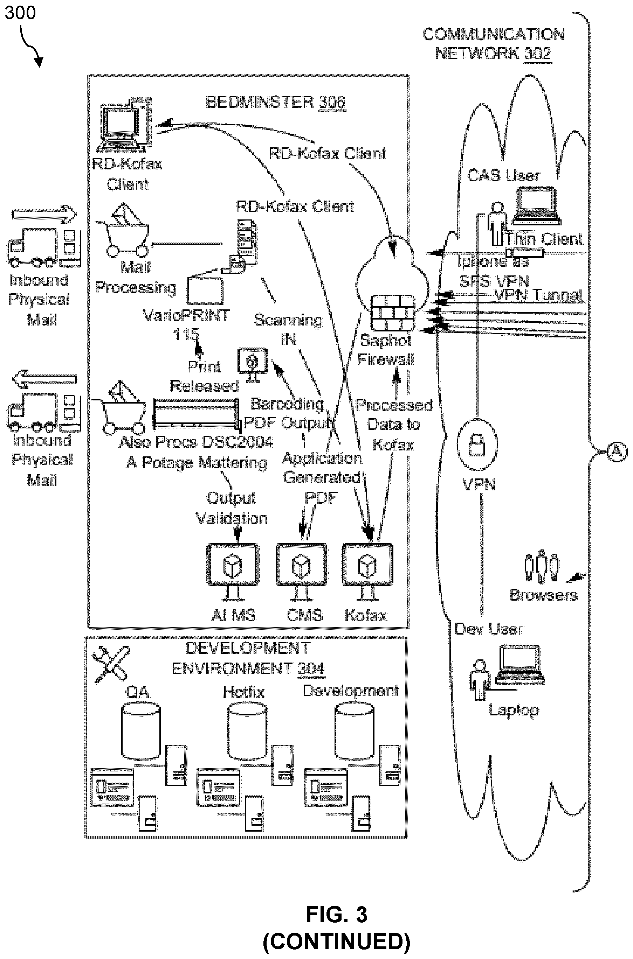

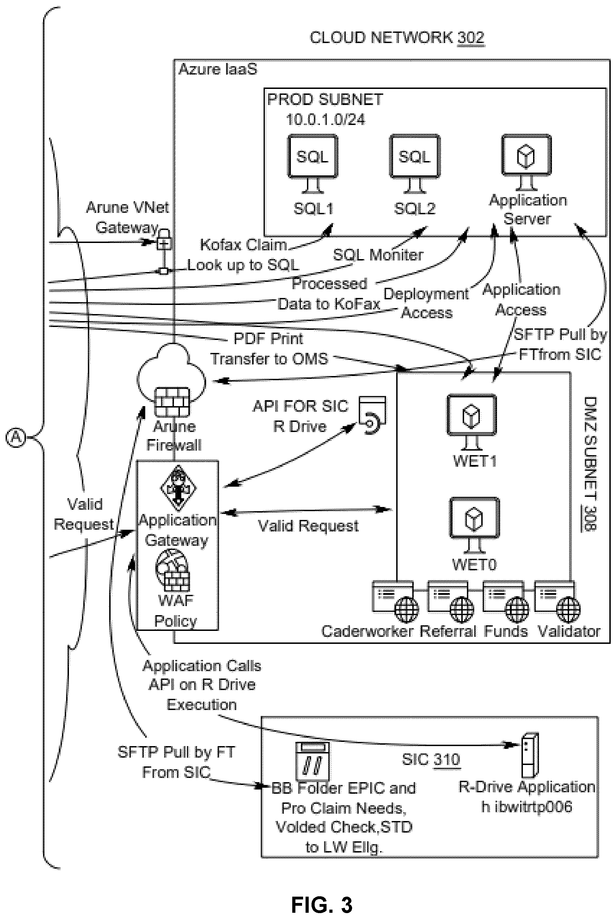

**FIG.** 3 illustrates an exemplary network diagram 300 of the system 102 for processing the claim assessment, in accordance with an embodiment of the present disclosure.

In an exemplary embodiment, the data flow begins with obtaining the data associated with the claim assessment from the one or more stakeholders. The obtained data is processed by the data integration subsystem 208. The data integration subsystem 208 resides inside a cloud network 302. The cloud network 302 is configured to receive and digitize physical forms, extract text using Optical Character Recognition (OCR) technology and categorize the obtained data. The data, once processed, is transmitted securely over the communication network 108. The cloud network 302 serves as the central hub for data storage, processing, and management. The cloud network 302 hosts various components of the system 102, including databases, application servers, and other critical services. The cloud network 302 provides scalability, reliability, and security for the system 102. Within the cloud network 302, Structured Query Language (SQL) databases are used for structured data storage. The SQL databases store and organize claim-related information in a format that is easily queried and accessed by the system 102.

In an exemplary embodiment, the cloud network 302 is configured with an application server to host the functionalities of the system 102. The application server process data, perform calculations, and generate recommendations based on the profiles and policy criteria of the one or more stakeholders. The system 102 incorporates a Kofax claim processing technology, configured to streamline the data capture and processing of claim-related documents. The Kofax claim processing technology enhances the efficiency of data extraction and validation. Further, the system 102 is configured with a development environment 304. The development environment 304 is configured to perform system updates and patches. Once the development environment 304 is evaluated and validated, the system updates are deployed to a production environment within the cloud network 302.

In an exemplary embodiment, secure areas, such as Bedminster 306, may be utilized for storing sensitive documents or backups associated with the obtained data. The data that requires an additional layer of physical security is stored in the Bedminster 306. A demilitarized zone (DMZ) subnet 308 is employed to provide an additional layer of security for external-facing components of the system 102. The DMZ subnet 308 separates public-facing elements from the internal network, mitigating security risks. A Secure Internet Connection (SIC) 310 ensures that data transmitted over the communication network 108, especially between the one or more stakeholders and the cloud network 302, is encrypted and secure. The SIC 310 protects against unauthorized access and data breaches.

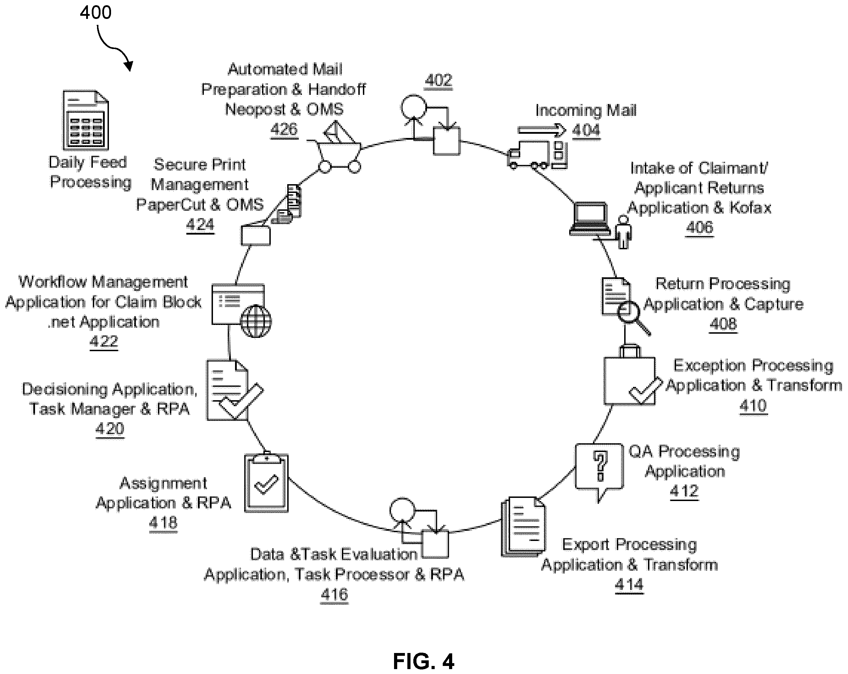

**FIG. 4** illustrates an exemplary claim readiness cycle 400 of the system 102 for processing the disability assessment, in accordance with an embodiment of the present disclosure.

In an exemplary embodiment, the system 102 is positioned to manage intake, validation, processing, and assignment of claims with a high degree of precision and compliance. The system 102 operates within a secure and licensed environment, ensuring data privacy and legal compliance at every step of the claim readiness cycle 400. At step 402, the claim readiness cycle 400 begins with a comprehensive mail tracking, which is fully integrated with the system 102, allowing for precise monitoring and control of incoming mails. At step 404, the claim readiness cycle 400 includes the system 102 which is both bonded and licensed, meeting all legal requirements for the insurance claims process. The system 102 effectively manages situations where mail is undelivered due to factors such as the absence of a forwarding address.

At step 406, the claim readiness cycle 400 includes the intake process encompasses the reception of claims via various channels, including, but not limited to, email, fax, traditional mail, web/portals and the like. A barcode technology is employed to expedite the entry of materials directly into a processing queue. Non-barcoded items undergo a review queue to ensure accuracy and completeness before proceeding. At step 408, the claim readiness cycle 400 includes a validation stage that includes an evaluation of returns to carriers and claim/applicant records, including form identification and verification of miscellaneous data. At step 410, the claim readiness cycle 400 includes a clean room processing environment maintained to ensure data integrity. In cases of incomplete evaluation, data extraction is initiated, covering both mandatory information and additional information. Miscellaneous data is identified, and classification is verified.

At step 412, the claim readiness cycle 400 includes validating processed records, files and counts to ensure accuracy. At step 414, the claim readiness cycle 400 includes the processed records and files undergoing the validation check to ensure accuracy, with portable document format (PDF) files being committed to the claim record along with task tracking. A meta file and data extraction are also committed, ensuring data completeness and accuracy. Inventory management processes are in place to account for returns and track task completions.

At step 416, the claim readiness cycle 400 includes tasks, and flows are spawned based on assigned business rules, with claim readiness being evaluated to determine claim or task assignment. Automated actions, approvals, correspondence, and tasks are generated as needed. At step 418, the claim readiness cycle 400 includes the assignment stage involves the allocation of claims or applications, with workload reporting, manager reporting, and assignment reporting being integral to the process. Once tasks or items are completed, at step 420, the claim readiness cycle 400 includes decisions are made, and appropriate correspondence is generated. Workflows are initiated for the next consideration period.

At step 422, the claim readiness cycle 400 includes the system 102 features automated cadence tasks, one-click workflows, a document repository, a correspondence engine, and gatekeeping to streamline processes. At step 424, the claim readiness cycle 400 includes barcoding and security, print inventory and authentication-based release controls are maintained, and clean room processing is a standard practice to ensure accuracy. In a claim-based barcode sort process, at step 426, the claim readiness cycle 400 includes, page counts and stuffing that are carefully managed, with a strong focus on PHI (Protected Health Information) protection. Various certified options are available, both by type and as single requests. A postal service (PS) handoff is executed efficiently and securely.

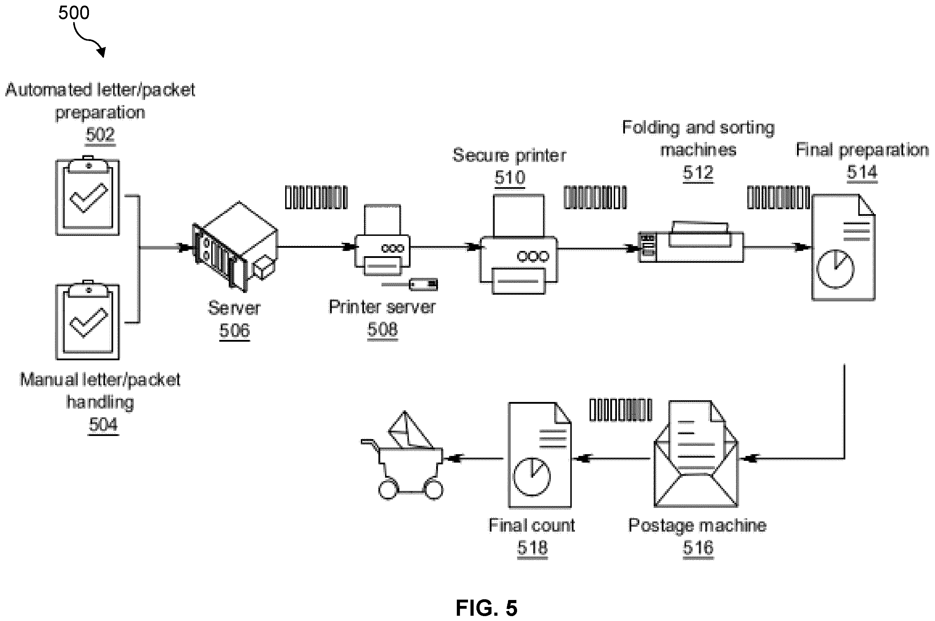

**FIG. 5** illustrates an exemplary outbound barcode process 500 of the system 102 for processing the claim assessment, in accordance with an embodiment of the present disclosure.

In an exemplary embodiment, the system 102 is implemented to manage the preparation and delivery of outbound letters and packets. The outbound barcode process 500 is essential for ensuring that all outgoing items are accurately prepared, counted, and delivered, meeting the highest standards of accuracy and efficiency. The outbound barcode process 500 comprises an automated letter/packet preparation 502, the outbound letters and packets are prepared using automated systems and software. The outbound barcode process 500 includes the generation of content, formatting, and document assembly for each outbound item. A manual letter/packet handling 504 is configured to manually manage required for certain items that cannot be fully automated. The items are carefully processed to ensure accuracy and compliance with mailing requirements.

In an exemplary embodiment, a dedicated server 506 is employed to generate and manage barcodes for each outbound item. The barcodes are used to track and identify each page and ensure that all pages are returned, arranged in the correct order, and match the initial count of outbound items. Each page of an outbound item is individually barcoded. This level of granularity allows for precise tracking and verification of pages throughout the outbound barcode process 500. A printer server 508 is configured to manage the printing of the outbound items, ensuring that the content is accurately printed on each page. A secure printer 510 is configured to prevent unauthorized access to sensitive information. The secure printer 510 is dedicated to the printing of the outbound items and is located in a secure environment. A folding and sorting machines 512 are employed to organize the outbound items efficiently. The folding and sorting machines 512 ensure that the outbound items are arranged correctly for mailing.

In an exemplary embodiment, a final preparation count 514 is performed before the outbound items are sent for postage. The final preparation count 514 is compared to the initial count to verify that all the outbound items are accounted for. A postage machine, equipped with individual weighing capabilities, is managed to apply postage to each outbound item. The postage machine 516 calculates postage costs based on the weight and size of each item. After the postage is applied, a final count 518 of the outbound items is conducted to confirm that all the outbound items are properly processed. Once all the outbound items are prepared, counted, and properly postage-stamped, the outbound items are handed off to the PS for distribution and delivery to the respective one or more stakeholders.

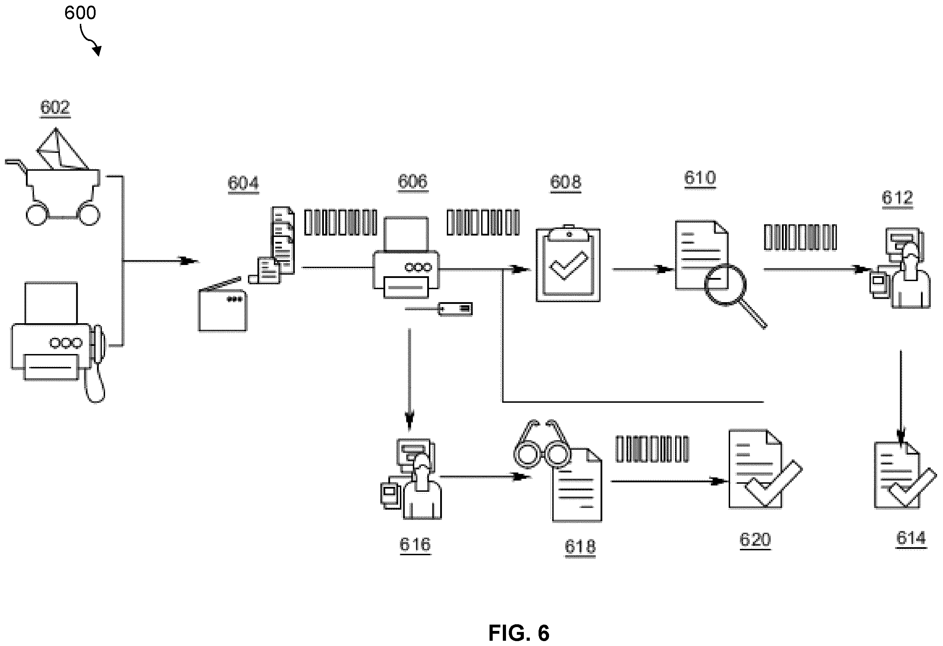

**FIG. 6** illustrates an exemplary inbound barcode process 600 of the system 102 for processing the claim assessment, in accordance with an embodiment of the present disclosure.

In an exemplary embodiment, at step 602, the inbound barcode process 600, includes incoming items returned by mail or fax that are carefully received and prepared for processing the claim assessment. The received items via fax are immediately fed into an image reader to initiate a processing flow. At step 604, the inbound barcode process 600 includes a scanning process employed for both mail and fax items. The mail items are fed into a scanner, while fax items are directly integrated into the image reader. At step 606, the inbound barcode process 600, includes each page of the incoming items is equipped with the barcode that is scanned and read. The barcode serves as a unique identifier for each item. At step 606, If each page has the barcode, step 606 proceeds to step 608, otherwise step 606 proceeds to step 616.

The barcode is used to identify any associated outbound task requests. If a barcode matching the outbound task request is found, the system 102 associates the incoming items with the outbound task request. Once the incoming items are associated with the outbound task request, the outbound task request is assigned to a relevant task. This process ensures that the incoming items are processed in the context of the corresponding relevant task. At step 608, the inbound barcode process 600, includes the incoming items, along with any relevant documents, is scanned, and a document file is created. The document file is attached to the corresponding relevant task for further processing.

At step 610, the inbound barcode process 600, includes the system 102 utilizing at least one of: an OCR technology and Intelligent Character Recognition (ICR) technology to read and extract data from the scanned documents. The OCR/ ICR technology is especially useful for converting printed or handwritten text into machine-readable data. At step 612, the inbound barcode process 600, includes the OCR/ICR technology cannot read certain text, a validation operator is involved. Once all necessary data has been read and validated, at step 614, the inbound barcode process 600, includes the system 102 for assigning a value to the incoming items. The value is based on the content and relevance of the incoming items to an associated task.

At step 616, the inbound barcode process 600 includes a validating operator, configured to validate each page without the barcode. At step 618, the inbound barcode process 600 includes reviewing the pages to assign the barcode. At step 620, the inbound barcode process 600, assigning the incoming items with the barcode to the relevant task.

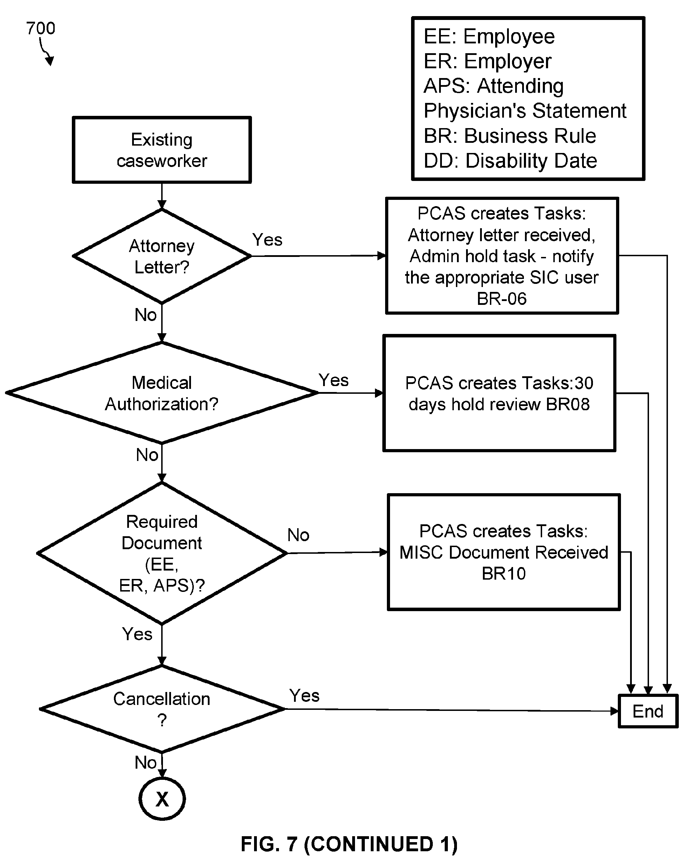

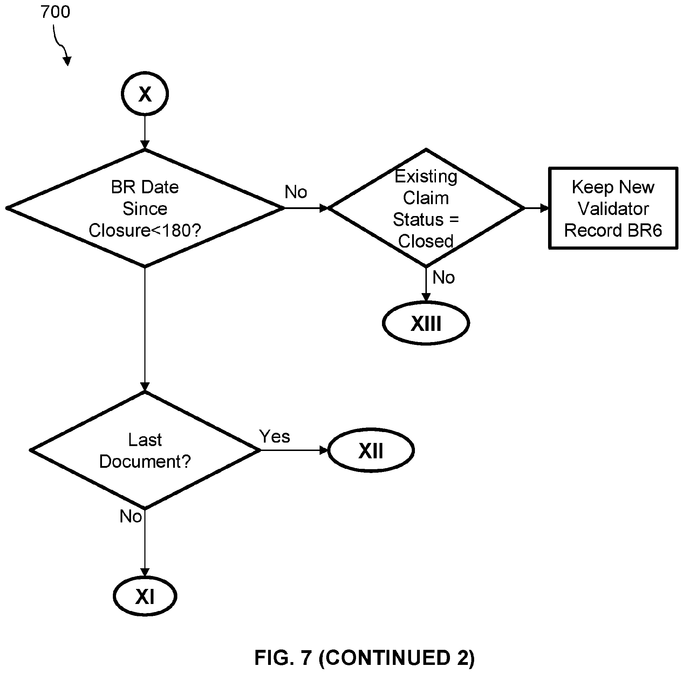

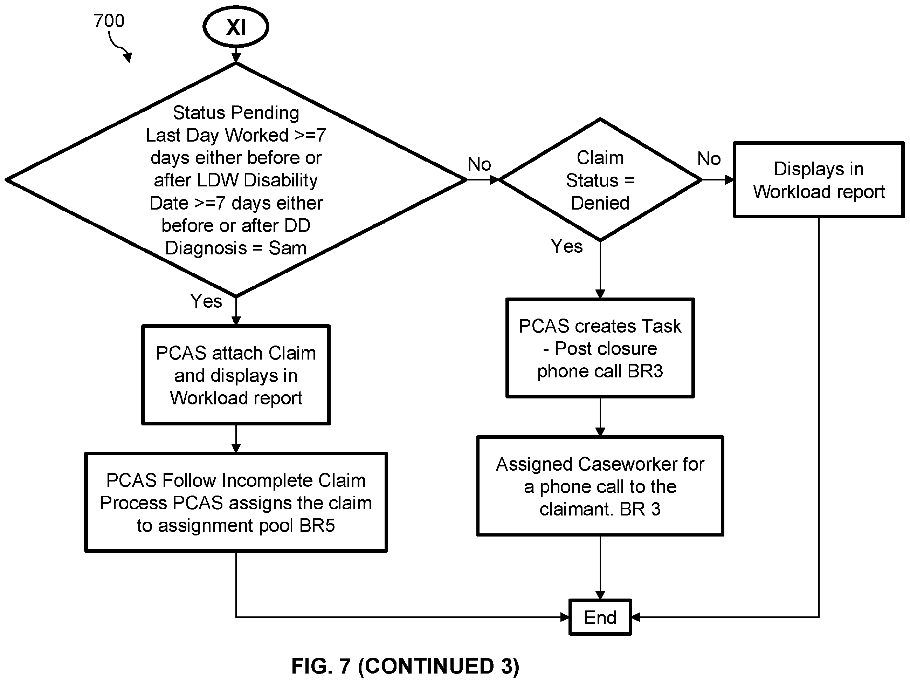

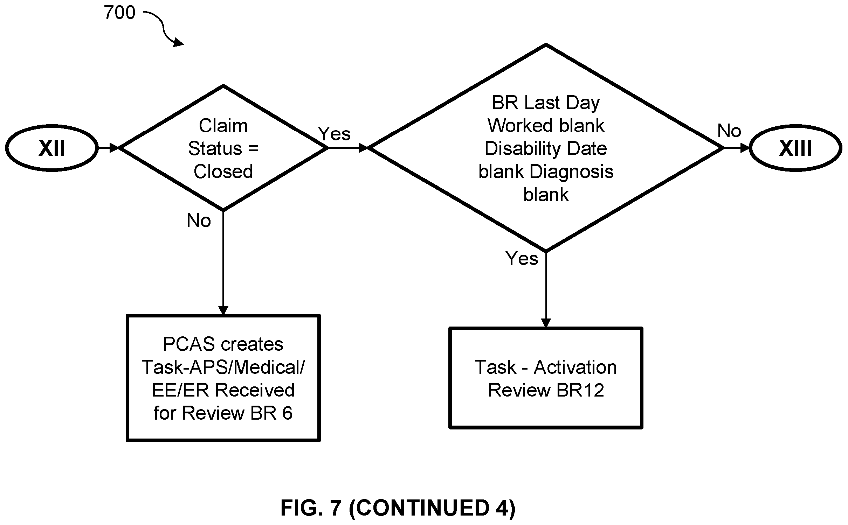

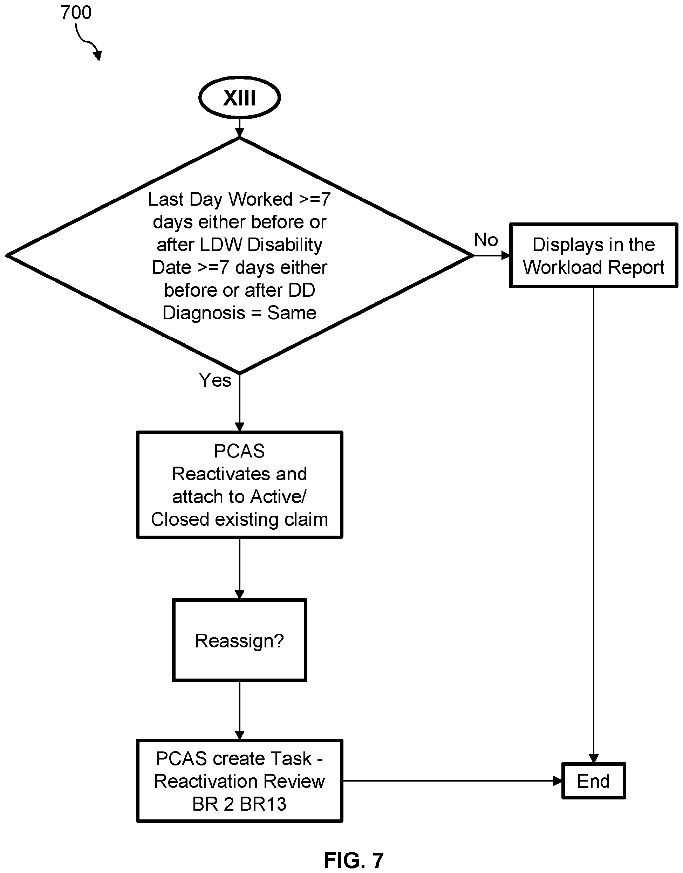

**FIG. 7** illustrates an exemplary claim processing workflow 700 of the system 102 for processing the claim assessment, in accordance with an embodiment of the present disclosure.

In an exemplary embodiment, the claim processing workflow 700 delineates various decision points and actions at each stage. The system 102 efficiently manages documents and claims, with a particular focus on accuracy and compliance. The claim processing workflow 700 begins by identifying the existing caseworkers and, if necessary, reactivating and attaching documents to active or closed claims. The system assesses closure dates and document completeness, initiating tasks for reactivation reviews or post-closure phone calls as needed. The claim processing workflow 700 also manages pending claims, denials, attorney letters, required documents, and medical authorizations, creating corresponding tasks for review and follow-up. The claim processing workflow 700 ensures claims are appropriately categorized and processed, with clear criteria for reassignment or record retention. Overall, this systematic approach streamlines claims management, enhances efficiency, and facilitates timely decision-making.

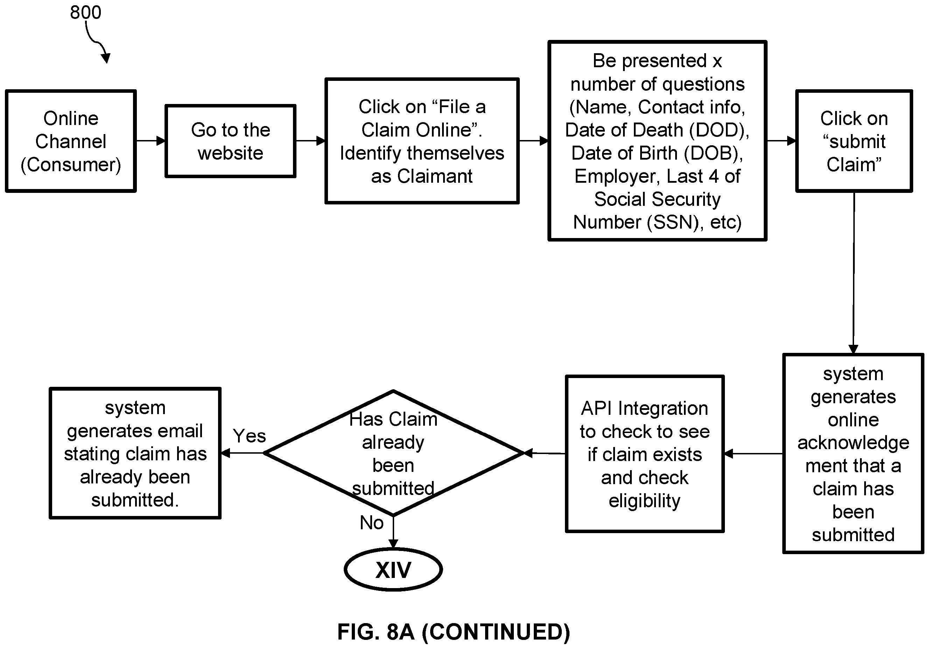

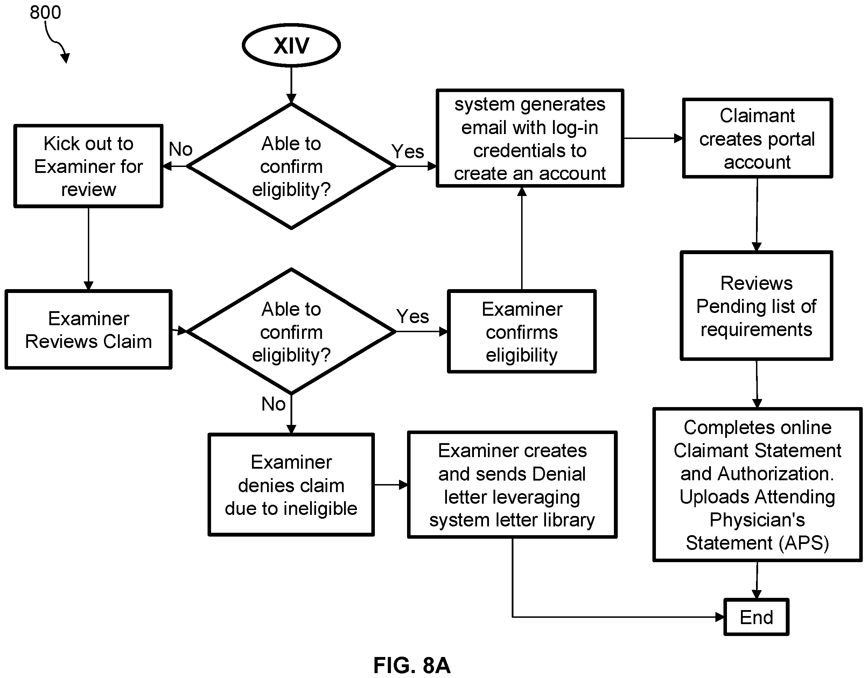

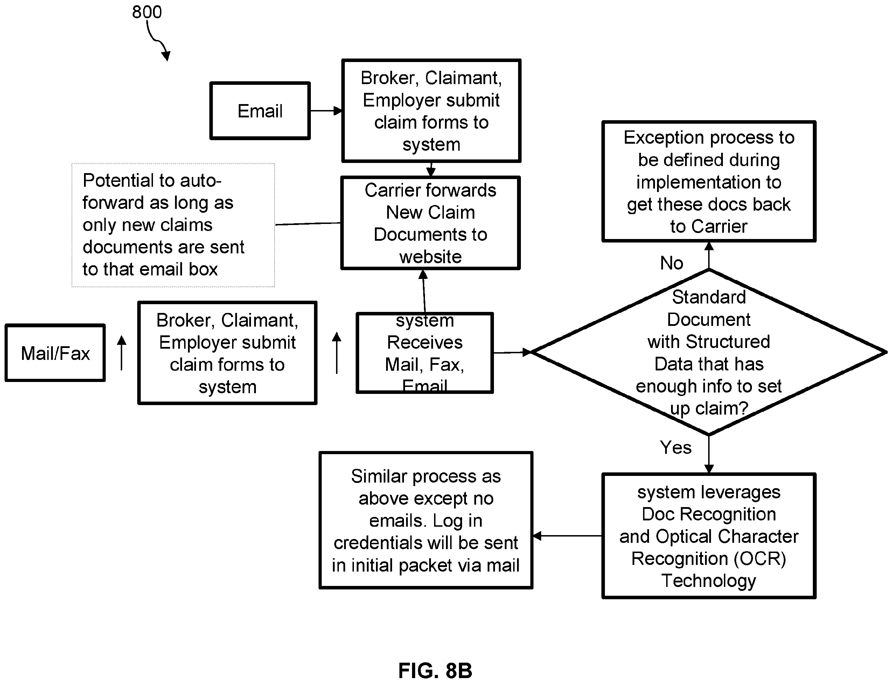

**FIGs. 8A** - **8B** illustrate an exemplary carrier claim workflow intake 800 of the system 102 for processing the claim assessment, in accordance with an embodiment of the present disclosure.

In an exemplary embodiment, the carrier claim workflow intake 800 outlines an online claims submission process for the one or more stakeholders by utilizing the system 102. The one or more stakeholders start by accessing the website and selecting the "File a Claim Online" option, where they are prompted to provide essential information such as their name, contact details, date of death (DOD), date of birth (DOB), employer information, and the last four digits of their Social Security Number (SSN). After clicking "Submit Claim," the system generates an online acknowledgment of the claim submission.

In an exemplary embodiment, the system 102 is configured with an Application programming interface (API) to check if the claim already exists and to verify eligibility. If the claim has already been submitted, and eligibility is confirmed, the system 102 sends an email to the one or more stakeholders stating that the claim has already been submitted. If eligibility cannot be confirmed, the claim is sent to an examiner for review. If eligibility is confirmed by the examiner, the system 102 generates an email with login credentials for the claimant to create an account. In case eligibility cannot be confirmed by the examiner, the claim is denied, and the examiner creates and sends a denial letter using a letter library of the system 102.

After receiving login credentials, the one or more stakeholders proceed to create a portal account, review the pending list of requirements, complete the online Claimant Statement and Authorization, and upload the required APS (Attending Physician's Statement). The process ends once these steps are completed. This carrier claim workflow intake 800 streamlines the online claims submission and review process, ensuring that one or more stakeholders is efficiently submitting their claims while maintaining a clear path for eligibility confirmation and denial in cases of ineligibility.

In another exemplary embodiment, the system 102 receives claims for at least one of the forms and documents from one or more stakeholders via various channels such as mail, fax, email, web/portal, and the like. When at least one of the forms and documents arrives, the system 102 evaluates whether they contain structured data with enough information to set up the claim. If at least one of the forms and documents contain structured data that is able to process, the system 102 leverages document recognition and OCR technology to extract and interpret the information. After recognition, a similar process as depicted in the carrier claim workflow intake 800 is initiated to manage the claim.

However, if at least one of the forms and documents lack enough structured data or if there are exceptions in the data that prevent claim setup, an exception process needs to be defined during implementation. The system 102 is configured to address how to manage at least one of these forms and documents and resolve any issues to ensure that the claim setup proceeds smoothly. The specific steps and actions in the exception process need to be outlined and implemented to efficiently manage the claim setup.

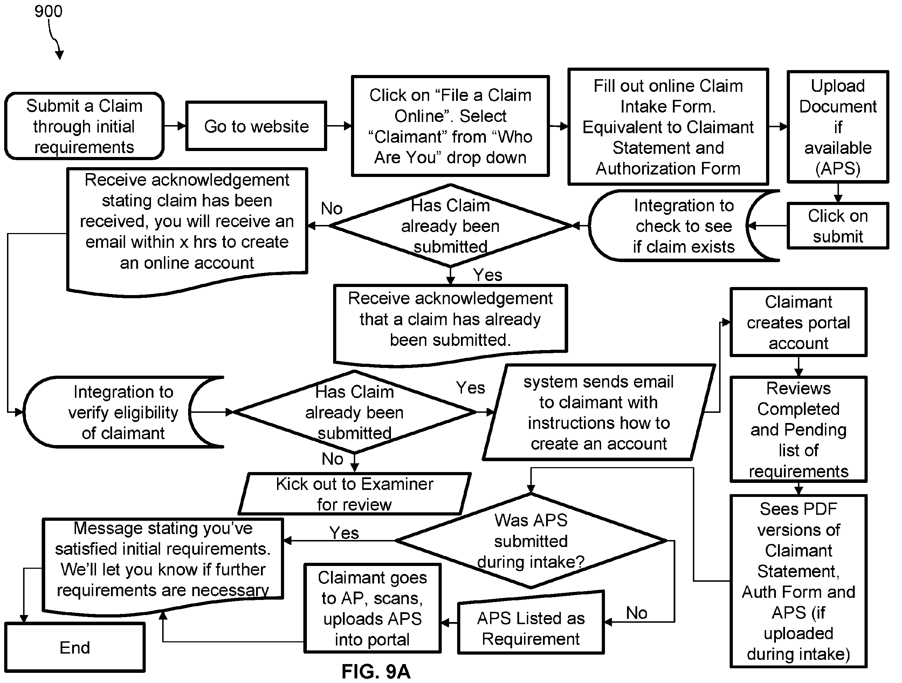

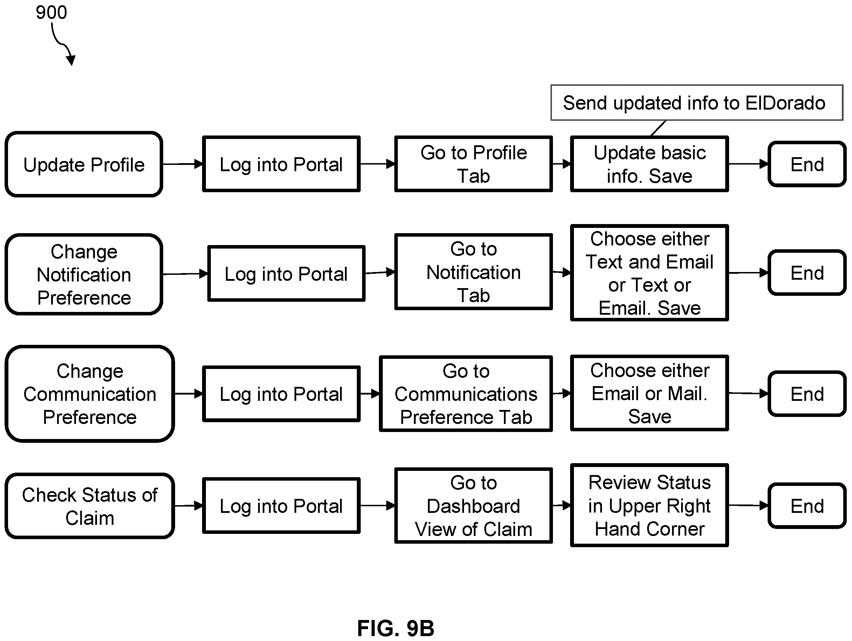

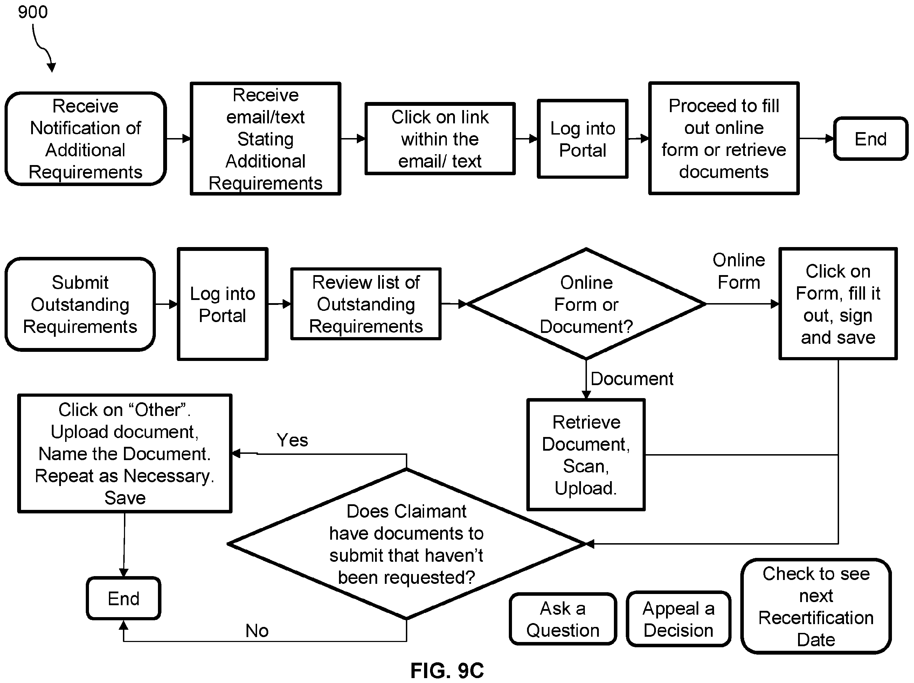

**FIGs. 9A** - **9C** illustrate an exemplary carrier claim workflow claimant portal 900 of the system 102 for processing the claim assessment, in accordance with an embodiment of the present disclosure.

In an exemplary embodiment, the carrier claim workflow claimant portal 900 outlines an online claims submission process for the one or more stakeholders by utilizing the system 102. The process for submitting the claim through initial requirements involves the claimants going to the website and selecting "Claimant" from the dropdown menu. The claimants fill out an online Claim Intake Form, which serves as the Claimant Statement and Authorization Form. The claimants also upload any available documents, such as the Attending Physician Statement (APS). Upon submission, the system 102 checks if the claim has already been filed. If not, it verifies claimant eligibility. If eligibility is confirmed, the system 102 sends instructions to create an online account. The claimants then review their requirements and, if necessary, upload the APS. Once completed, the system 102 notifies claimants that they have satisfied initial requirements. If further requirements arise, claimants are informed accordingly. This process associated with the carrier claim workflow claimant portal 900 ensures a user-friendly, step-by-step approach to submitting claims and offers clear communication about claim status and additional needs.

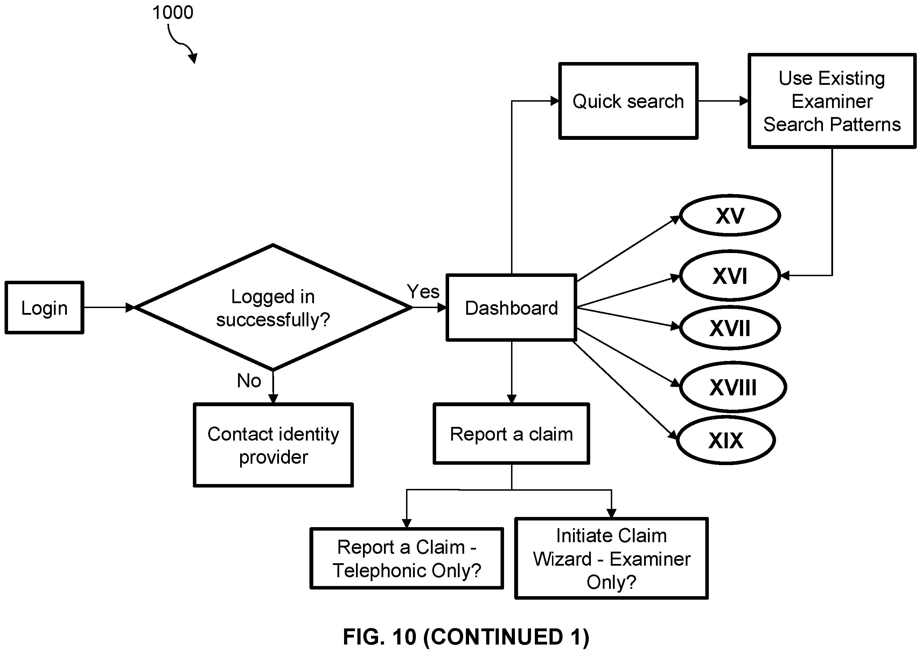

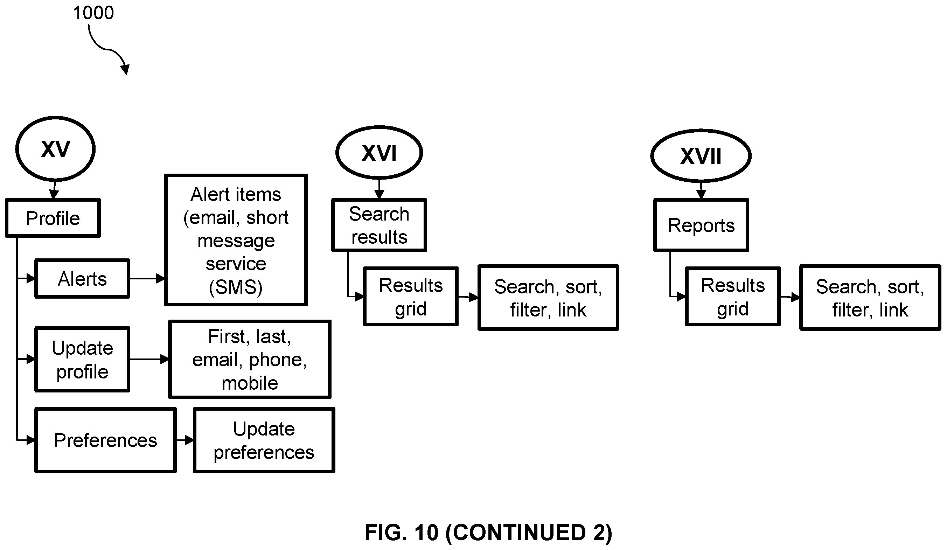

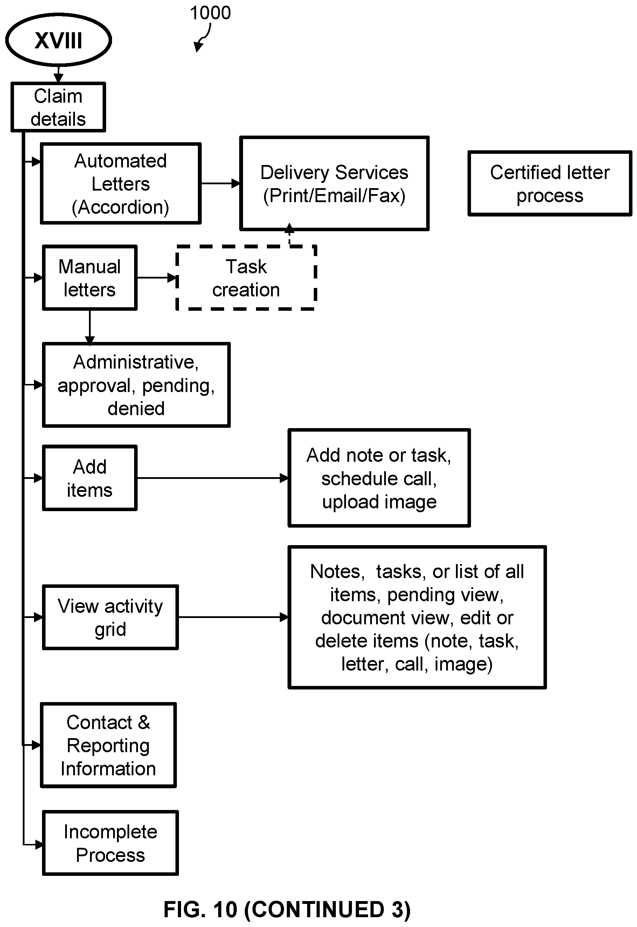

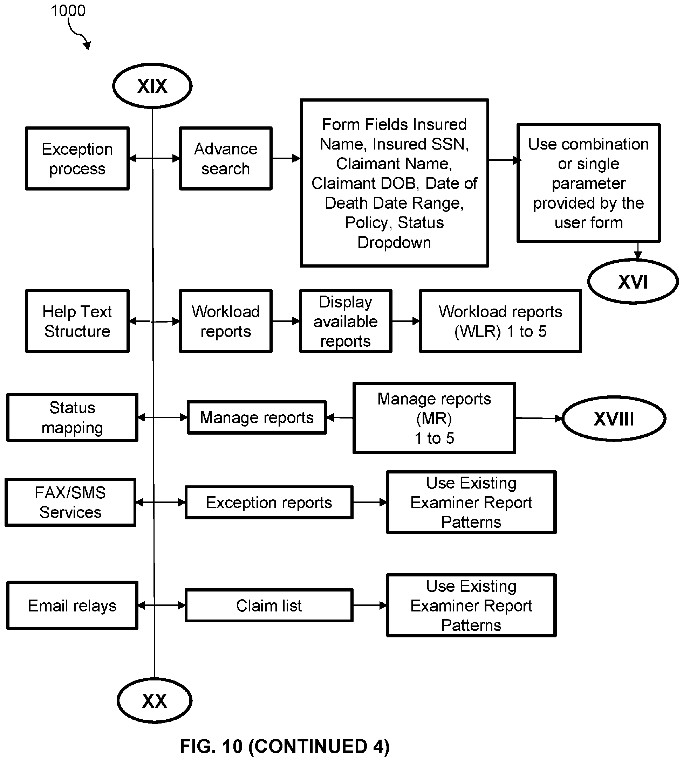

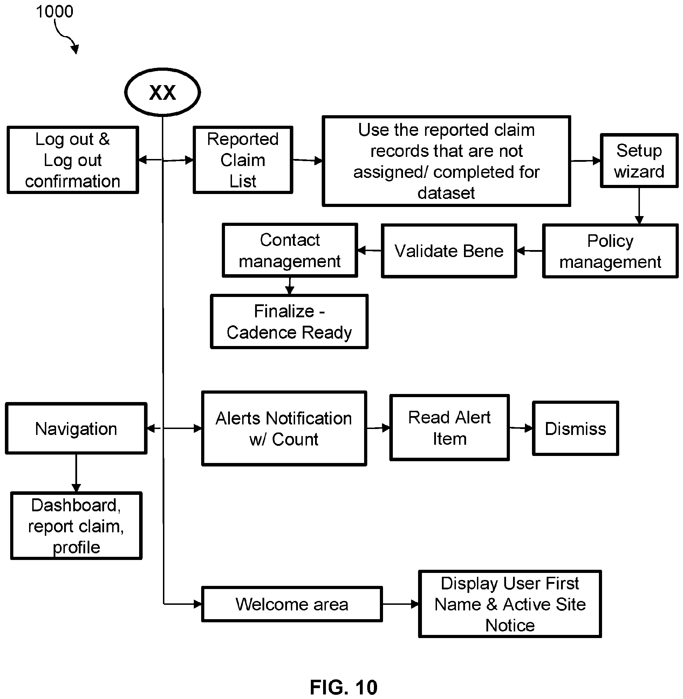

**FIG. 10** illustrates an exemplary carrier examiner product flowchart 1000 of the system 102 for processing the claim assessment, in accordance with an embodiment of the present disclosure.

In an exemplary embodiment, the system 102 involves various components, including at least one of: a dashboard, profile management, alerts, preferences, workload reports, and the like. Users log in, and if successful, they access the dashboard, where they can report the claim or update their profile and preferences. The system 102 offers a range of features, such as worklist reports, alert notifications, and quick search capabilities. The carrier examiner product flowchart 1000 allows users to manage notes, tasks, and documents related to claims. Additionally, the system supports automated letters, certified letter processes, and various reports for managers and users. Overall, the carrier examiner product flowchart 1000 provides a comprehensive platform for managing claims efficiently and effectively.

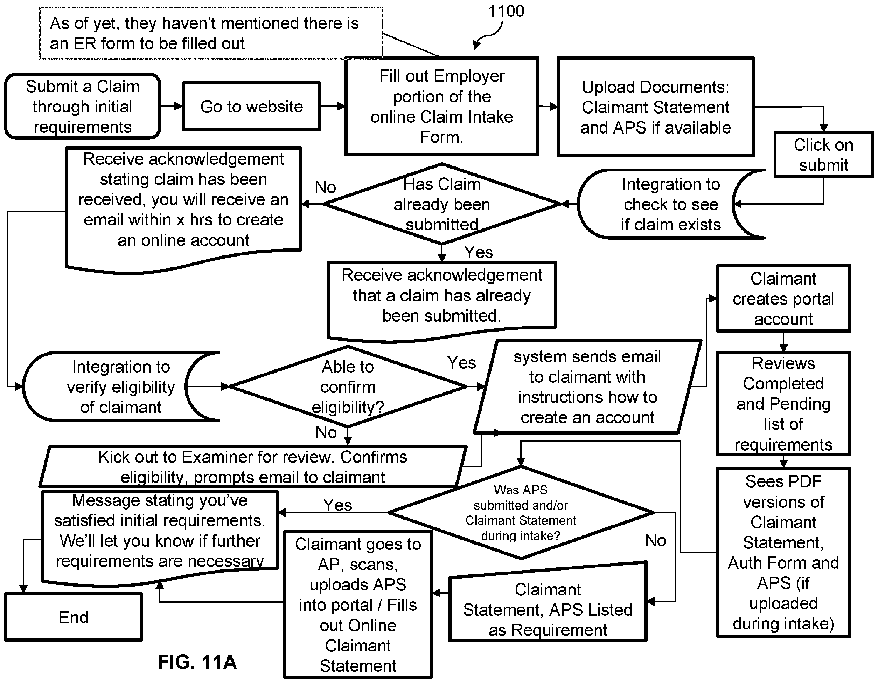

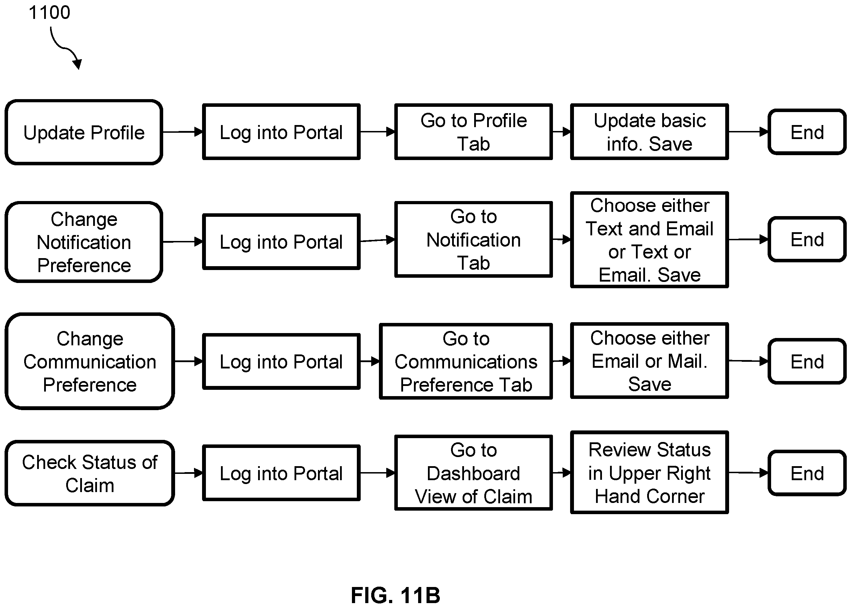

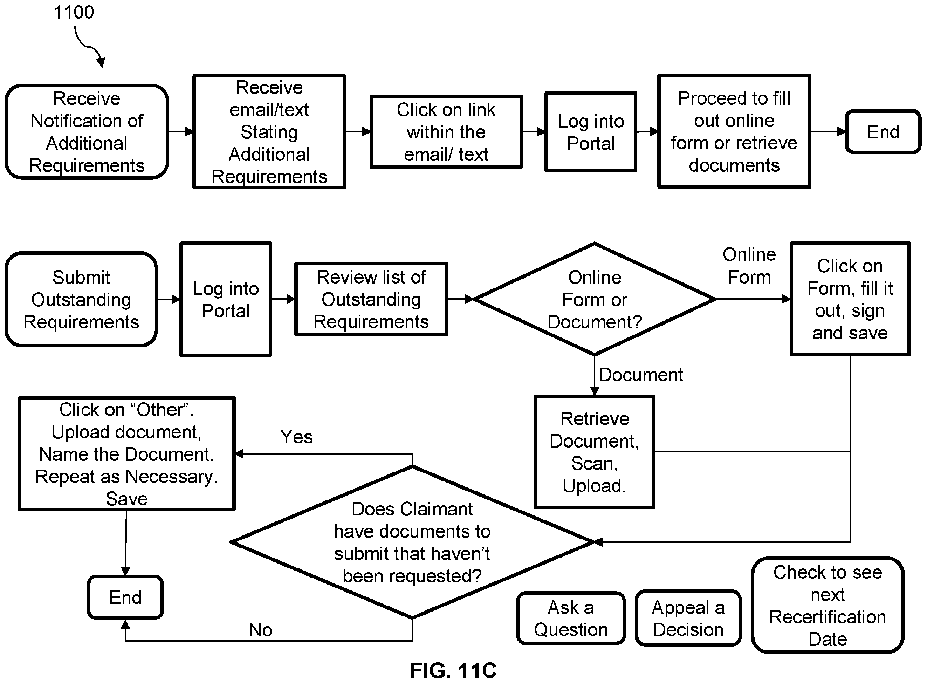

**FIGs. 11A-11C** illustrate an exemplary claim workflow of an employer portal 1100 of the system 102 for processing the claim assessment, in accordance with an embodiment of the present disclosure.

In an exemplary embodiment, the claim workflow of the employer portal 1100 involves submitting the claim through initial requirements via an employer portal account. The claimant login into the portal and fills out the online Claim Intake Form, providing documents such as the Claimant Statement and APS if available. The system 102 checks if the claim already exists, and if it does, the claimant receives an acknowledgment. If not, an acknowledgment is sent, indicating that the claim is received, and the claimant receives the alert to create an online account.

The system 102 verifies the eligibility of the claimant, and if confirmed, the alert is sent with instructions to create the account. If eligibility cannot be confirmed, the claim is kicked out for examiner review. If eligibility is confirmed, claimants create the portal account and review completed and pending requirements of the claimants, including PDF versions of necessary documents. If APS and/or Claimant Statement were submitted during intake, claimants receive a message stating they have satisfied initial requirements. If not, claimants proceed further by uploading APS or filling out the Online Claimant Statement. This process streamlines the submission of claims and ensures compliance with initial requirements.

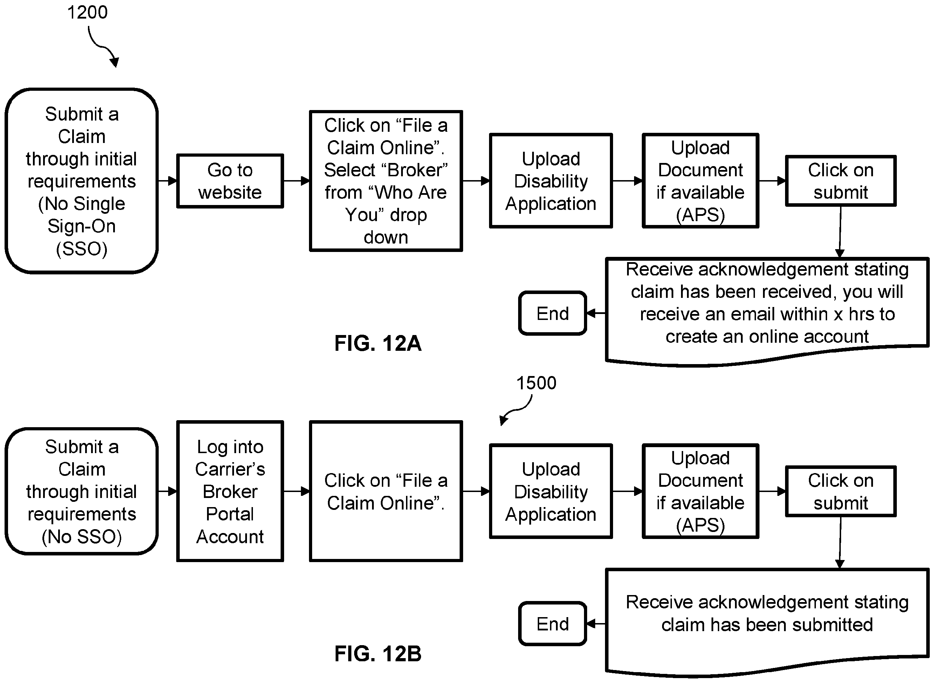

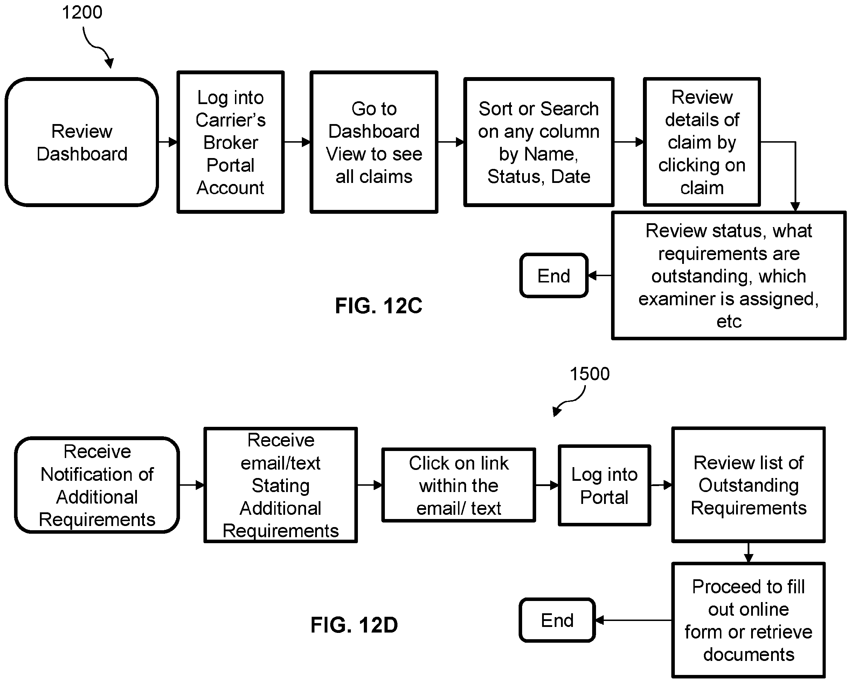

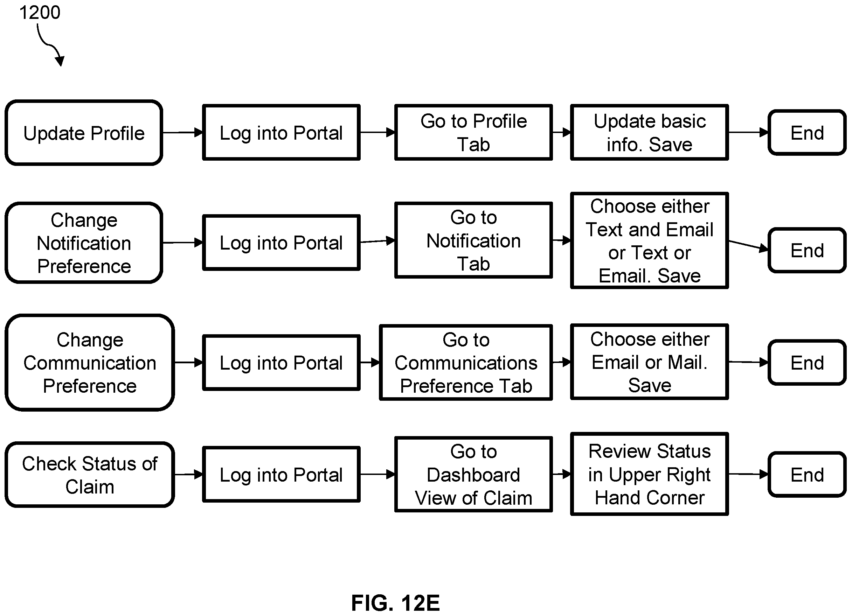

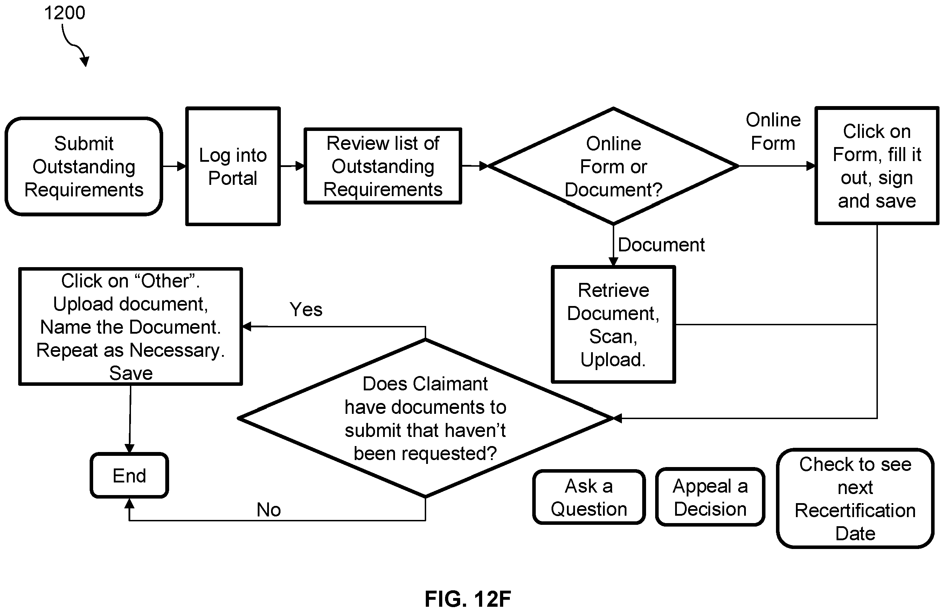

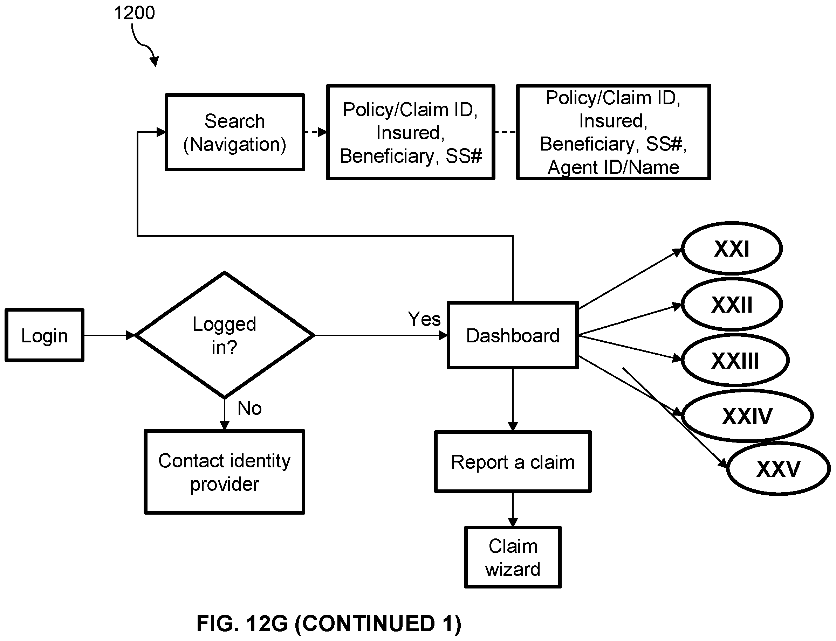

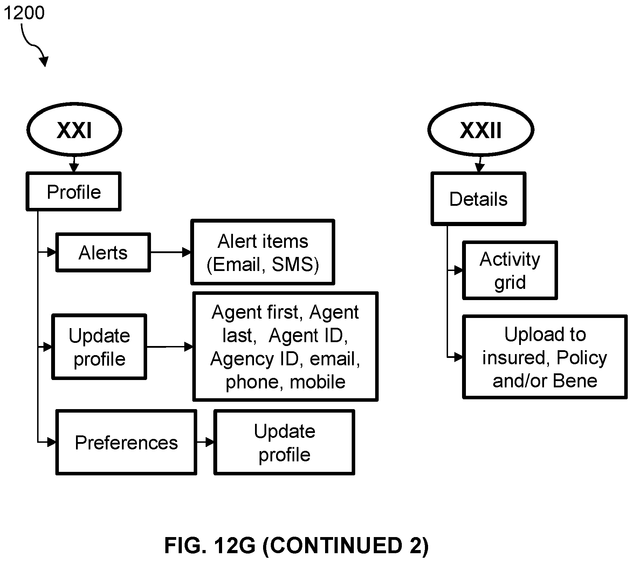

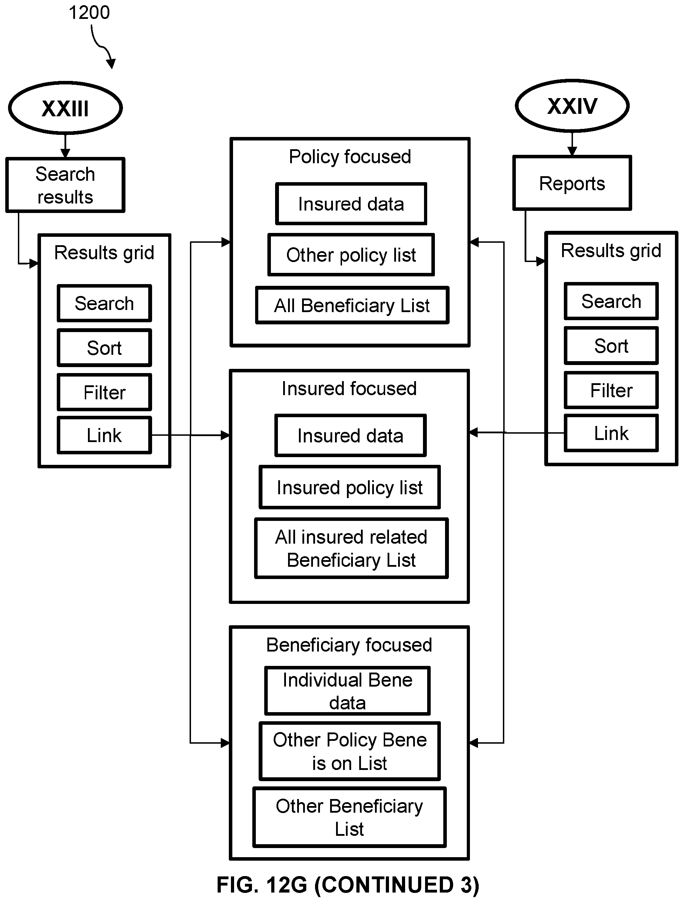

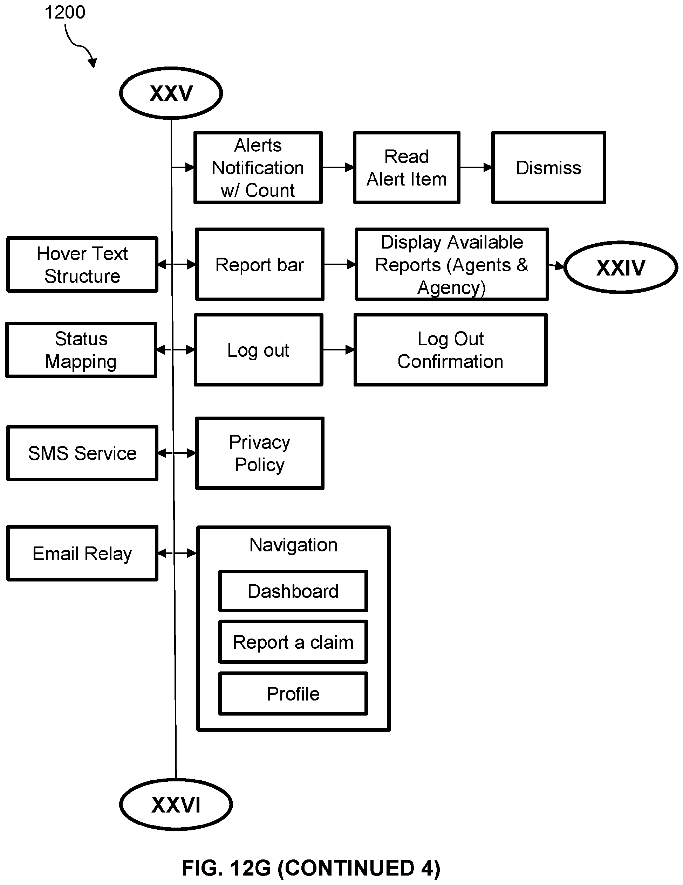

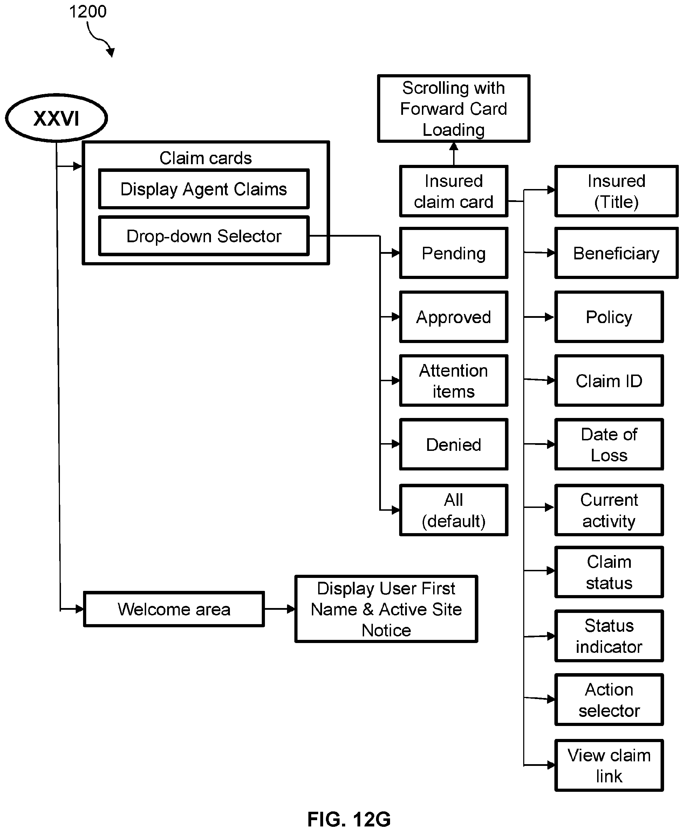

**FIG. 12A** - **12G** illustrate an exemplary carrier claim workflow of a broker portal 1200 of the system 102 for processing the claim assessment, in accordance with an embodiment of the present disclosure.

In an exemplary embodiment, the process for submitting the claim through initial requirements, both with and without Single Sign-On (SSO), involves claimants going to the website and selecting a "Broker" option. The claimants then upload a Claim Application and, if available, the APS document. After clicking "submit," they receive an acknowledgment stating that the claim is received, and the claimants receive the alert within a specified time to create the online account.

The claimants are able to review their dashboard by logging into the broker portal 1200, where claimants can view all claims, sort or search for specific information, and review claim details, including status, outstanding requirements, and the assigned examiner. For updating a profile, changing notification preferences, and communication preferences, and checking the status of the claim are other features available to claimants. The claimants also receive alerts of additional requirements via email or text, log into the portal, review the list of outstanding requirements, and proceed to fill out online forms or upload necessary documents as needed. This process provides claimants with the streamlined and efficient way to manage the claims and updated information.

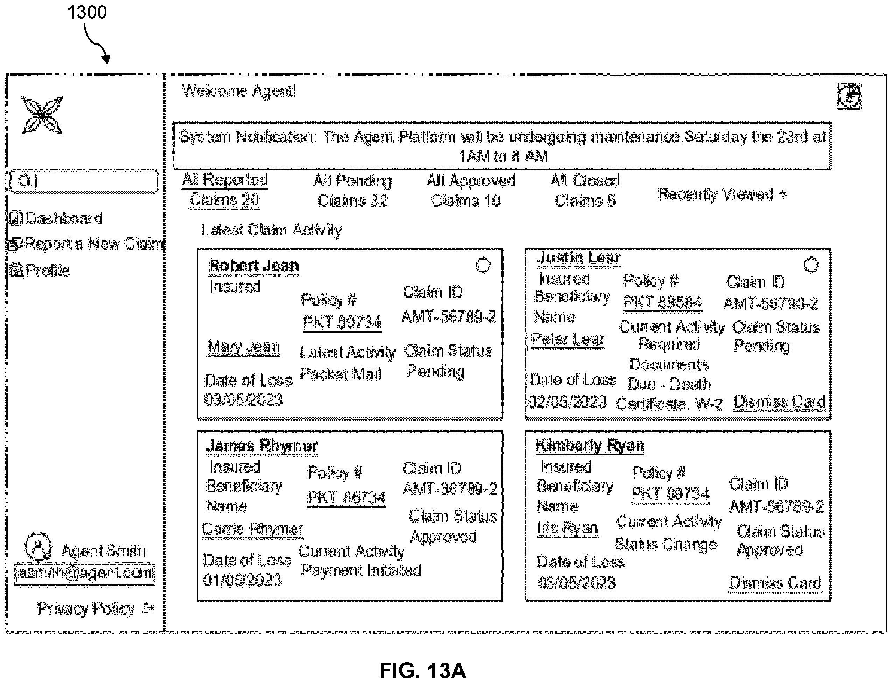

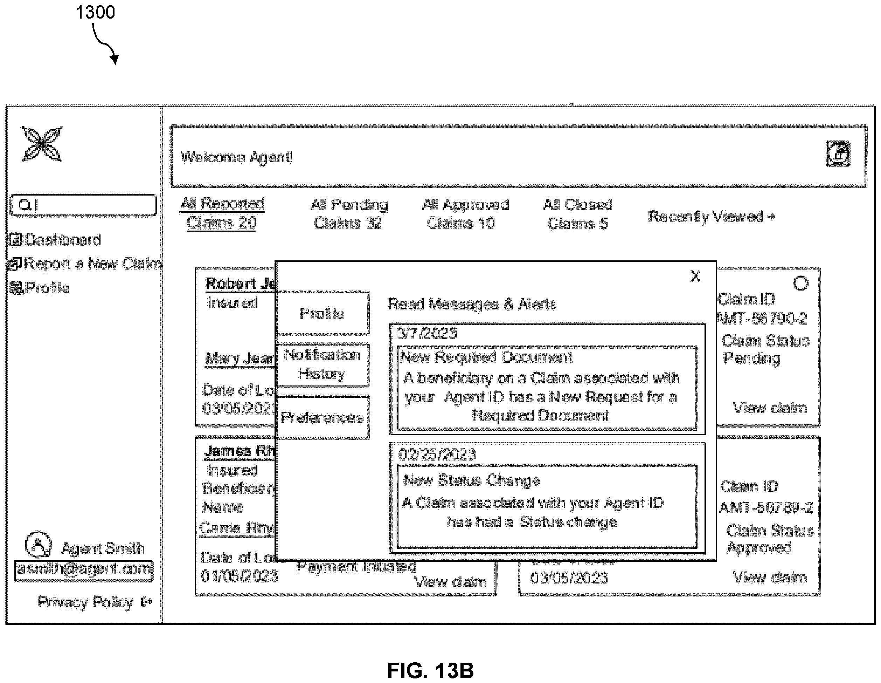

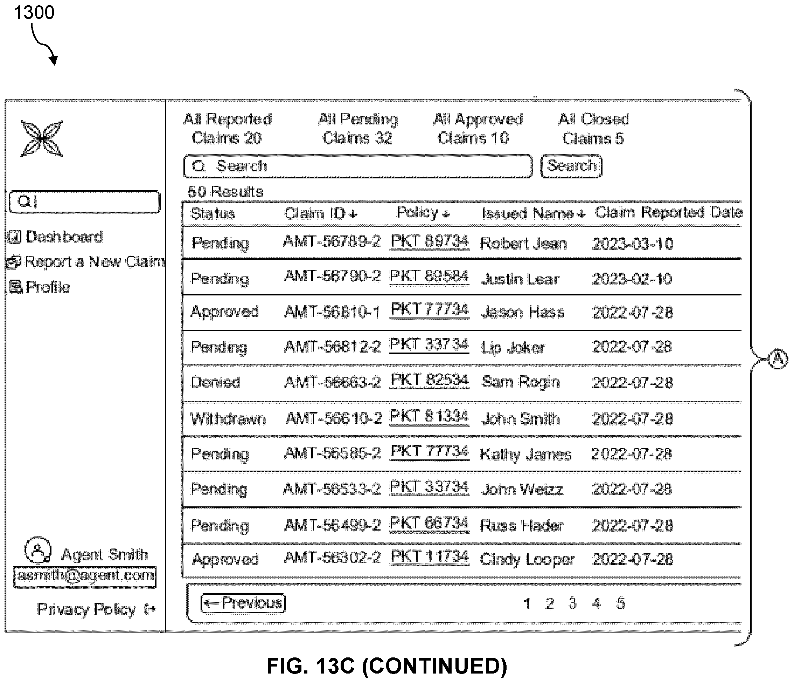

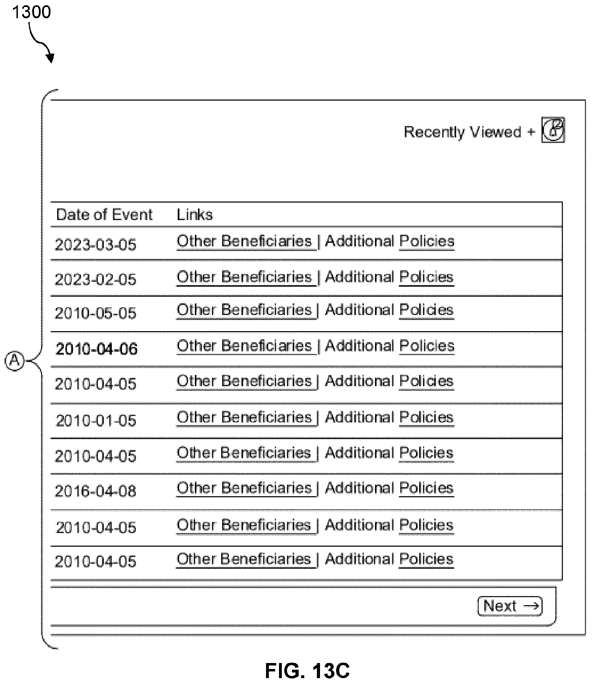

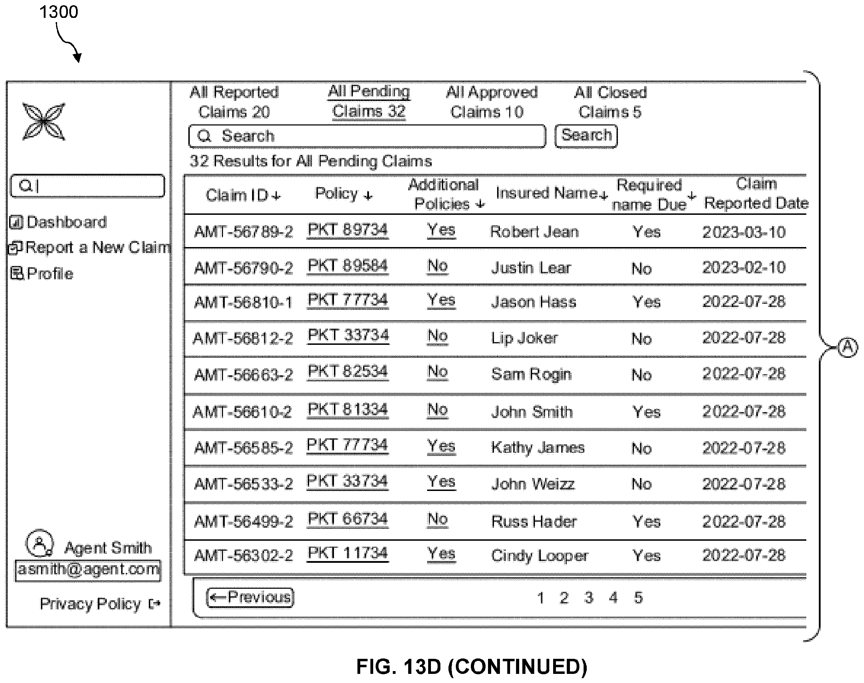

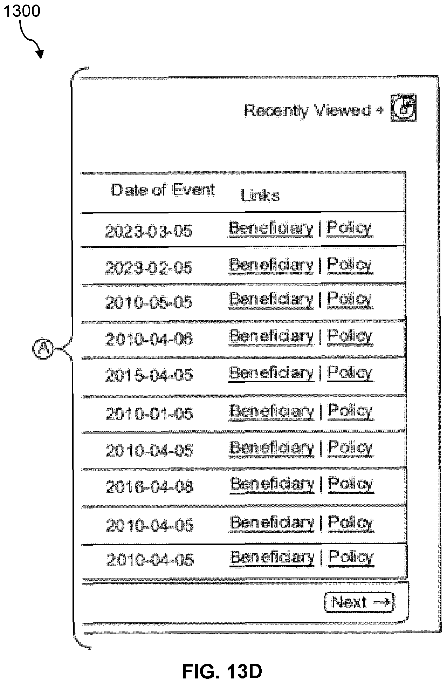

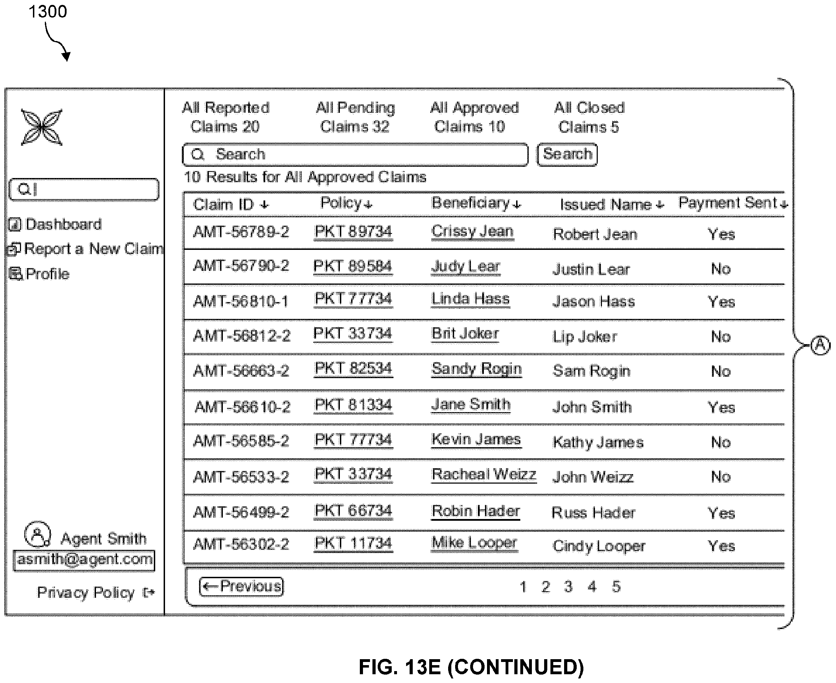

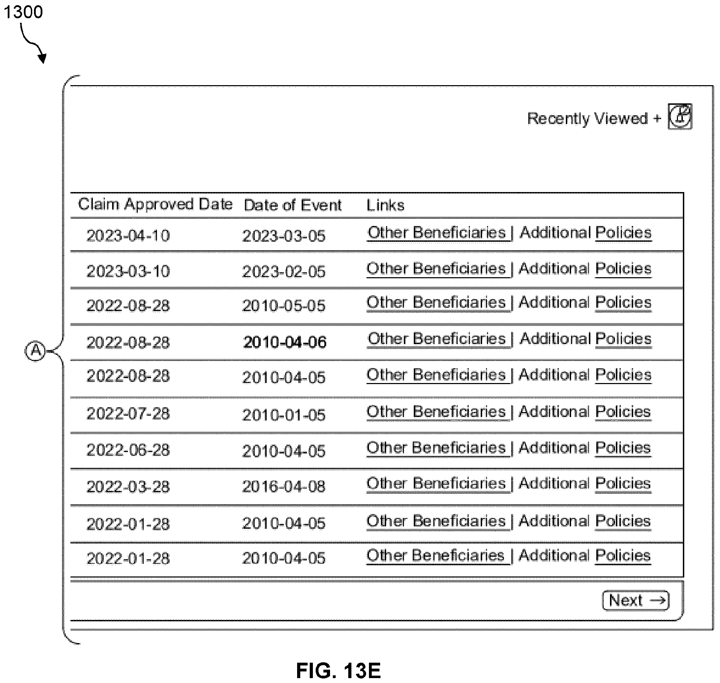

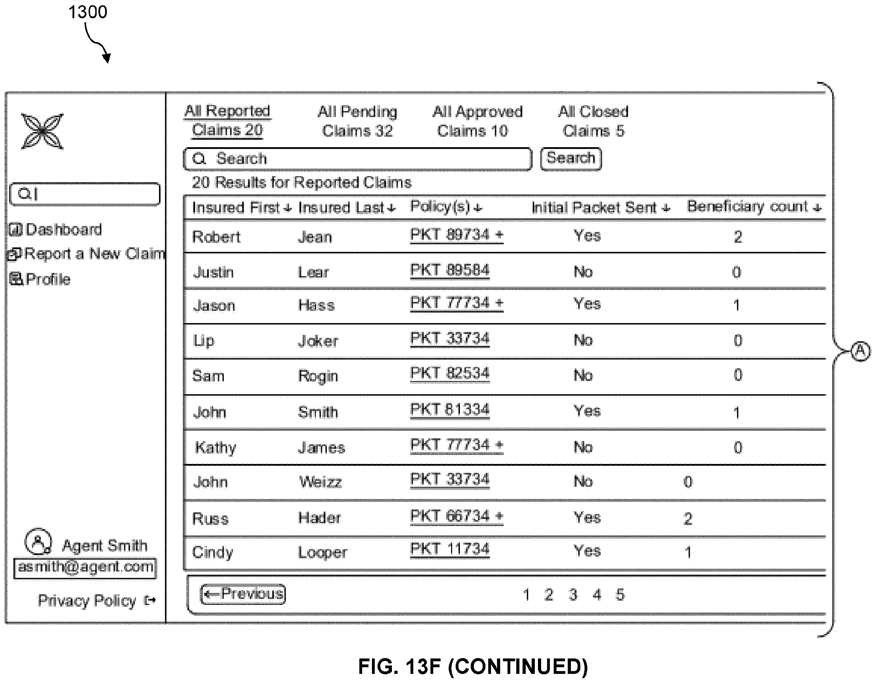

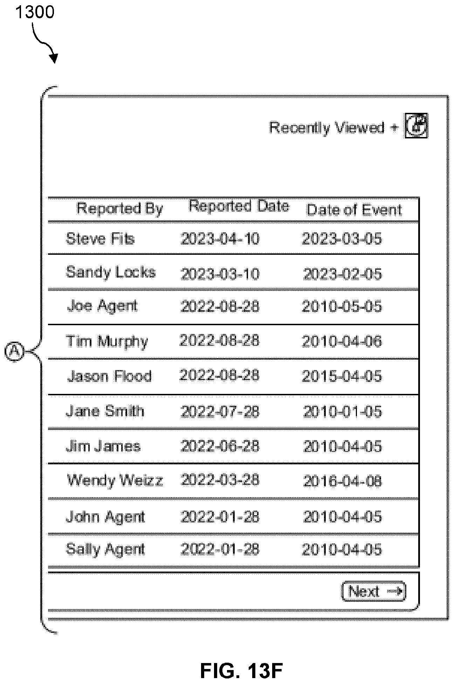

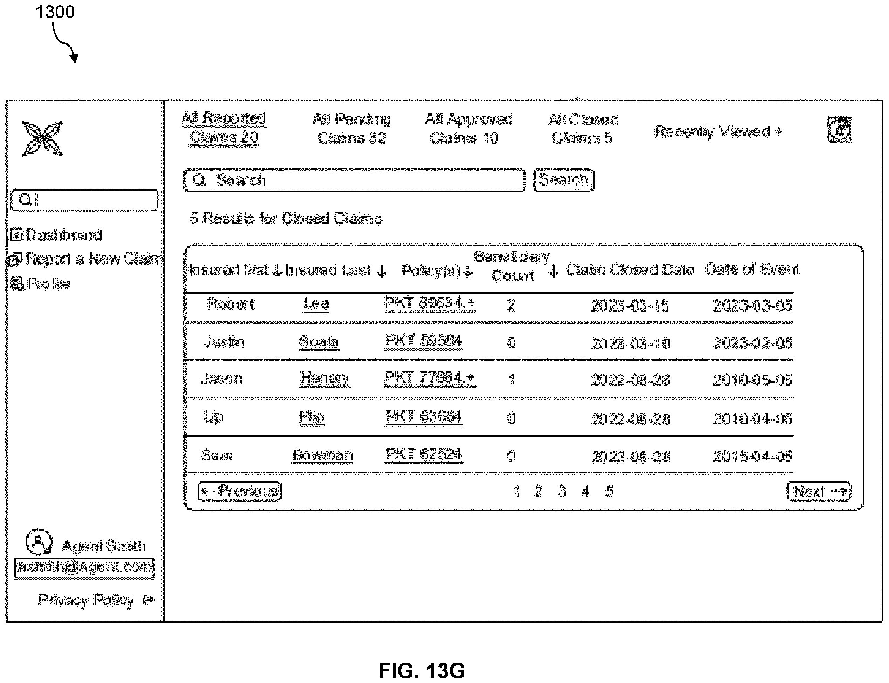

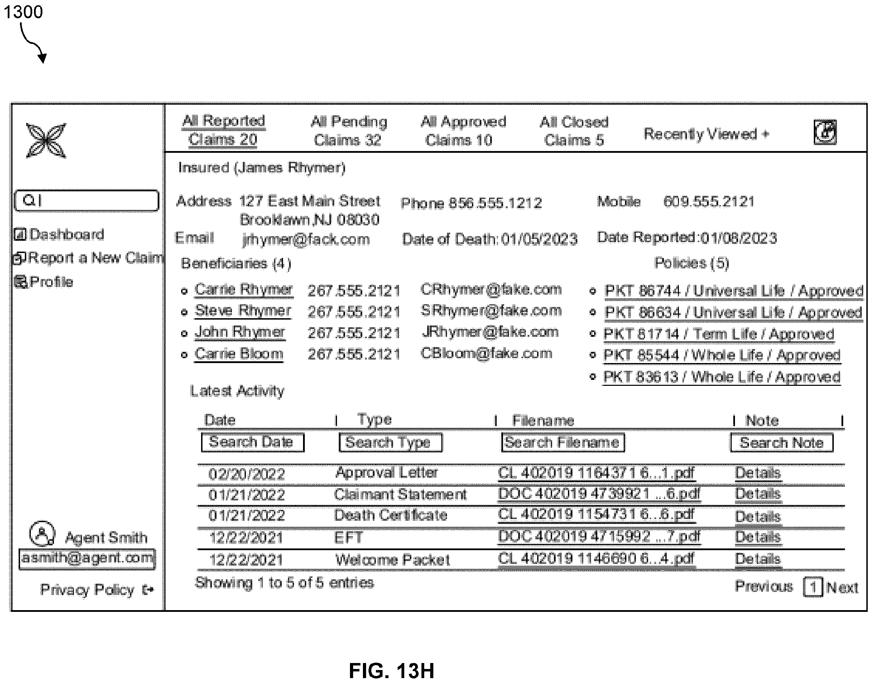

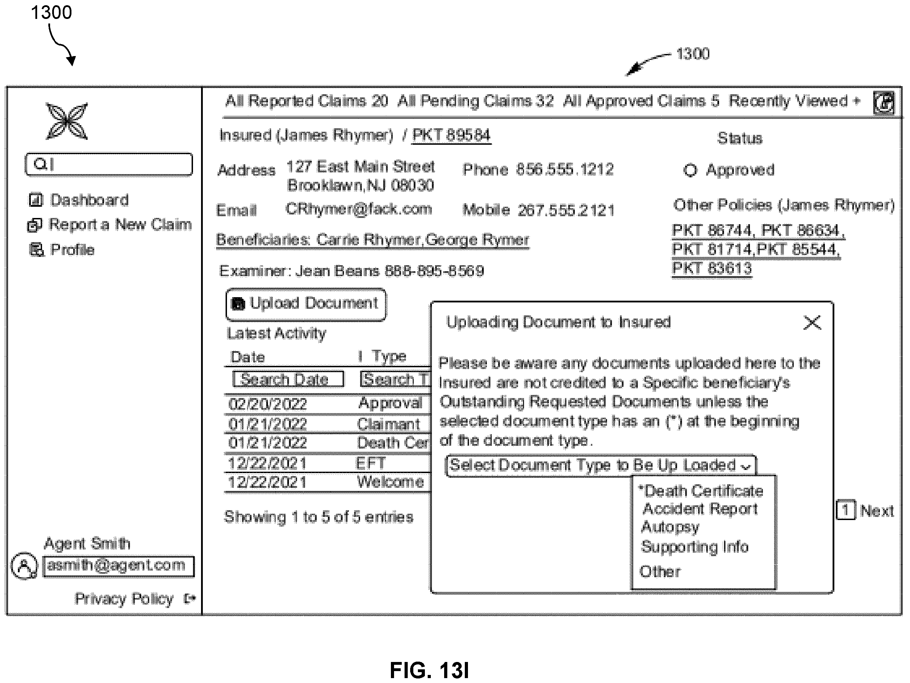

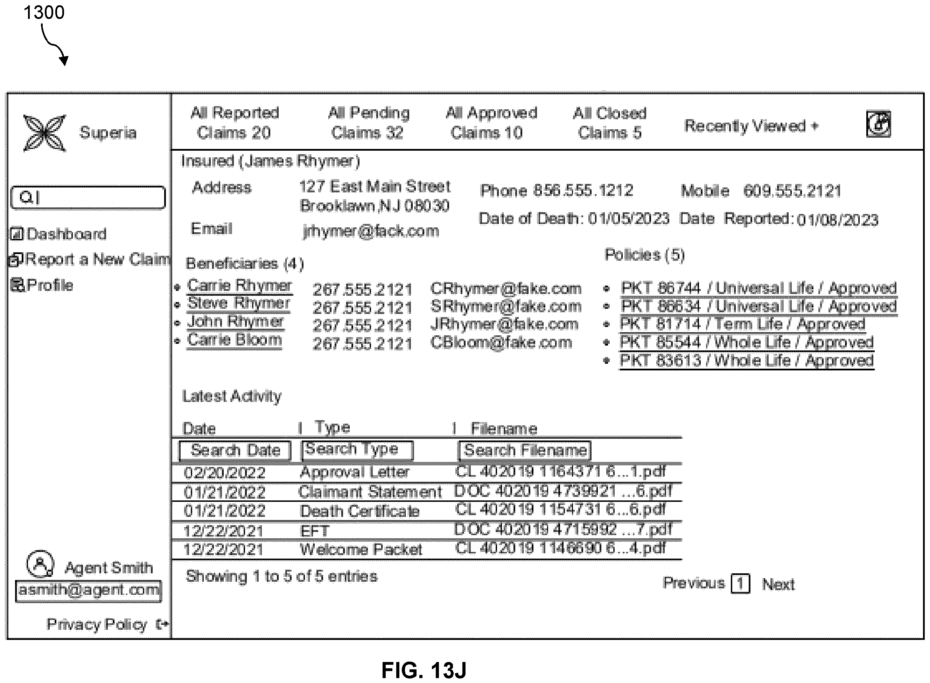

**FIG. 13A** - **13J** illustrate exemplary screenshots 1300 of the system 102 for processing the claim assessment, in accordance with an embodiment of the present disclosure.

In an exemplary embodiment, the system 102 offers a user-friendly interface allowing the one or more stakeholders, including, but not limited to, at least one of: brokers, employers, and claimants, to submit claims online. The process involves uploading necessary documents, such as Claim Applications and APS forms, and receiving immediate acknowledgments of claim receipt. The claimants log into their accounts to access the dashboard that displays all claim details, including status and assigned examiners. The claimants are able to update their profiles, change notification and communication preferences, and check claim status. Furthermore, the system 102 sends alerts for additional requirements and allows claimants to submit outstanding requirements online, enhancing the overall claim management experience. These screenshots 1300 demonstrate how the system 102 streamlines the claim process, ensuring efficiency, transparency, and ease of use for the one or more stakeholders involved in the claims management process.

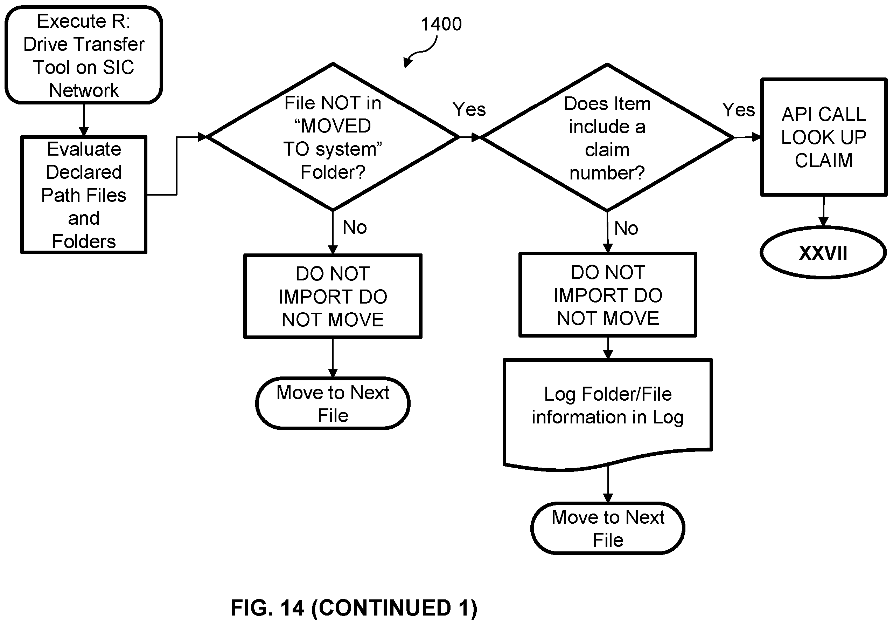

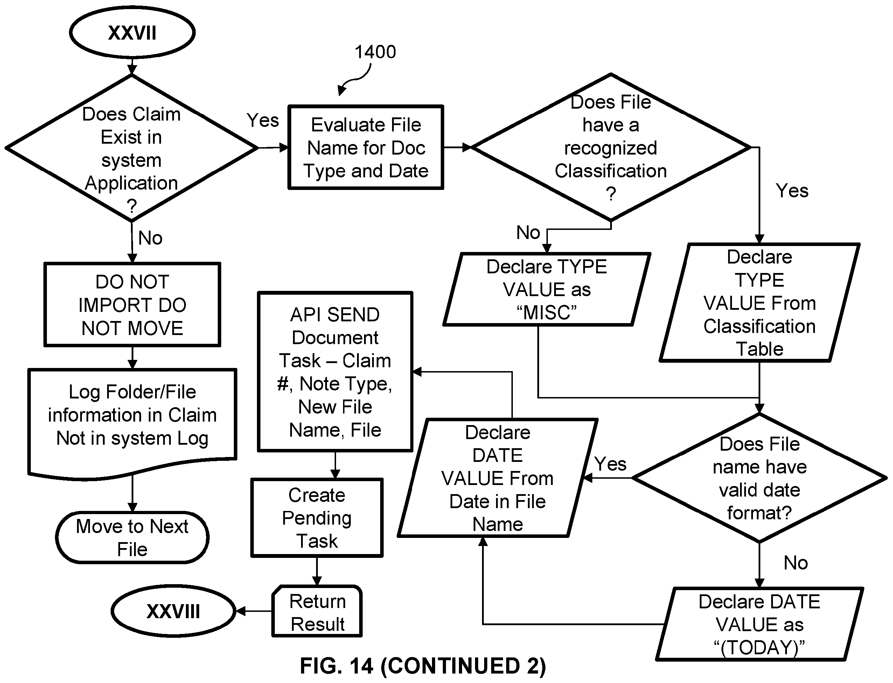

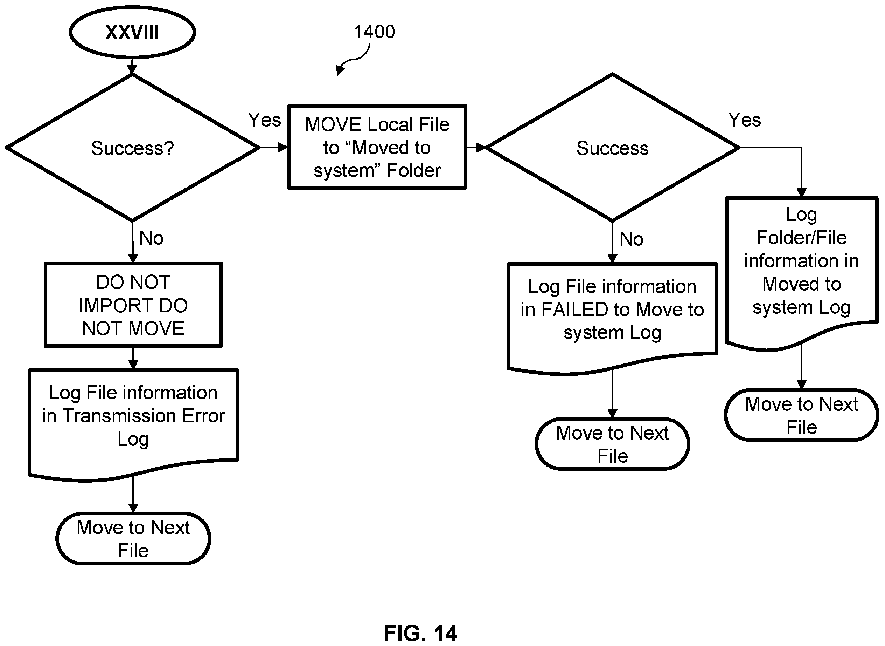

**FIG. 14** illustrates an exemplary paper to digital tool flowchart 1400 of the system 102 for processing the claim assessment, in accordance with an embodiment of the present disclosure.

In an exemplary embodiment, if the item includes the claim number, an API call is made to look up the claim in the system 102 application. If the claim exists in the system 102, the tool evaluates the file name for document type and date. If the file has a recognized classification, the type value is declared based on the classification table. If not, the system 102 is declared miscellaneous. The system 102 also checks if the file name has a valid date format, and if so, the system 102 declares the date value based on the date in the file name. After determining the document type and date, the system 102 sends an API document task with claim number, note type, new file name, and the file itself to create a pending task. If the task creation is successful, the local file is moved to the moved system folder. If the task creation is not successful, the file information is logged in a transmission error log.

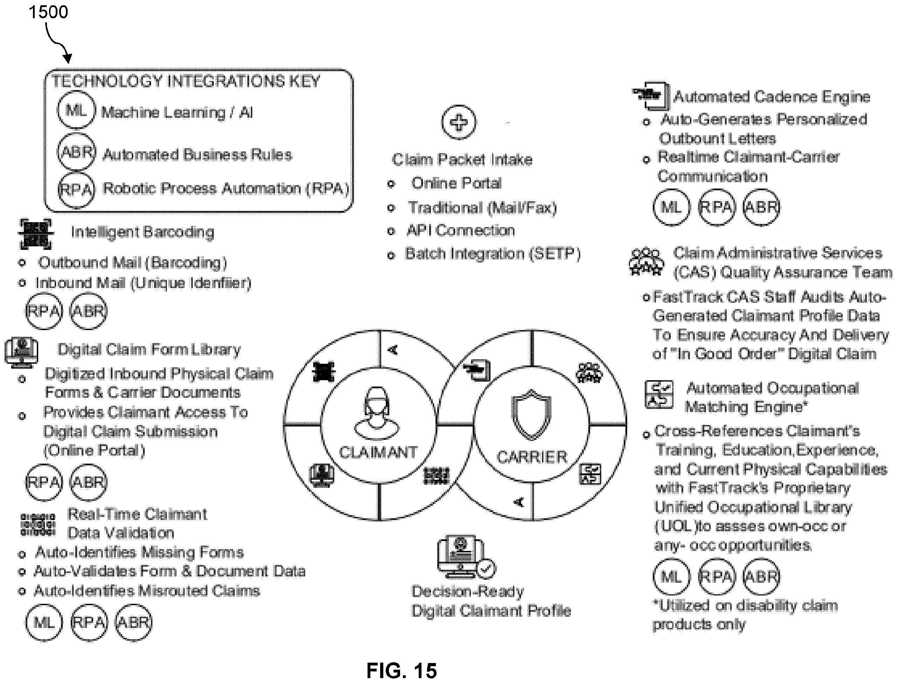

**FIG. 15** illustrates an exemplary flowchart of an automated insurance claim readiness workflow ecosystem 1500, in accordance with an embodiment of the present disclosure.

In an exemplary embodiment, the claim packet intake process is seamlessly facilitated through various channels, including online portals, traditional methods such as mail or fax, API connections, and batch integration via SFTP. The intelligent barcoding system plays a crucial role in both outbound and inbound mail, employing robotic process automation (RPA) and automated business rules (ABR) for efficient processing. The digital claim form library enhances accessibility by digitizing inbound physical claim forms and carrier documents, enabling claimants to submit claims digitally through online portals. Real-time claimant data validation employs machine learning (ML), RPA, and ABR to auto-identify missing forms, validate data, and identify misrouted claims. The automated cadence engine ensures personalized outbound communication, utilizing ML, RPA, and ABR. The Claim Administrative Services (CAS) Quality Assurance Team within system conducts audits on auto-generated claimant profile data, ensuring accuracy and delivering "in Good Order" digital claims. Lastly, the Automated Occupational Matching Engine cross-references claimant qualifications with system's Proprietary Unified Occupational Library (UOL), leveraging ML, RPA, and ABR to assess own-occupation (OCC) or any-occupation (AO) opportunities.

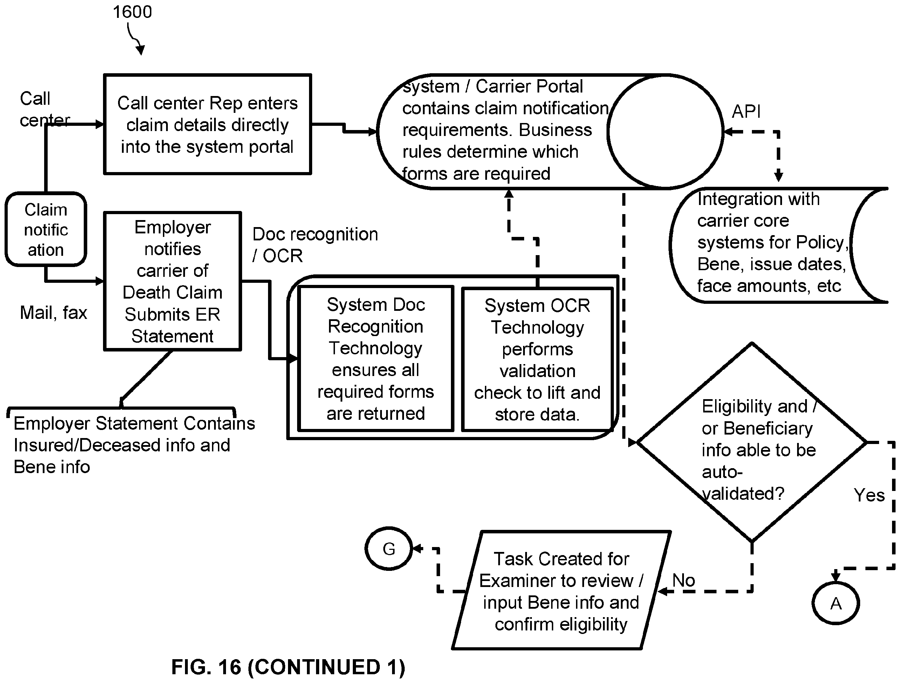

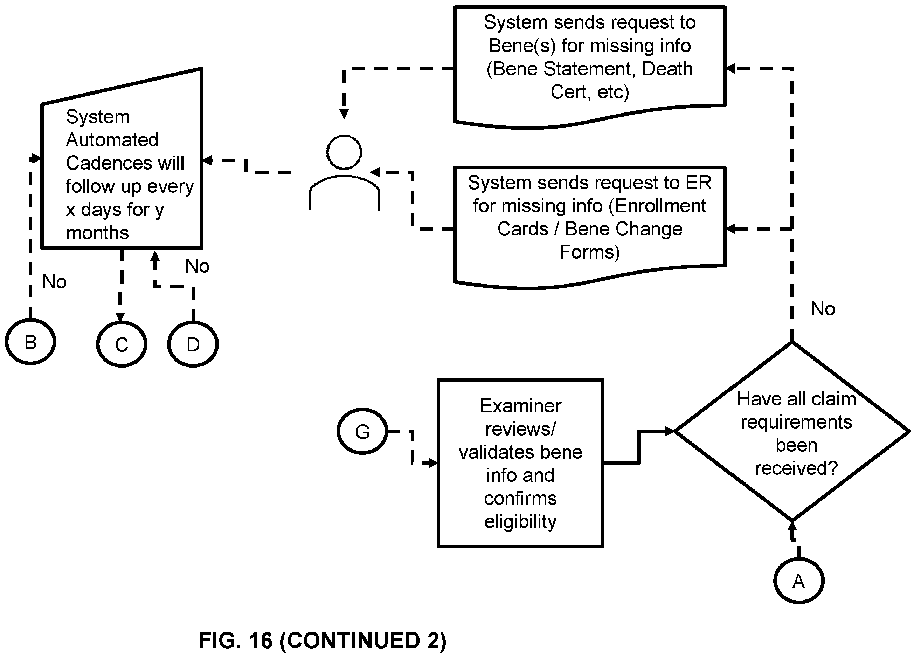

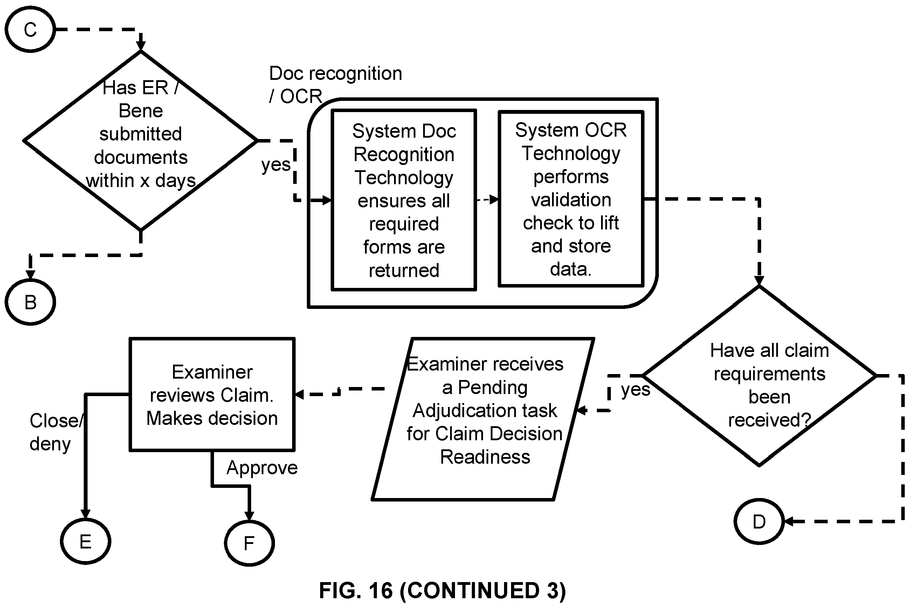

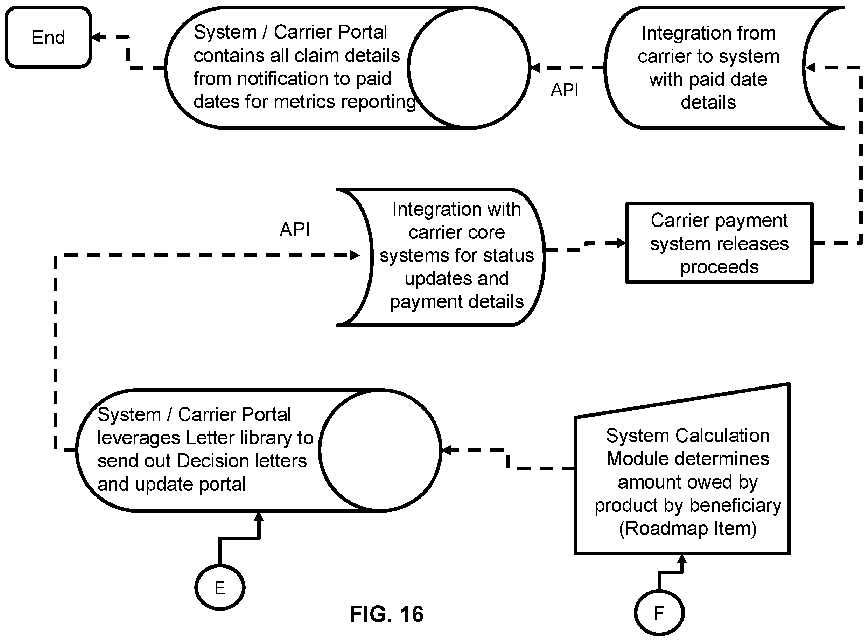

**FIG. 16** illustrates an exemplary flowchart 1600 of the one or more claims (opt-out) processed by the computer-implemented system 102, in accordance with an embodiment of the present disclosure.

In an exemplary embodiment, the system 102 utilizes a document recognition technology ensuring all the required forms are returned when the one or more first users (e.g., the employer) notify carrier of death claim submitting ER statements. The system 102 utilizes OCR technology to perform validation check to lift and store data. The system 102 checks eligibility or beneficiary information that is able to be auto-validated. If yes, the system 102 checks whether all claim requirements been received. If not, the system 102 creates tasks for the examiner to review or input beneficiary and confirm eligibility. If all the claim requirements are not received, then the system 102 sends a request to beneficiary for missing information (e.g., beneficiary information, death certificate, and the like).The system 102 further sends a request to the employer for missing information (e.g., enrollment cards, beneficiary change forms, and the like).

In an embodiment, the system 102 performs automated follow up every 'x' day for every `y' months. Further, the examiner receives a pending adjudication task for claim decision readiness. The examiner receives the claim and makes their decision. The system 102 further leverages the letter library to send out decision letters and updates the portal. The system 102 is further integrated with the carrier's core systems for status updates and payment details. The carrier's payment system releases proceeds. Finally, the system 102 includes all claim details from notification to paid dates for metrics reporting.

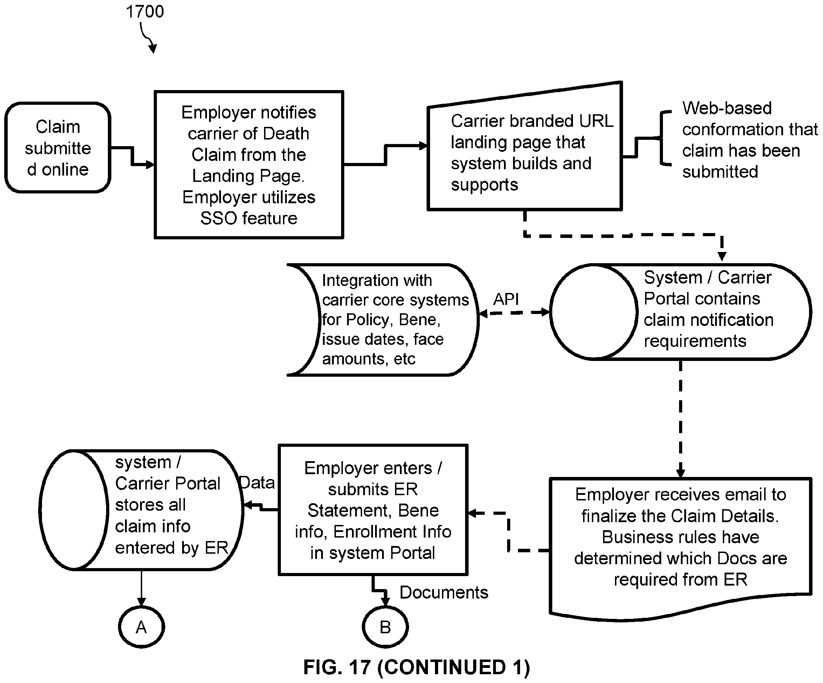

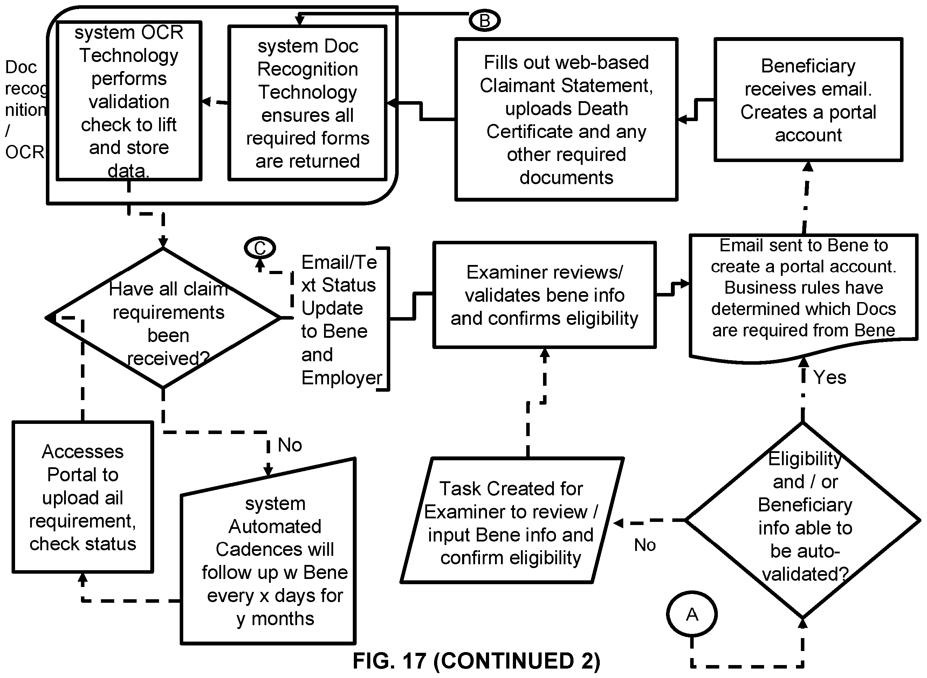

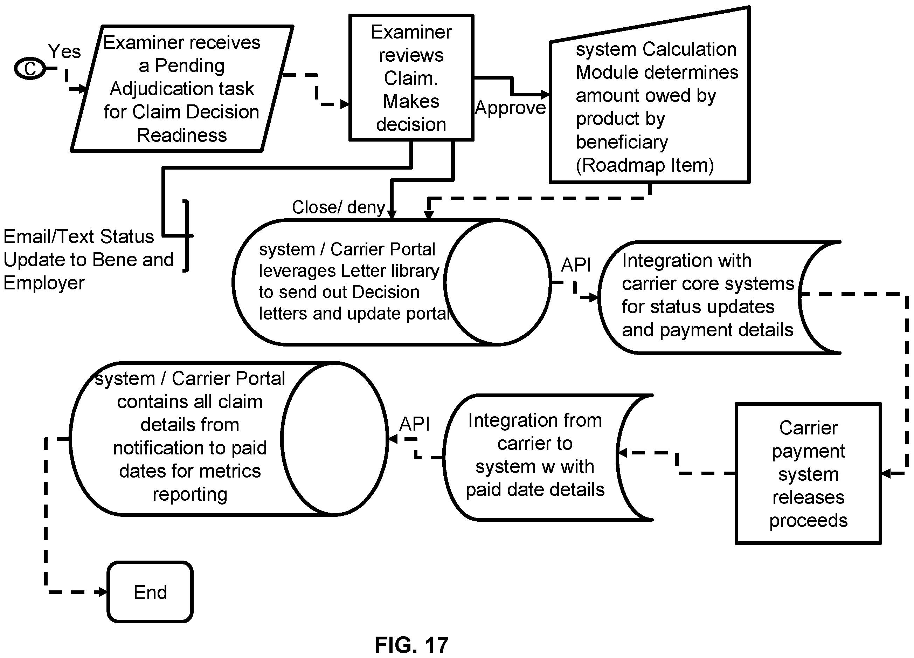

**FIG. 17** illustrates an exemplary flowchart 1700 of the one or more claims (opt-in) processed by the computer-implemented system 102, in accordance with an embodiment of the present disclosure.

In an exemplary embodiment, the system 102 is configured to build and support a URL landing page that is branded by the carrier when the employer notifies the carrier of death claim from the landing page, by utilizing a SSO feature. The system 102 includes claim notification requirements. The system 102 enables the employer to receive email to finalize the claim details. The business rules determine which documents are required from the employer. The employer enters employer statement, beneficiary information, enrollment information, in the system portal. The system portal further stores all claim information entered by the employer. The system 102 checks whether eligibility or beneficiary information is able to be auto-validated. If not, the system 102 creates tasks for the examiner to review or input beneficiary and confirm eligibility. If yes, the email is sent to the beneficiary to create a portal account. The business rules determine which documents are required from the beneficiary. The beneficiary receives emails and creates a portal account. Further, the beneficiary fills out web-based claimant settlement and uploads death certificate and any other required documents.

The system 102 utilizes a document recognition technology ensuring all the required forms are returned when the one or more first users (e.g., the employer) notify carrier of death claim submitting ER statements. The system 102 utilizes OCR technology to perform validation check to lift and store data. The system 102 checks whether all claim requirements been received. If yes, the examiner receives a pending adjudication task for claim decision readiness. The examiner receives claim and makes decisions. If not, the system 102 performs automated follow up every 'x' day for every `y' months. Further, the system 102 determines an amount owed by product by the beneficiary. The system 102 is further integrated with the carrier's core systems for status updates and payment details. The carrier's payment system releases proceeds. Finally, the system 102 includes all claim details from notification to paid dates for metrics reporting.

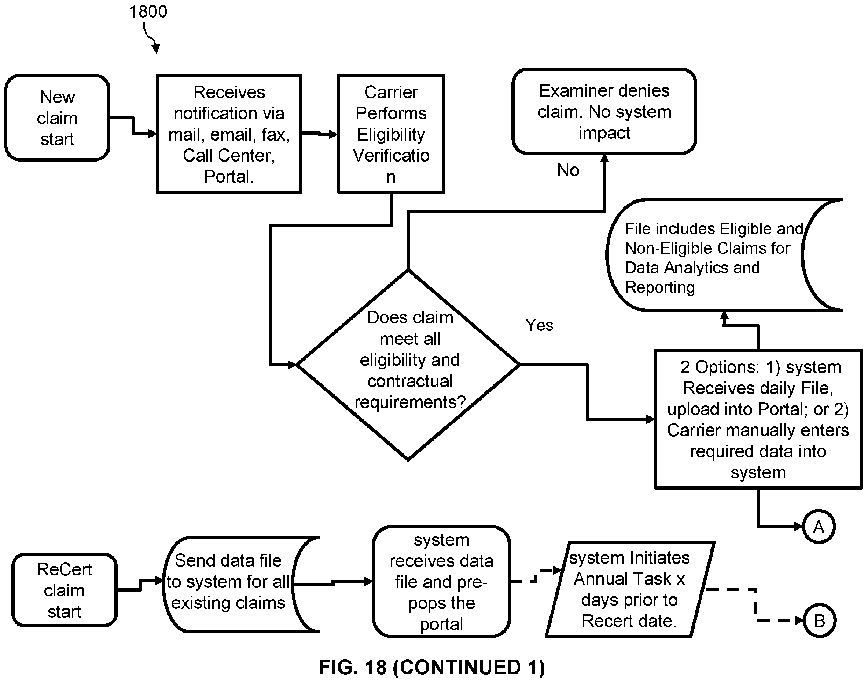

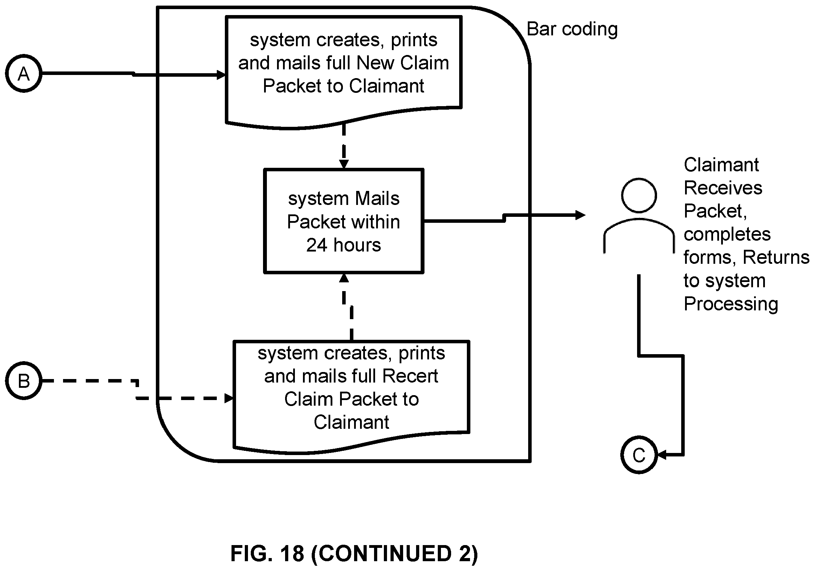

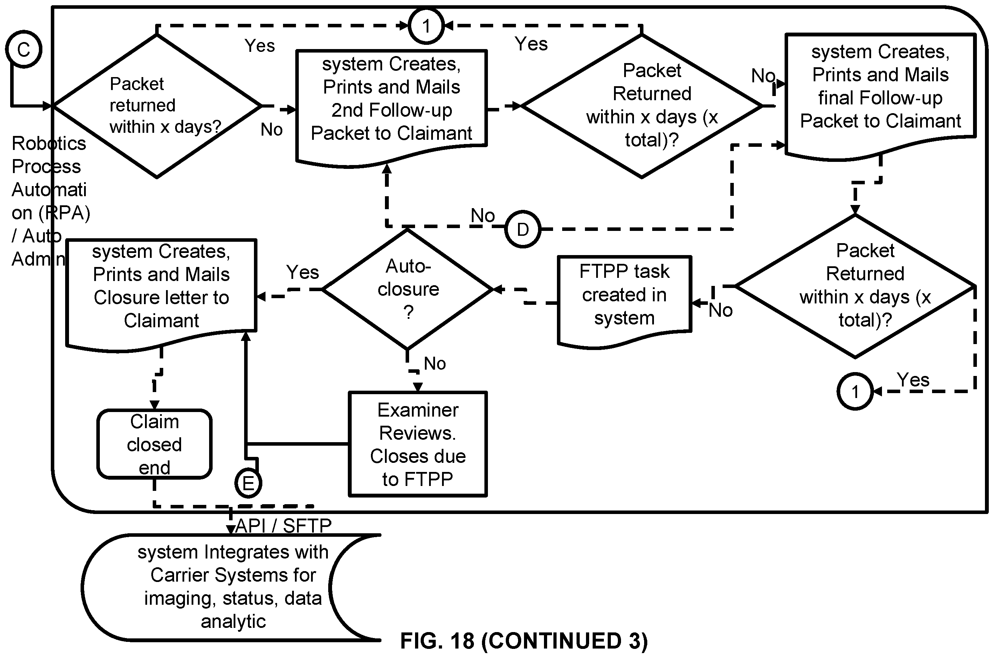

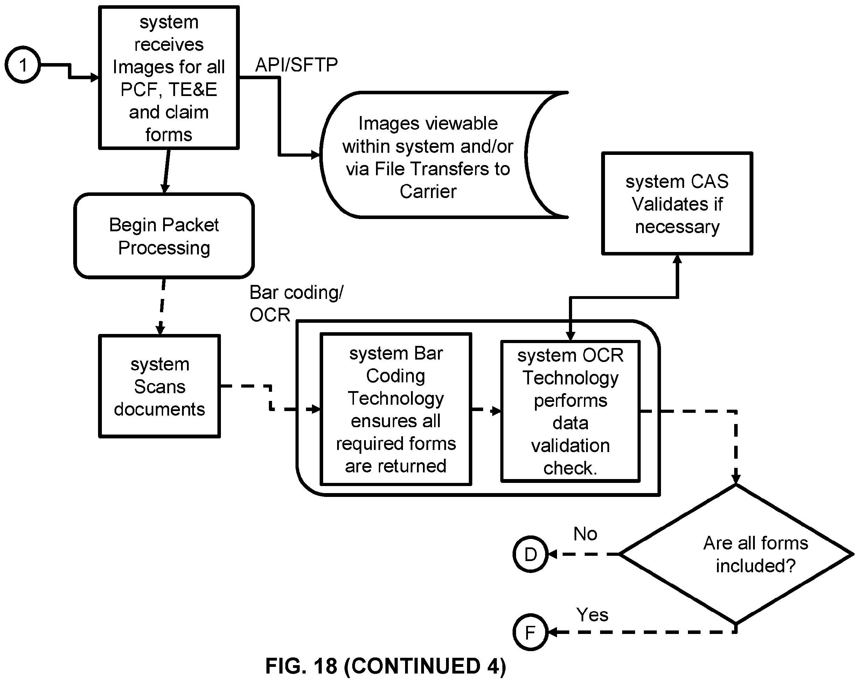

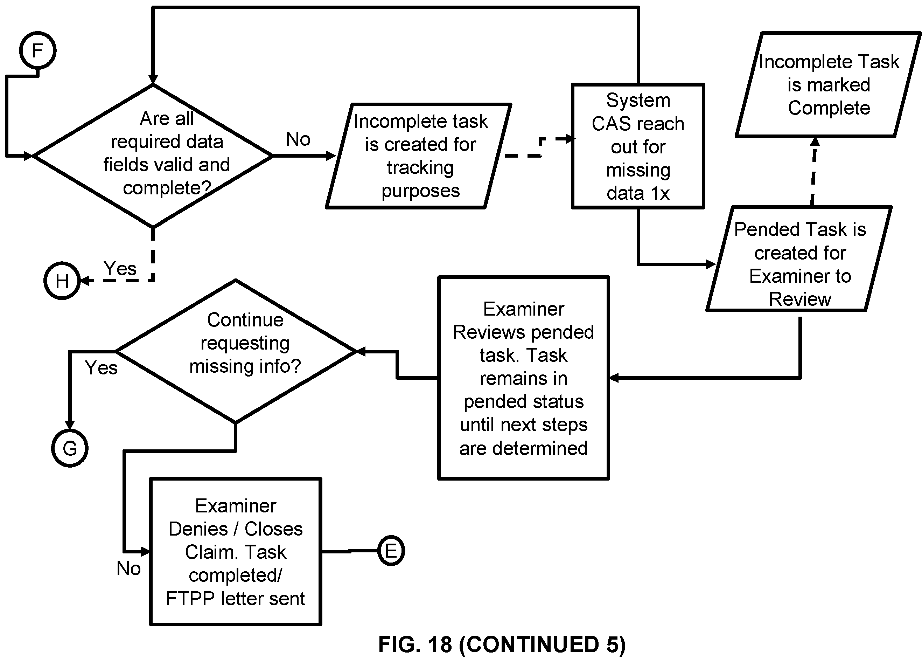

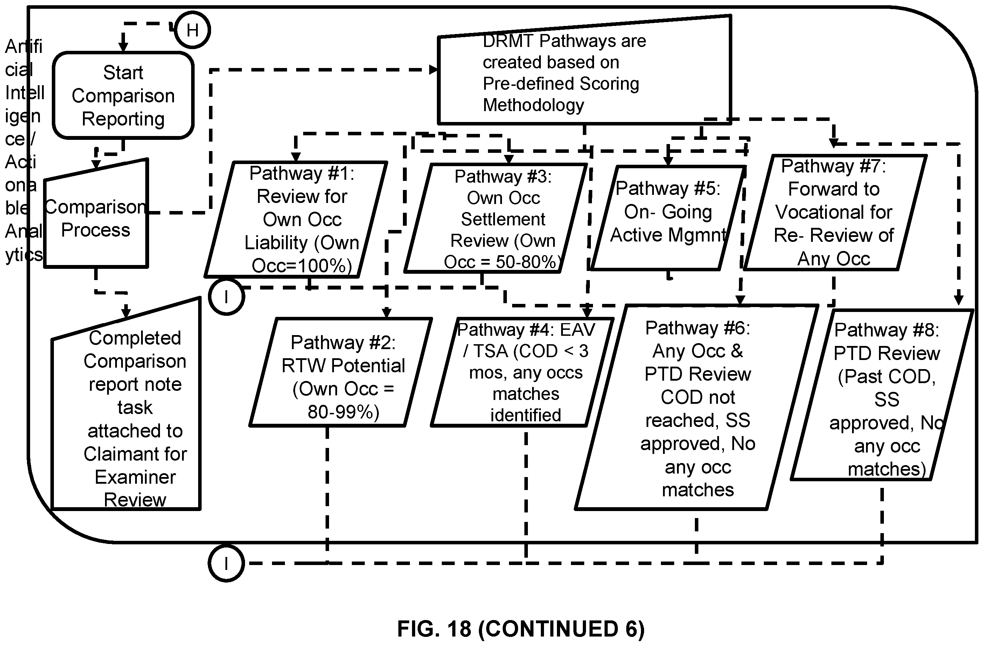

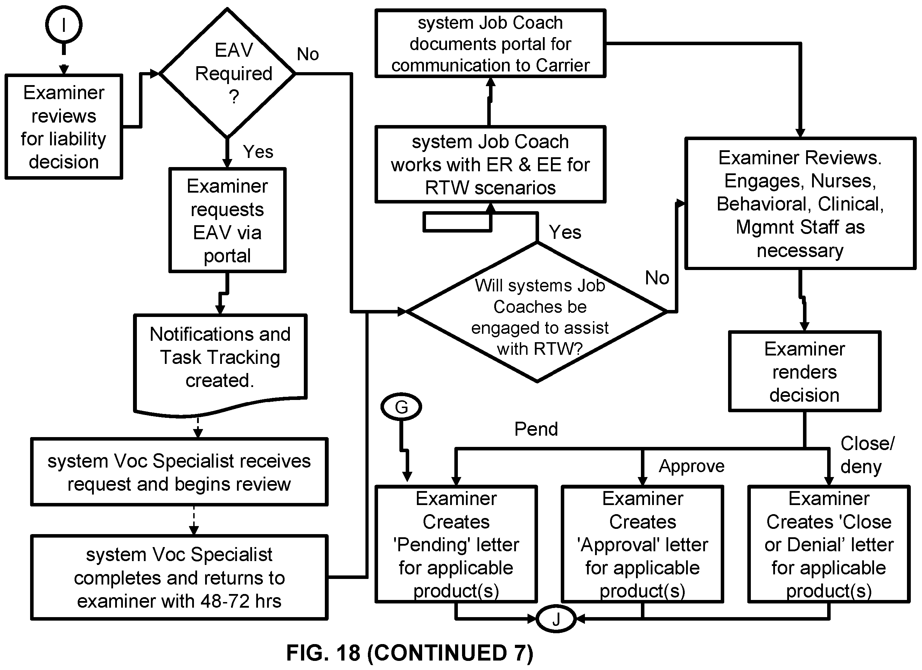

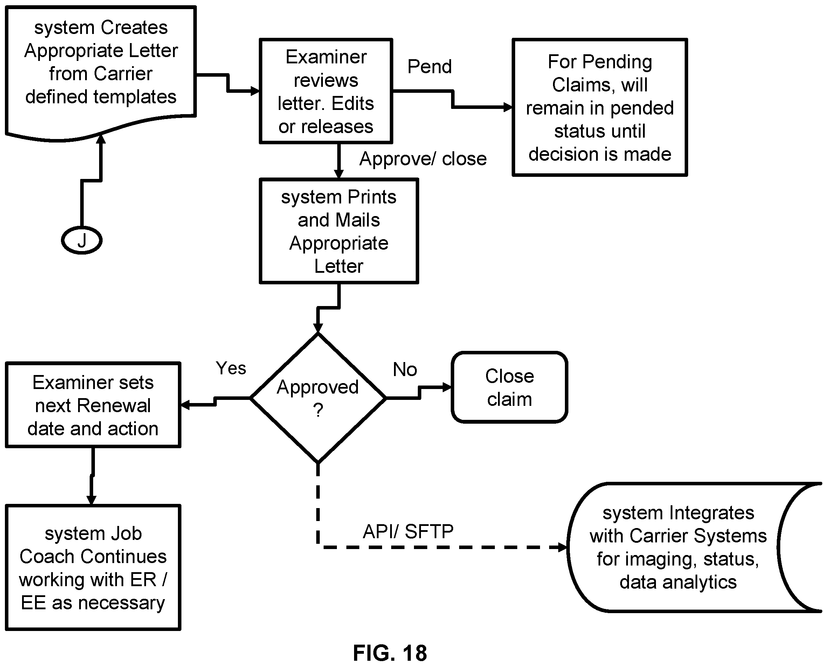

**FIG. 18** illustrates an exemplary flowchart 1800 of the one or more claims (LW workflow) processed by the computer-implemented system 102, in accordance with an embodiment of the present disclosure. The system 102 (i.e., the computer-implemented system 102) is configured to create, print and mail full new claim packet to the claimant, using a barcoding system. The system 102 further mails the packet within 24 hours to the claimant. Further, the system 102 creates, prints, and mails full recert claim packet to claimant. The system 102 further initiates annual tasks x days prior to recert date and the system 102 receives data file and pre-props the portal. The system 102 further performs robotics process automation for closing the claims.

The system 102 receives images for all PCF, TE&E and claim forms, and begins packet processing. The system 102 further scans the documents. The system 102 utilizes a bar coding technology ensuring all the required forms are returned. The system 102 utilizes OCR technology to perform validation check to lift and store data. The system 102 further checks whether all the forms are included. If yes, the system 102 checks whether all the required data fields are valid and completed. If yes, the system 102 starts comparison processing and sends the completed comparison report note task attached to the claimant for examiner review. The system 102 creates appropriate letter from the carrier defined templates upon the processes performed by the examiner. The examiner further reviews the letter to approve. The system 102 prints and mails appropriate letter which enables the examiner to approve. If examiner approves, the claim may be closed. If yes, the examiner may set next recert and action.

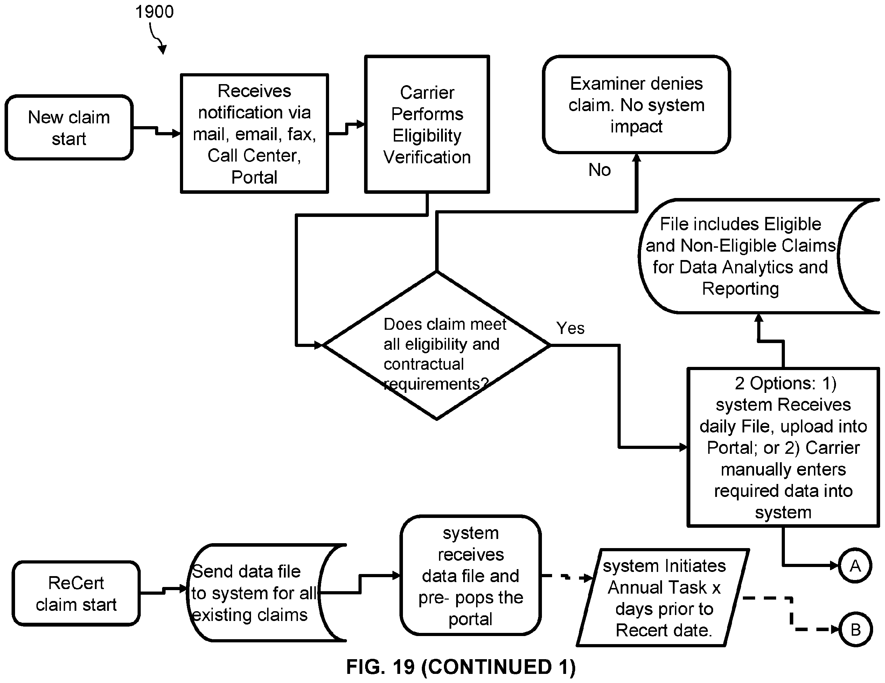

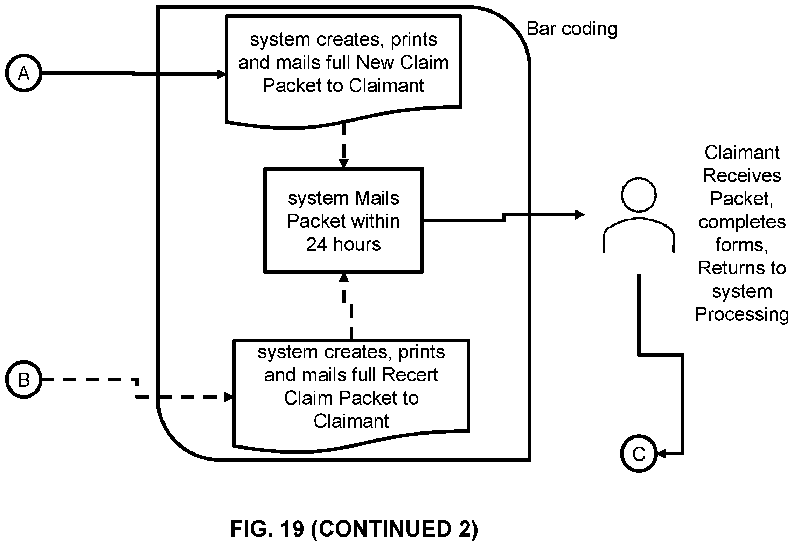

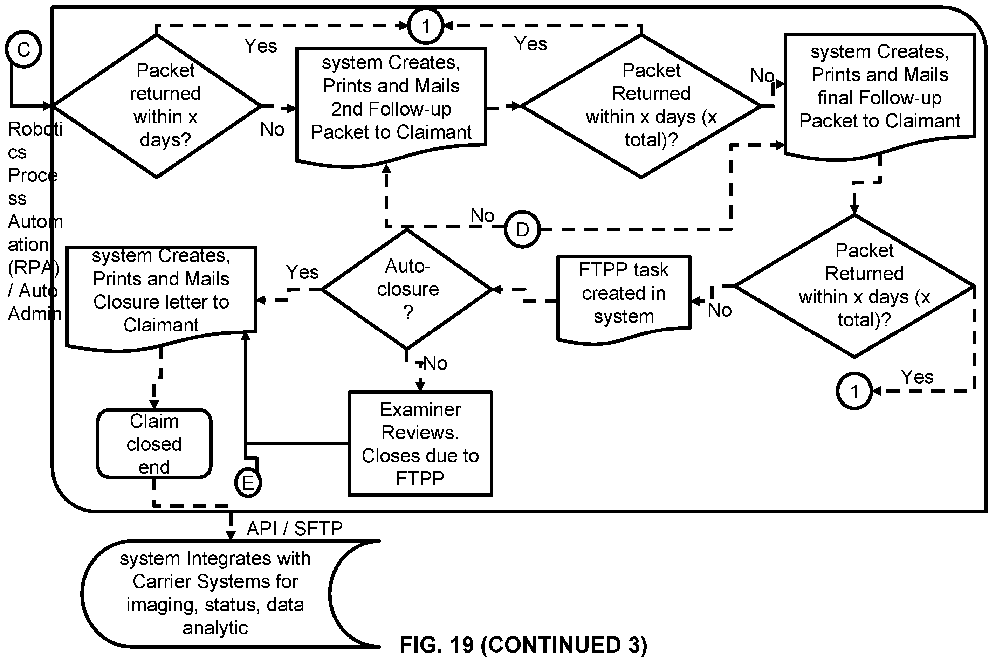

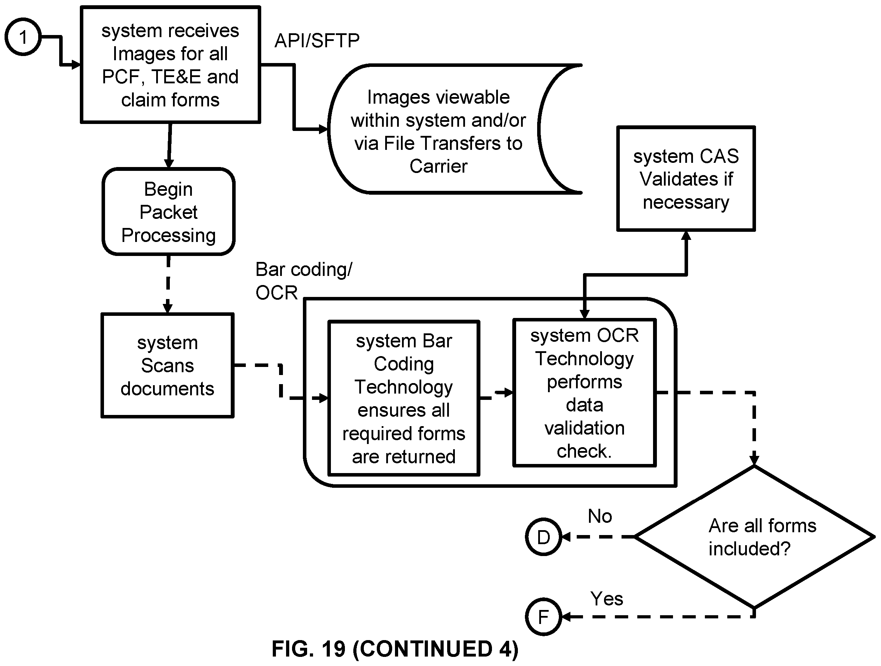

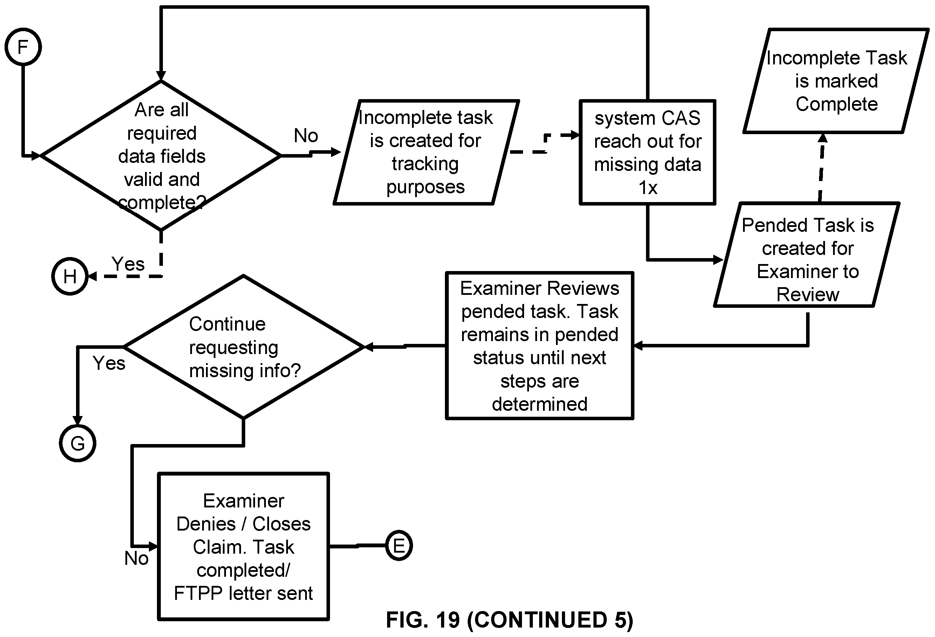

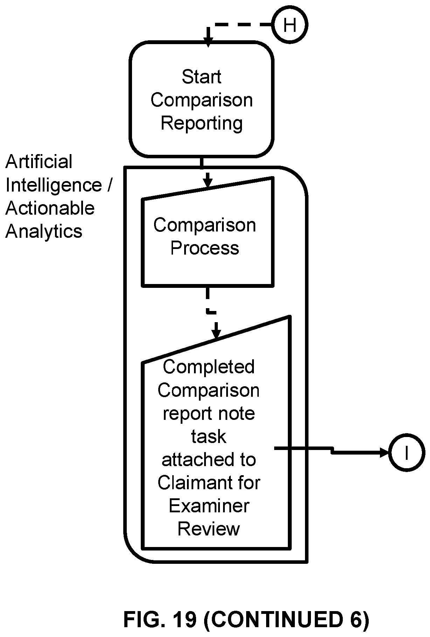

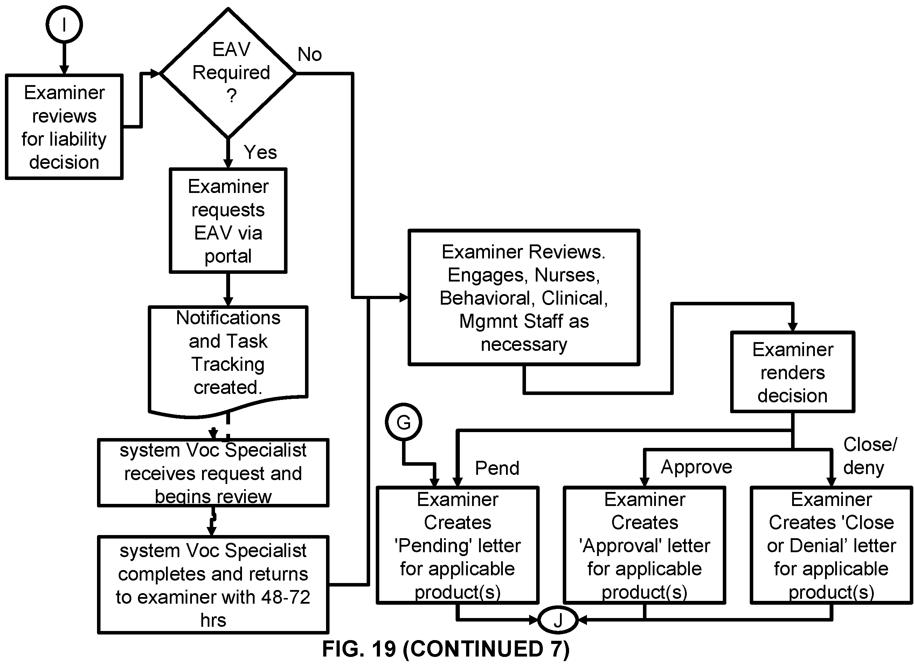

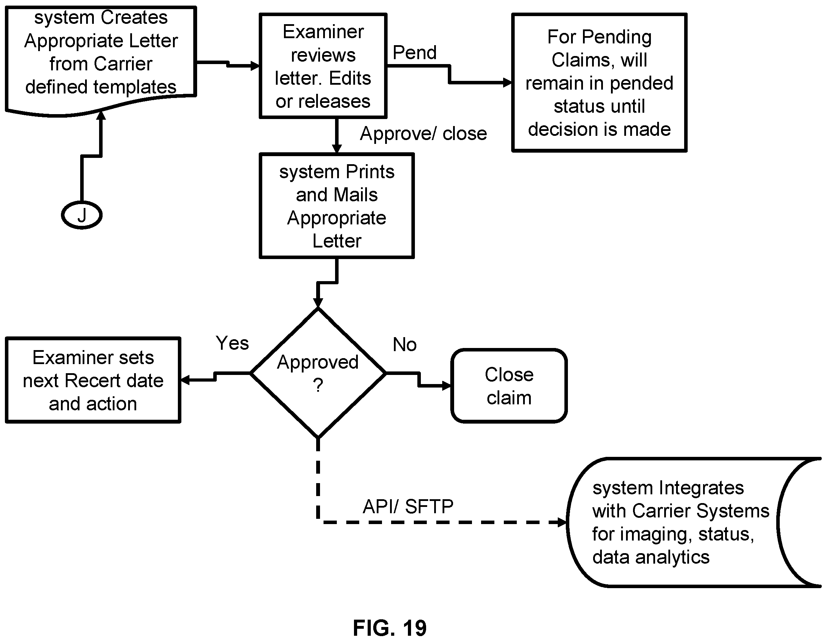

**FIG. 19** illustrates an exemplary flowchart 1900 of the one or more claims (LTD workflow) processed by the computer-implemented system 102, in accordance with an embodiment of the present disclosure.

The system 102 (i.e., the computer-implemented system 102) is configured to create, print and mail full new claim packet to the claimant, using the barcoding system. The system 102 further mails the packet within 24 hours to the claimant. Further, the system 102 creates, prints, and mails full recert claim packet to claimant. The system 102 further initiates annual tasks x days prior to recert date and the system 102 receives data file and pre-props the portal. The system 102 further performs robotics process automation for closing the claims.

The system 102 receives images for all PCF, TE&E and claim forms, and begins packet processing. The system 102 further scans the documents. The system 102 utilizes a bar coding technology ensuring all the required forms are returned. The system 102 utilizes OCR technology to perform validation check to lift and store data. The system 102 further checks whether all the forms are included. If yes, the system 102 checks whether all the required data fields are valid and completed. If yes, the system 102 starts comparison processing and sends the completed comparison report note task attached to the claimant for examiner review. In this artificial intelligence or actionable analytics process, there are multiple pathways the system 102 performs that enables the examiner for liability decision. The system 102 creates appropriate letter from the carrier defined templates upon the processes performed by the examiner. The examiner further reviews the letter to approve. The system 102 prints and mails appropriate letter which enables the examiner to approve. If examiner approves, the claim may be closed. If yes, the examiner may set next recert and action.

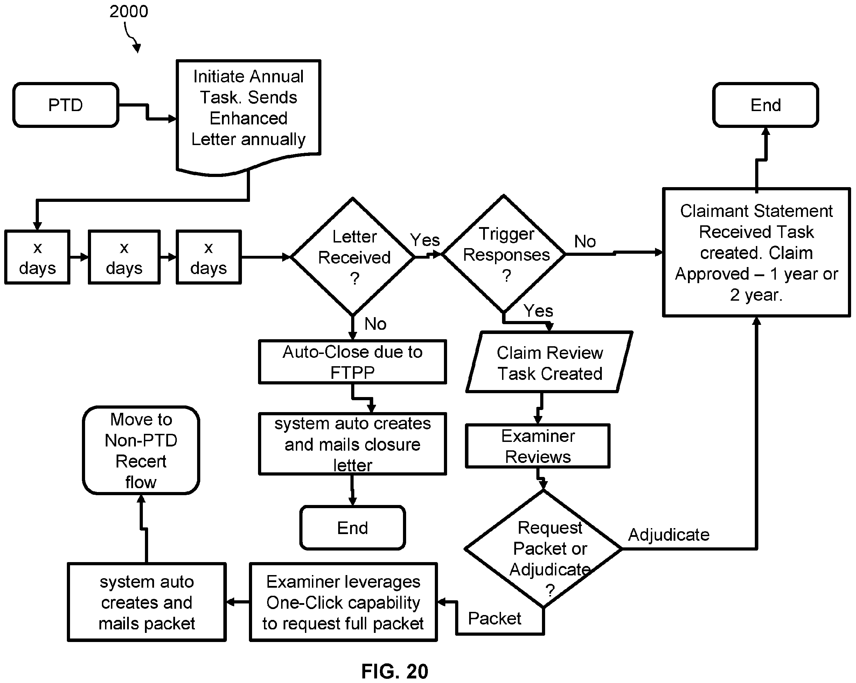

**FIG. 20** illustrates an exemplary flowchart 2000 of a PTD recertification process, in accordance with an embodiment of the present disclosure.

The system 102 initiates annual task and sends enhances letter annually in "x" days. The system 102 checks whether the letter is received. If yes, the system 102 further checks to trigger responses. If the letter is not received, then the system 102 auto-closes due to FTPP. Further, if the response is triggered, the system 102 creates claim review related tasks. If the response is not triggered, the system 102 creates a task related to a claimant statement received task. The system 102 further auto-generates and mails closure letter. The examiner reviews the claim review related tasks. Further, the examiner leverages one-click capability to request full packet. The system 102 auto-generates and mails the packet.

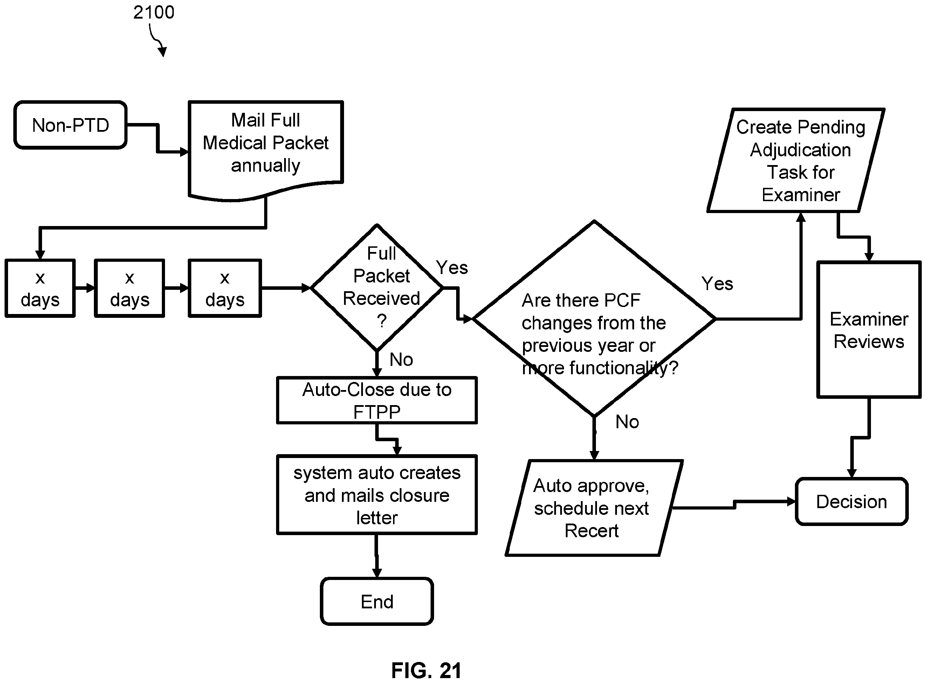

**FIG. 21** illustrates an exemplary flowchart 2100 of a non-PTD recertification process, in accordance with an embodiment of the present disclosure.

The system 102 is configured to mail full medical packet annually in "x" days. The system 102 further checks whether the full packet is received. If not, the system 102 auto-closes due to FTPP. If the full packet is received, then the system 102 checks whether PCF changes from previous year or more functionality. If yes, the system 102 creates pending adjudication task for the examiner. If not, the system 102 provides auto-approval and schedules next recert. Finally, the examiner reviews the pending adjudication for the decision.

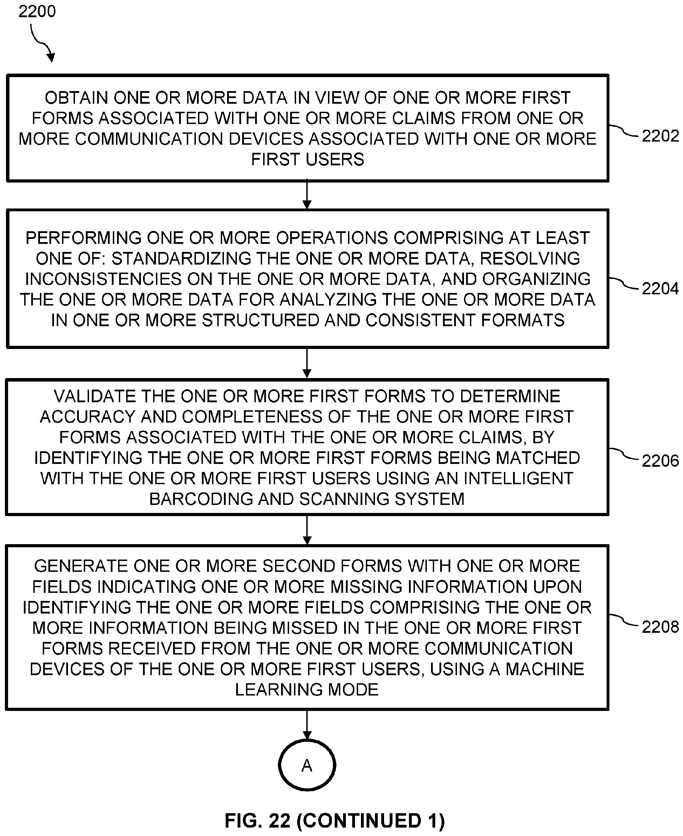

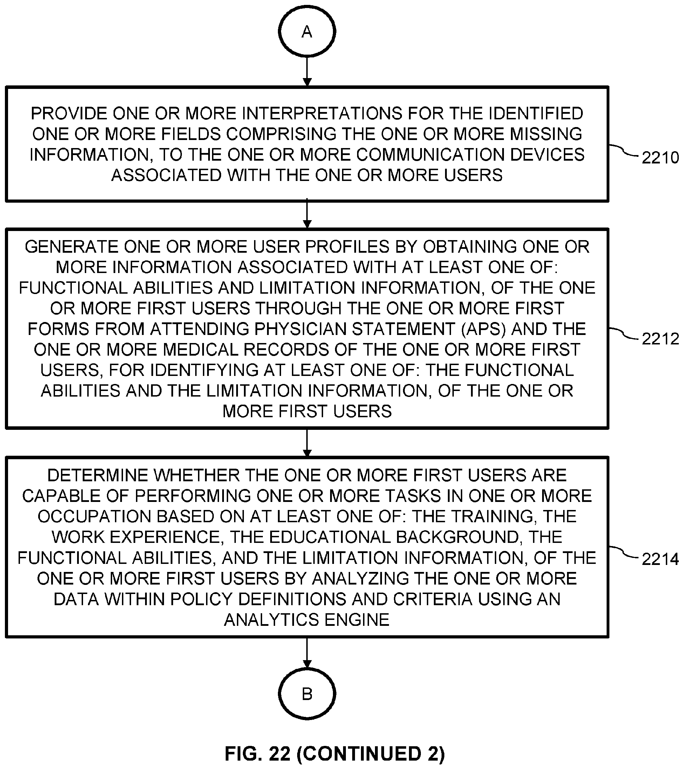

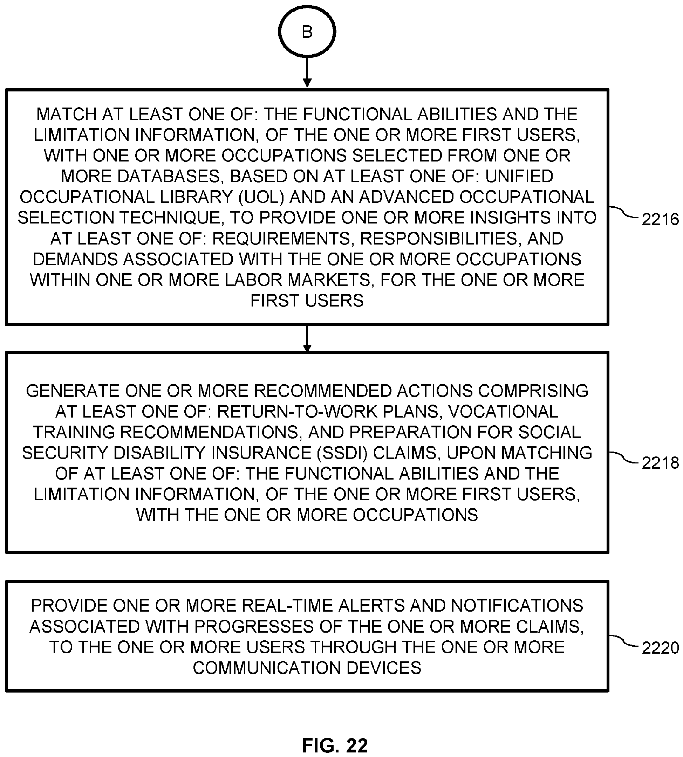

**FIG. 22** is a flow chart depicting a computer-implemented method 2200 for automated claim decision readiness for the one or more claims for the one or more first users, in accordance with an embodiment of the present disclosure.

At step 2202, the one or more data in view of the one or more first forms associated with the one or more claims are obtained from the one or more communication devices 106 associated with the one or more first users. In an embodiment, the one or more data associated with the one or more claims include at least one of: one or more personal information, one or more medical records, educational background, work experience, functional capabilities, physical capabilities form (PCF), training, wage data, last working day, tax records, Social Security Administration (SSA) award, benefit designation forms, and medical authorizations, of the one or more first users.

At step 2204, the one or more operations comprising at least one of: standardizing the one or more data, resolving inconsistencies on the one or more data, and organizing the one or more data for analyzing the one or more data in one or more structured and consistent formats, are performed.

At step 2206, the one or more first forms are validated to determine accuracy and completeness of the one or more first forms associated with the one or more claims, by identifying the one or more first forms being matched with the one or more first users using the intelligent barcoding and scanning system.

At step 2208, the one or more second forms are generated with the one or more fields indicating the one or more missing information upon identifying the one or more fields including the one or more information being missed in the one or more first forms received from the one or more communication devices 106 of the one or more first users, using the machine learning model.

At step 2210, the one or more interpretations for the identified one or more fields comprising the one or more missing information, are provided to the one or more communication devices 106 associated with the one or more users.

At step 2212, the one or more user profiles are generated by obtaining one or more information associated with at least one of: the functional abilities and limitation information, of the one or more first users through the one or more first forms from the attending physician statement (APS) and the one or more medical records of the one or more first users, for identifying at least one of: the functional abilities and the limitation information, of the one or more first users.

**At** step 2214, the system 102 determines whether the one or more first users are capable of performing one or more tasks in one or more occupation based on at least one of: the training, the work experience, the educational background, the functional abilities, and the limitation information, of the one or more first users by analyzing the one or more data within policy definitions and criteria using the analytics engine.

At step 2216, at least one of: the functional abilities and the limitation information, of the one or more first users, is matched with one or more occupations selected from one or more databases, based on at least one of: unified occupational library (UOL) and an advanced occupational selection technique, to provide the one or more insights into at least one of: requirements, responsibilities, and demands associated with the one or more occupations within one or more labor markets, for the one or more first users.

**At** step 2218, the one or more recommended actions comprising at least one of: return-to-work plans, vocational training recommendations, and preparation for Social Security Disability Insurance (SSDI) claims, are generated upon matching of at least one of: the functional abilities and the limitation information, of the one or more first users, with the one or more occupations.

At step 2220, the one or more real-time alerts and notifications associated with progresses of the one or more claims, are provided to the one or more users through the one or more communication devices 106.

Numerous advantages of the present disclosure may be apparent from the discussion above. In accordance with the present disclosure, the computer-implemented system 102 for processing the claim assessment. The system 102 streamlines the intake of various documents related to disability claims, whether submitted digitally or through traditional channels like mail or fax. The system 102 employs advanced document recognition and OCR technology to efficiently process and manage these documents, reducing manual data entry and human error. The system 102 excels in integrating data from multiple sources, such as medical records, employment history, and policy information. This integration enables a comprehensive assessment of claims by providing a holistic view of the situation of the claimants.

The system 102 is configured with advanced algorithms and analytics, the system 102 is able to assess claims in the context of policy definitions and other relevant factors. This analytical capability aids in making accurate claim assessments, ensuring that the right decisions are made. The system 102 provides real-time alerts and notifications to stakeholders, keeping them informed about claim progress and necessary actions. This feature ensures that all relevant parties are up to date, enhancing communication and collaboration.

The system 102 employs robust data encryption and security measures to protect sensitive information, ensuring compliance with data privacy regulations and safeguarding claimant data. The system 102 allows for customization to meet specific organizational needs and adapt to changing requirements. This flexibility ensures that the system 102 is configured to fit different workflows and processes. The system 102 maintains detailed records of all claim-related activities and interactions. This comprehensive record-keeping capability ensures transparency and accountability throughout the claims process. By automating various aspects of claim assessment and decision-making, the system 102 accelerates the claims processing timeline, reducing waiting times for claimants, and improving overall efficiency.

A description of an embodiment with various components in communication with each other does not imply that all such components are required. On the contrary, a variety of optional components are described to illustrate the wide variety of possible embodiments of the invention. When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated steps are set out to explain the exemplary embodiments shown, and it should be anticipated that ongoing technological development will change the manner in which particular functions are performed. These examples are presented herein for purposes of illustration, and not a limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open-ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

## Claims

1. A computer-implemented method for automated claim decision readiness for one or more claims for one or more first users, the computer-implemented method comprising:
obtaining, by one or more hardware processors, one or more data in view of one or more first forms associated with the one or more claims from one or more communication devices associated with one or more first users, wherein the one or more data associated with the one or more claims comprise at least one of: one or more personal information, one or more medical records, educational background, work experience, functional capabilities, physical capabilities form (PCF), training, wage data, last working day, tax records, Social Security Administration (SSA) award, benefit designation forms, and medical authorizations, of the one or more first users;
performing, by the one or more hardware processors, one or more operations comprising at least one of: standardizing the one or more data, resolving inconsistencies on the one or more data, and organizing the one or more data for analyzing the one or more data in one or more structured and consistent formats;
validating, by the one or more hardware processors, the one or more data in view of the one or more first forms to determine accuracy and completeness of the one or more first forms associated with the one or more claims, by identifying the one or more first forms being matched with the one or more first users using an intelligent barcoding and scanning system;
generating, by the one or more hardware processors, one or more second forms with one or more fields indicating one or more missing information upon identifying the one or more fields comprising the one or more information being missed in the one or more first forms received from the one or more communication devices of the one or more first users, using a machine learning model;
providing, by the one or more hardware processors, one or more interpretations for the identified one or more fields comprising the one or more missing information, to the one or more communication devices associated with the one or more users, using the machine learning model;
generating, by the one or more hardware processors, one or more user profiles by obtaining one or more information associated with at least one of: functional abilities and limitation information, of the one or more first users through the one or more first forms from attending physician statement (APS) and the one or more medical records of the one or more first users, for identifying at least one of: the functional abilities and the limitation information, of the one or more first users;
determining, by the one or more hardware processors, whether the one or more first users are capable of performing one or more tasks in one or more occupation based on at least one of: the training, the work experience, the educational background, the functional abilities, and the limitation information, of the one or more first users by analyzing the one or more data within policy definitions and criteria, using an analytics engine;
matching, by the one or more hardware processors, at least one of: the functional abilities and the limitation information, of the one or more first users, with one or more occupations selected from one or more databases, based on at least one of: unified occupational library (UOL) and an advanced occupational selection technique, to provide one or more insights into at least one of: requirements, responsibilities, and demands associated with the one or more occupations within one or more labor markets, for the one or more first users;
generating, by the one or more hardware processors, one or more recommended actions comprising at least one of: return-to-work plans, vocational training recommendations, and preparation for Social Security Disability Insurance (SSDI) claims, upon matching of at least one of: the functional abilities and the limitation information, of the one or more first users, with the one or more occupations; and
providing, by the one or more hardware processors, one or more real-time alerts and notifications associated with progresses of the one or more claims, to the one or more users through the one or more communication devices.

2. The computer-implemented method of claim 1, further comprising:
executing, by the one or more hardware processors, one or more data retention policies indicating lifespan of types of the one or more data, wherein the one or more data retention policies are configured to be compliance with one or more legal and regulatory requirements for retaining the one or more data for required time duration and for deleting when the one or more data are no longer required; and
categorizing and archiving, by the one or more hardware processors, one or more documents associated with the one or more claims, for at least one of: auditing, compliance reporting, and reference processes.

3. The computer-implemented method of claim 1, further comprising:
automatically tracking, by the one or more hardware processors, the one or more first forms with the one or more missing information, until one or more responses received from the one or more first users;
generating, by the one or more hardware processors, one or more inventories upon reviewing the one or more first forms and documents received form the one or more first users; and
comparing, by the one or more hardware processors, the one or more inventories with the one or more user profiles as defined in automated business rules (ABR) tool.

4. The computer-implemented method of claim 3, wherein tracking the one or more first forms with the one or more missing information, comprises:
determining, by the one or more hardware processors, whether the one or more missing information is previously requested when the one or more information is missed from the one or more user profiles; and
determining, by the one or more hardware processors, whether a tracking request is due for the one or more missing information to initiate the tracking request when the one or more missing information is previously requested.

5. The computer-implemented method of claim 1, wherein matching of at least one of: the functional abilities and the limitation information, of the one or more first users, with the one or more occupations to provide the one or more insights associated with the one or more occupations for the one or more first users, is based on one or more factors comprising at least one of: physical abilities, cognitive skills, vocational interests, and nature of the disability, of the one or more first users.

6. The computer-implemented method of claim 5, further comprising selecting, by the one or more hardware processors, the one or more occupations based on one or more locations of the one or more first users, wherein selecting the one or more occupations based on one or more locations of the one or more first users comprises:
determining, by the one or more hardware processors, one or more geographic vicinities of the one or more first users;
selecting, by the or more hardware processors, the one or more occupations based on the determined one or more geographic vicinities of the one or more first users, with information associated with one or more local labor markets; and
determining, by the one or more hardware processors, whether the selected one or more occupations are optimized for the one or more locations of the one or more first users.

7. The computer-implemented method of claim 1, wherein validating the one or more first forms to determine the accuracy and completeness of the one or more first forms associated with the one or more claims, comprises:
identifying, by the one or more hardware processors, the one or more first forms based on one or more information in the intelligent barcoding and scanning system;
upon identifying the one or more first forms, determining, by the one or more hardware processors, one or more placements of the one or more fields on the one or more first forms for matching the one or more first forms to the one or more first users; and
identifying, by the one or more hardware processors, the one or more fields on the one or more first forms being marked as important by one or more second users, for determining whether the one or more data are legible and comprising one or more values in each field, to adjudicate the one or more claims.

8. A computer-implemented system for automated claim decision readiness for one or more claims for one or more first users, the computer-implemented system comprising:
one or more hardware processors;
a memory unit coupled to the one or more hardware processors, wherein the memory unit comprises a plurality of subsystems in form of programmable instructions executable by the one or more hardware processors, and wherein the plurality of subsystems comprises:
a data obtaining subsystem configured to obtain one or more data in view of one or more first forms associated with the one or more claims from one or more communication devices associated with one or more first users, wherein the one or more data associated with the one or more claims comprise at least one of: one or more personal information, one or more medical records, educational background, work experience, functional capabilities, physical capabilities form (PCF), training, wage data, last working day, tax records, Social Security Administration (SSA) award, benefit designation forms, and medical authorizations, of the one or more first users;
a data integration subsystem configured to:
perform one or more operations comprising at least one of: standardizing the one or more data, resolving inconsistencies on the one or more data, and organizing the one or more data for analyzing the one or more data in one or more structured and consistent formats;
validate the one or more first forms to determine accuracy and completeness of the one or more data in view of the one or more first forms associated with the one or more claims, by identifying the one or more first forms being matched with the one or more first users using an intelligent barcoding and scanning system;
generate one or more second forms with one or more fields indicating one or more missing information upon identifying the one or more fields comprising the one or more information being missed in the one or more first forms received from the one or more communication devices of the one or more first users, using a machine learning model; and
provide one or more interpretations for the identified one or more fields comprising the one or more missing information, to the one or more communication devices associated with the one or more users, using the machine learning model;
a user profile generation subsystem configured to generate one or more user profiles by obtaining one or more information associated with at least one of: functional abilities and limitation information, of the one or more first users through the one or more first forms from attending physician statement (APS) and the one or more medical records of the one or more first users, for identifying at least one of: the functional abilities and the limitation information, of the one or more first users;
a claim assessment subsystem configured to determine whether the one or more first users are capable of performing one or more tasks in one or more occupation based on at least one of: the training, the work experience, the educational background, the functional abilities, and the limitation information, of the one or more first users by analyzing the one or more data within policy definitions and criteria using an analytics engine;
an occupational matching subsystem configured to match at least one of: the functional abilities and the limitation information, of the one or more first users, with one or more occupations selected from one or more databases, based on at least one of: unified occupational library (UOL) and an advanced occupational selection technique, to provide one or more insights into at least one of: requirements, responsibilities, and demands associated with the one or more occupations within one or more labor markets, for the one or more first users;
a claim recommendation subsystem configured to generate one or more recommended actions comprising at least one of: return-to-work plans, vocational training recommendations, and preparation for Social Security Disability Insurance (SSDI) claims, upon matching of at least one of: the functional abilities and the limitation information, of the one or more first users, with the one or more occupations; and
an alert providing subsystem configured to provide one or more real-time alerts and notifications associated with progresses of the one or more claims, to the one or more users through the one or more communication devices.

9. The computer-implemented system of claim 8, further comprising a record-keeping subsystem configured to:
execute one or more data retention policies indicating lifespan of types of the one or more data, wherein the one or more data retention policies are configured to be compliance with one or more legal and regulatory requirements for retaining the one or more data for required time duration and for deleting when the one or more data are no longer required; and
categorize and archive, by the one or more hardware processors, one or more documents associated with the one or more claims, for at least one of: auditing, compliance reporting, and reference processes.

10. The computer-implemented system of claim 8, further comprising an automated cadence subsystem configured to:
automatically track the one or more first forms with the one or more missing information, until one or more responses received from the one or more first users;
generate one or more inventories upon reviewing the one or more first forms and documents received form the one or more first users; and
compare the one or more inventories with the one or more user profiles as defined in automated business rules (ABR) tool.

11. The computer-implemented system of claim 10, wherein in tracking the one or more first forms with the one or more missing information, the automated cadence subsystem is configured to:
determine whether the one or more missing information is previously requested when the one or more information is missed from the one or more user profiles; and
determine whether a tracking request is due for the one or more missing information to initiate the tracking request when the one or more missing information is previously requested.

12. The computer-implemented system of claim 11, wherein the occupational matching subsystem is configured to match at least one of: the functional abilities and the limitation information, of the one or more first users, with the one or more occupations to provide the one or more insights associated with the one or more occupations for the one or more first users, is based on one or more factors comprising at least one of: physical abilities, cognitive skills, vocational interests, and nature of the disability, of the one or more first users.

13. The computer-implemented system of claim 12, wherein the occupational matching subsystem is further configured to select the one or more occupations based on one or more locations of the one or more first users, and wherein in selecting the one or more occupations based on one or more locations of the one or more first users, the occupational matching subsystem is configured to:
determine one or more geographic vicinities of the one or more first users;
select the one or more occupations based on the determined one or more geographic vicinities of the one or more first users, with information associated with one or more local labor markets; and
determine whether the selected one or more occupations are optimized for the one or more locations of the one or more first users.

14. The computer-implemented system of claim 11, wherein in validating the one or more first forms to determine the accuracy and completeness of the one or more first forms associated with the one or more claims, the data integration subsystem is configured to:
identify the one or more first forms based on one or more information in the intelligent barcoding and scanning system;
upon identifying the one or more first forms, determine one or more placements of the one or more fields on the one or more first forms for matching the one or more first forms to the one or more first users; and
identify the one or more fields on the one or more first forms being marked as important by one or more second users, for determining whether the one or more data are legible and comprising one or more values in each field, to adjudicate the one or more claims.

15. A non-transitory computer-readable storage medium having instructions stored therein that when executed by one or more hardware processors, cause the one or more hardware processors to execute operations of:
obtaining one or more data in view of one or more first forms associated with the one or more claims from one or more communication devices associated with one or more first users, wherein the one or more data associated with the one or more claims comprise at least one of: one or more personal information, one or more medical records, educational background, work experience, functional capabilities, physical capabilities form (PCF), training, wage data, last working day, tax records, Social Security Administration (SSA) award, benefit designation forms, and medical authorizations, of the one or more first users;
performing one or more operations comprising at least one of: standardizing the one or more data, resolving inconsistencies on the one or more data, and organizing the one or more data for analyzing the one or more data in one or more structured and consistent formats;
validating the one or more first forms to determine accuracy and completeness of the one or more data in view of the one or more first forms associated with the one or more claims, by identifying the one or more first forms being matched with the one or more first users using an intelligent barcoding and scanning system;
generating one or more second forms with one or more fields indicating one or more missing information upon identifying the one or more fields comprising the one or more information being missed in the one or more first forms received from the one or more communication devices of the one or more first users, using a machine learning model;
providing one or more interpretations for the identified one or more fields comprising the one or more missing information, to the one or more communication devices associated with the one or more users using the machine learning model;
generating one or more user profiles by obtaining one or more information associated with at least one of: functional abilities and limitation information, of the one or more first users through the one or more first forms from attending physician statement (APS) and the one or more medical records of the one or more first users, for identifying at least one of: the functional abilities and the limitation information, of the one or more first users;
determining whether the one or more first users are capable of performing one or more tasks in one or more occupation based on at least one of: the training, the work experience, the educational background, the functional abilities, and the limitation information, of the one or more first users by analyzing the one or more data within policy definitions and criteria using an analytics engine;
matching at least one of: the functional abilities and the limitation information, of the one or more first users, with one or more occupations selected from one or more databases, based on at least one of: unified occupational library (UOL) and an advanced occupational selection technique, to provide one or more insights into at least one of: requirements, responsibilities, and demands associated with the one or more occupations within one or more labor markets, for the one or more first users;
generating one or more recommended actions comprising at least one of: return-to-work plans, vocational training recommendations, and preparation for Social Security Disability Insurance (SSDI) claims, upon matching of at least one of: the functional abilities and the limitation information, of the one or more first users, with the one or more occupations; and
providing one or more real-time alerts and notifications associated with progresses of the one or more claims, to the one or more users through the one or more communication devices.

16. The non-transitory computer-readable storage medium of claim 15, further comprising:
executing one or more data retention policies indicating lifespan of types of the one or more data, wherein the one or more data retention policies are configured to be compliance with one or more legal and regulatory requirements for retaining the one or more data for required time duration and for deleting when the one or more data are no longer required; and
categorizing and archiving one or more documents associated with the one or more claims, for at least one of: auditing, compliance reporting, and reference processes.

17. The non-transitory computer-readable storage medium of claim 15, further comprising:
automatically tracking the one or more first forms with the one or more missing information, until one or more responses received from the one or more first users;
generating one or more inventories upon reviewing the one or more first forms and documents received form the one or more first users; and
comparing the one or more inventories with the one or more user profiles as defined in automated business rules (ABR) tool.

18. The non-transitory computer-readable storage medium of claim 17, wherein tracking the one or more first forms with the one or more missing information, comprises:
determining whether the one or more missing information is previously requested when the one or more information is missed from the one or more user profiles; and
determining whether a tracking request is due for the one or more missing information to initiate the tracking request when the one or more missing information is previously requested.

19. The non-transitory computer-readable storage medium of claim 15, wherein matching of at least one of: the functional abilities and the limitation information, of the one or more first users, with the one or more occupations to provide the one or more insights associated with the one or more occupations for the one or more first users, is based on one or more factors comprising at least one of: physical abilities, cognitive skills, vocational interests, and nature of the disability, of the one or more first users.

20. The non-transitory computer-readable storage medium of claim 19, further comprising selecting the one or more occupations based on one or more locations of the one or more first users, wherein selecting the one or more occupations based on one or more locations of the one or more first users comprises:
determining one or more geographic vicinities of the one or more first users;
selecting the one or more occupations based on the determined one or more geographic vicinities of the one or more first users, with information associated with one or more local labor markets; and
determining whether the selected one or more occupations are optimized for the one or more locations of the one or more first users.
